# EUROPEAN PATENT APPLICATION

(11) **EP 1 059 593 A2**
(43) Date of publication of application: **13.12.2000**
(21) Application number: 00201980.0
(22) Date of filing: 06.06.2000
(51) Int. Cl.: G06F 17/50

(54) **Deterministic level model and method**

(30) Priority: 07.06.1999 EP 99870114
(71) Applicant: Easics N.V., 3001 Leuven (BE)
(72) Inventor: Vandeweerd, Ivo, 3500 Hasselt (BE); Dumon, Wim, 8310 Brugge (BE); Deforche, Koen, 8800 Roeselare (BE)
(74) Representative: Bird, William Edward

(57) **Abstract**

The invention relates to a deterministic system level model executed on a computer simulation engine. The system model comprises a plurality of concurrent processes at least some of which communicate with each other and the system model is described in an object oriented simulation language. Each process is a primitive process or a further system level model which converts an input value into an output value. The simulation engine executes in one cycle the behavior of the processes by calculating new temporary output values of the processes and/or temporary internal state values of the processes based on current input values and/or internal state values of the processes . The processes are executed until the temporary output process values and/or temporary internal state values are stable to within a predetermined tolerance. Then only the current process input values and current internal state values are updated with the stable temporary output values and/or internal state values.

## Description

The present invention relates to the simulation of physical states and processes particularly by means of a computer system which contains at least one digital system.

### TECHNICAL BACKGROUND

The bottleneck in the development of complex systems is verification. At each step in the development, the output of a design step must be carefully verified before proceeding to the next step. State-of-the-art verification technology is based on simulation. This implies that the correctness of a design step is determined by comparing simulation results to expected results. High quality verification requires extensive simulation that covers not only all possible combinations of valid inputs, but also the exceptional cases. This makes the generation of the expected results far from trivial (as illustrated by the growing importance of testbench development). In current design practices, there is no formal way of generating expected results. Each designer creates a personal set of relevant and correct expected results. This approach is a source of errors and an unnecessary duplication of effort.

It is considered that functional bugs can be found in 82% of chip designs that require one or more additional spins of silicon (Ron Collett, President of Collett International). Current state-of-the-art verification technology cannot guarantee 100% correctness. Bugs go unnoticed during the development of complex systems. With current synthesis-based design technology, this unavoidably leads to design iterations. A design iteration is expensive in terms of time to market (typically several months), in terms of cost and in terms of manpower. Designers are a scarce resource, and having these resources tied up in design iterations seriously limits the capacity for product innovation. Limiting the number of design iterations is therefore extremely important.

References useful in understanding the present invention:
"Learning Python", Mark Lutz and David Ascher, O'Reilly & associates, 1999.
"VSI System Level Design Model Taxonomy", VSI Reference Document, Version 1.0, 25 October 1998.
"Programming in C++", S.C. Dewhurst & K.T. Stark, Prentice Hall, 1989.
"Learning GNU Emacs", D. Cameron, B. Rosenblatt & E. Raymond, O'Reilly & associates, 1996.
"Silicon Architectures for Mobile Information Systems", J. Rabaey in Synopsys compiler, April 1999, p. 1.
"Synopsys documentation"
"Practical C++ Programming", Steve Oualline, O'Reilly & associates, 1997. FAQ

### SUMMARY OF THE INVENTION

The present invention provides a deterministic system level model executed on a computer simulation engine, the system model comprising a plurality of concurrent processes at least some of which communicate with each other, the system model being described in an object oriented simulation language, each process being a primitive process or a further system level model which converts an input value into an output value, the simulation engine executing in one cycle the behavior of the processes by calculating new temporary output values of the processes and/or temporary internal state values of the processes based on current input values and/or internal state values of the processes; the processes being executed until the temporary output process values and/or temporary internal state values are stable to within a predetermined tolerance; and only then updating the current process input values and current internal state values with the stable temporary output values and/or internal state values. The system model is a model of physical processes and/or of physical states. Determinism refers to the property that implementations of the simulation engine always produce the same results when simulating a valid executable system specification. The process of generating the updates for the current input values and/or internal state values of the processes is described in the following as delta cycle convergence. A device for carrying out delta cycle convergence is called a delta-cycle engine. The processes communicate through signals and/or queues and/or containers. A delta cycle comprises two steps, an evaluation step in which all process are evaluated and an updating step, in which all signals, queues and containers are updated. An instance of a concurrent process is a module.

Signals are delta-cycle aware communication channels to interconnect modules through ports. A signal is an object with two values, a current value and a new value (i.e. after the next evaluation step).

A queue is, like a signal, a safe (= deterministic) means of communication between two software component modules. A queue behaves like a FIFO. It is possible to push elements on the queue at one side and pop elements from the queue on the other side. Furthermore, methods are preferably provided to get the size of the queue (i.e. how many elements can be in the queue), to get the filling of the queue (i.e. how many elements are now in the queue), to check whether a queue is empty, to check for underflow or overflow.

Like queues, containers provide a safe (= deterministic) means of communication between two modules. Containers are like shared memory: one module dumps data in the container and signals the other party that the container contains data. Then the other party performs some operations on the data and when it's done, it signals the first party. The access to the data in the container is protected by a lock. The module that has the lock can read/write the container data and pass the lock to the other side.

An event occurs if a new value and a current value of a signal differ, or if the state of a queue changes or if the lock of a container is transferred. A delta-cycle engine will continue performing delta cycles until no more events occur.

The present invention also provides a deterministic system level modeling method for execution on a computer simulation engine, the system model comprising a plurality of concurrent processes, at least some of which communicate with each other, the system model being described in an object oriented simulation language, each process being a primitive process or a further system level model which converts an input value into an output value, the simulation engine executing in one cycle the behavior of the processes by calculating new temporary output values of the processes and/or temporary internal state values of the processes based on current input values and/or internal state values of the processes; the processes being executed until the temporary output process values and/or temporary internal state values are stable to within a predetermined tolerance; and only then updating the current process input values and current internal state values with the stable temporary output values and/or internal state values. The system model is a model of a physical process and the method may include the step of controlling the physical process based on the results of the method.

The present invention may provide a computer program product directly loadable into the internal memory of a digital computer, comprising software code portions for performing the steps of the above method when said product is run on a computer.

The present invention also may provide a computer program product stored on a computer usable medium, comprising: computer readable program means for causing a computer to control execution of the simulation model in accordance with the present invention.

The present invention also includes the inputting of a system specification at a near terminal and transmitting the specification to a remote processing engine, e.g. via the Internet, a LAN or a WAN, on which the system model of the present invention is running. The method includes receiving at the near terminal any output of the simulated system running on the remote processing engine.

The present invention includes a co-simulation method and a co-simulation engine for co-simulation of a physical system by co-simulation using the system level model of the present invention and a clock cycle accurate simulation of a processing engine.

The present invention includes a co-simulation method and a co-simulation engine for co-simulation of a physical system by co-simulation using the system level model of the present invention and a simulation using a hardware description language. The language may be VHDL or Verilog for instance.

The present invention will now be described with reference to the following drawings.

### BRIEF DESCRIPTION OF THE DRAWINGS

Fig. 1 is a schematic representation of temporal, data precision and functional abstraction levels in system level modeling.

Figs. 2A and B iare schematic flow diagrams of system level modeling in accordance with the present invention in a design flow for an ASIC or an embedded software product.

Fig. 3 is an example of communicating concurrent processes.

Fig. 4 is a schematic representation of the system model in accordance with an embodiment of the present invention.

Fig. 5 is an example of a signal object in accordance with an embodiment of the present invention.

Fig. 6 is an example of a queue object in accordance with an embodiment of the present invention.

Figs. 7 and 8 show examples of ways queues can be used in accordance with embodiments of the present invention.

Fig. 9 is an example of a container object in accordance with an embodiment of the present invention.

Fig. 10 is representation of a co-simulation environment between the system model Csim of the present invention and a hardware description language such as VHDL.

Fig. 11 is one embodiment of co-simulation between the system model Csim of the present invention and a hardware description language.

Fig. 12 is another embodiment of co-simulation between the system model Csim of the present invention and a hardware description language.

Figs. 13 and 14 represent to embodiments of the present invention of co-simulation between the system model Csim of the present invention and a hardware description language involving ports.

Fig. 15 is an example of a modem to which the present invention may be applied.

### DESCRIPTION OF THE ILLUSTRATIVE EMBODIMENTS

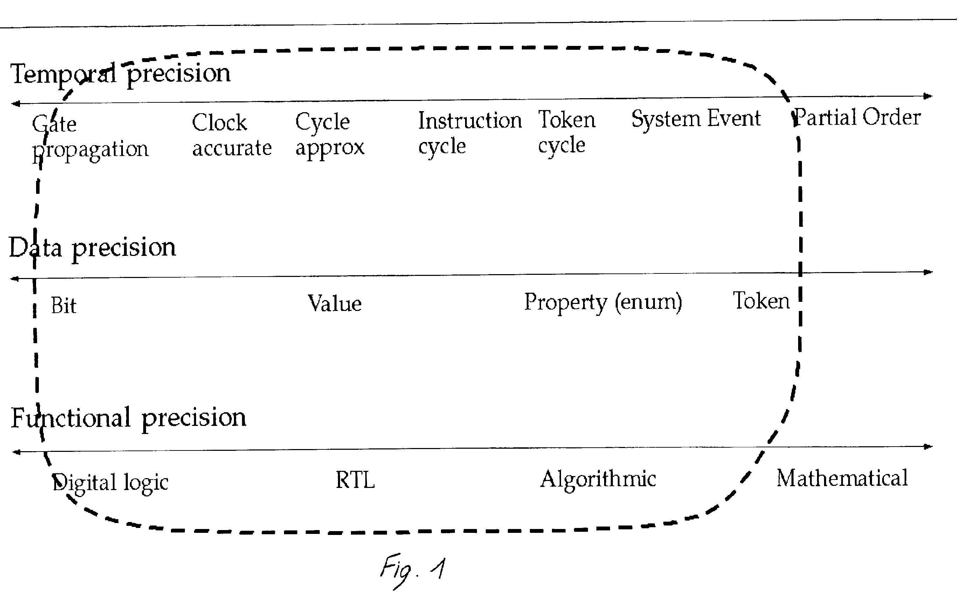

The present application relates to the simulation of physical systems by means of System Level Design. The final product of the complete simulation process will be the tools which can be used to create a real device, whether it be an ASIC (Application Specific Integrated Circuit) or an embedded system. The System Level Design development working group of the VSIA (Virtual Socket Interface Alliance) has developed a systematic basis for defining model types. The terminology used in this application is intended to conform with these definitions. There are several types of system models: Executable specifications, Mathematical-Equation models and Algorithm models. In the context of this application, only the executable specification system models are considered. When referring to a System Level Model an executable specification is meant, as defined by the VSIA: "An executable specification is a behavioral description of a component or system object that reflects the particular function and timing of the intended design as seen from the object's interface when executed in a computer simulation. Executable specifications describe the behavior at the highest level of abstraction that still provides the proper data transformations (correct data in yields correct data out; DEFINED bad data in has the SPECIFIED output results)." An executable specification does not contain any implementation information. The key issue in this definition is the "at the highest level of abstraction". The level of abstraction, or the resolution of detail, can be situated along three orthogonal axes:
- Temporal precision
- Data Value precision
- Functional precision
as shown schematically in Fig. 1. The highest level of abstraction of a system depends on the nature of the system. For example, the temporal precision of a clock generator system is probably nsec, while in an ADSL modem precision at the system event level seems more appropriate. Moreover, a System Level Model will most likely contain models of subsystems. Each subsystem is best described at its most convenient level of abstraction. For example, the system's interface is probably most conveniently described at the RTL (register transfer) level, while its core DSP (digital signal processing) functionality requires algorithmic descriptions. A direct consequence of this definition is that a simulation environment for System Level Modeling must be able to capture and execute descriptions that span a wide range of abstraction levels in the temporal, data value and functional precision axes. The simulation environment of the present application spans the shaded area shown in Fig. 1.

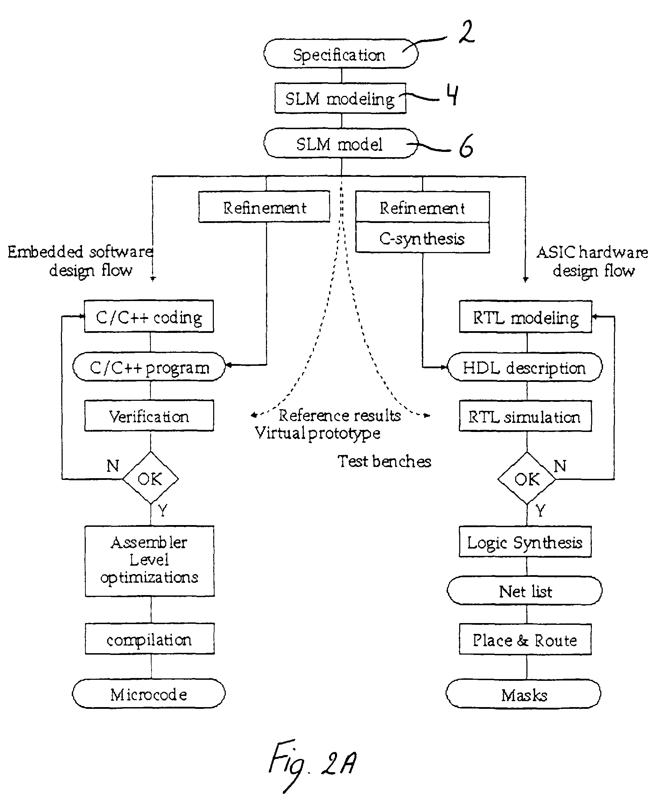

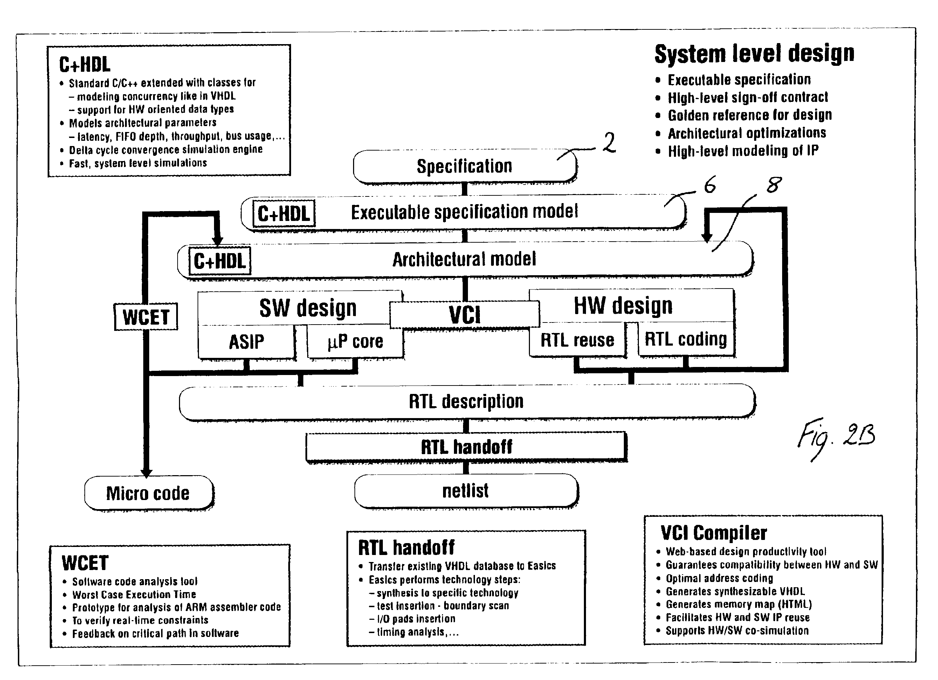

System level modeling is a natural extension of the current ASIC hardware and Embedded software design flows as shown schematically in Figs. 2A and B. The embedded software and ASIC hardware design flows start from a paper document 2, describing the specification of the system. By means of System Level Modeling 4, these paper documents are replaced by unambiguous, executable specifications in a System Level Modeling (SLM) model 6. Also an archtectural model 8 may be produced in which certain aspects of scheduling may be explorted. SLM is an add-on to the existing design flows and does not require the designer to change the existing fine-tuned design flow. SLM in accordance with the present invention makes the existing design flow go much faster:
- SLM simulation provides reference results that accelerate the verification process in the hardware and software design flows.
- SLM provides a virtual prototype of the hardware that can be used to verify the software.
- SLM provides testbenches that execute test scenarios to verify the hardware. Moreover, the SLM code can be used to speed up the coding of the hardware and software, through a refinement process, optionally followed by an automatic translation (e.g. by means of C-based synthesis tools).

System Level Modeling provides the following advantages:
- It reduces the duration of the first design iteration.
- It reduces the number of design iterations.

A System Level Model provides consistent reference files for verification during the various design steps, simplifying the verification effort in each of the individual steps. Even with the additional effort of creating the System Level Model, the total development effort is reduced, because of the reduced verification effort in each of the design steps.

Complex systems have a large software content, and developing this software consumes a large part of the total product development. Unfortunately, software development often needs to be delayed until hardware is available. System Level Models provide a virtual prototype of the hardware that permits early start of software development and effectively shortens the time-critical path of the development plan. This has a dramatic impact on the Time to Market of a product.

System Level Modeling contributes in various ways to the reduction of the number of design iterations:
- System Level Models increase the quality of the verification. For example, effective HW/SW co-verification is impractical with lower level models, such as an ISS (instruction set simulator) coupled to an RTL simulator. Only a virtual prototype at the System Level provides the simulation speed that allows sufficient simulation coverage.
- System Level simulations can detect system flaws early in the design cycle. Unexpected system behavior can be detected before the RTL coding is completed. This can avoid time-consuming engineering changes late in the design cycle.
- System Level sign-off with a golden reference model avoids misinterpretation of the specifications. A System Level Model, being an executable specification, plays an important role in a high level signoff, because it unambiguously specifies the behavior of the system. This type of signoff is probably more worthwhile than RTL signoff, which faces serious technical challenges.

Besides its advantages with respect to Time to Market, System Level Modeling offers unique opportunities in the domain of Intellectual Property:
- IP and design reuse are based on the fact that designs are developed once and reused many times. A high reuse factor requires a description of the design at an implementation-independent level, because the progress in VLSI technology enforces architectural changes at a high pace. The system level is the only appropriate level for capturing IP. Moreover, the SLM uses object-oriented programming techniques, which have excellent reuse properties thanks to object encapsulation and inheritance.
- A System Level Model can be used as an effective marketing tool: A System Level Model can be delivered to a potential customer long before the actual system can be delivered. The customer could start developing applications (software) before the actual hardware is delivered. This can represent a major time-to-market advantage for that customer. A SLM creates a competitive advantage for the customer and therefore boosts the sales of the system.
- A System Level Model can be used as a prepurchase evaluation model of an IP component.
- A System Level Model can be a tool to obtain customer feedback before your actual system is fabricated.

Virtually all applications in the signal-processing, multimedia or communications world have gone through a similar cyclic process: (1) first production implementation in hardware; (2) gradual migration into software; (3) once a full software implementation is possible, the product typically becomes a commodity product and quickly becomes obsolete as newer generations with a higher complexity emerge. A System Level Model, developed in the first phase, can be used as a starting point for migration to software implementations in the subsequent phases.

Because System Level modeling is defined as the creation of an executable specification, each environment for System Level modeling in accordance with the present invention provides at least:
- A language in which the designer can describe the specification
- A simulation engine that can execute the description
The challenge of a System Level modeling environment is to provide:
- A language that spans the wide range of abstraction levels in a user-friendly way
- A simulation engine that supports a wide range of computational models. The main reason is that a system may contain several components that are very different in nature. For example, a system may contain interface logic that is most conveniently described at the RTL level of abstraction, a DSP part that is most conveniently described using a Data Flow Graph model, and a control part for which the designer would like to use a Petri net representation or concurrent FSMs. This observation has led many experts to believe that a System Level modeling environment should support various languages, each tuned for a specific computational model. The present invention provides a single language and a single simulation engine, and a wide range of abstraction levels and computational models can be supported in a clear and simple way.

What sets a System Level modeling environment apart from a general purpose programming environment is concurrency. A system contains a high degree of concurrency, much more than typically found in general purpose software applications. Dealing efficiently and in a user-friendly way with massive concurrency is important for a System Level modeling environment. Other solutions are required than the ones typically encountered in programming environments.

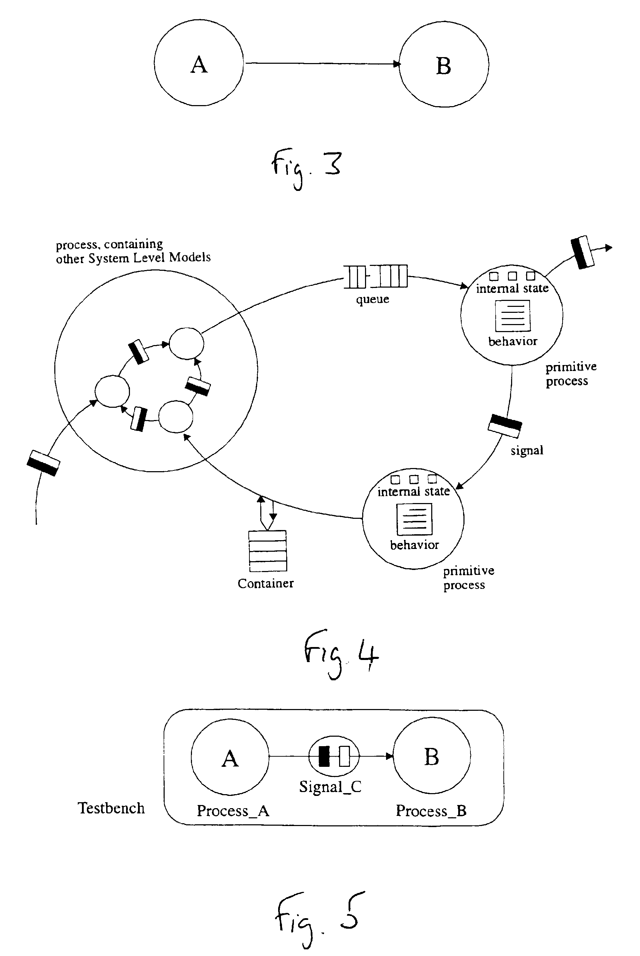

An important concept in System Level modeling is determinism. Determinism refers to the property that correct implementations of the simulation engine (at any stage of development) will always produce the same results when simulating a valid executable specification. Although this may seem trivial, many environments (e.g. Verilog) do not have this property. For example, in the simple system shown in Fig. 3, there are 2 concurrent processes that communicate. Process A generates data that is consumed by Process B. A trivial simulation engine may choose to execute first Process A, followed by Process B. However, another engine might choose another order. Without precautions in the communication, this may lead to different results. All these results are probably valid, which makes it difficult for the designer to distinguish good from bad descriptions. Or, even worse, if there is a mismatch between the results of the system model and the implementation, it is difficult for the designer to determine whether the cause is an implementation error or the lack of determinism. A lack of determinism makes a System Level Model useless as a reference model, since the refinement of one of the processes into a more detailed set of concurrent subprocesses might alter the order of process execution and therefore alter the results. It then becomes impossible to verify the design refinement by simply comparing its simulation results to the reference results. To support design refinement and the use of System Level models as reference models, the present invention has the property of determinism.

Complex systems contain many concurrent processes with complex interactions between them. A System Level Model that captures the behavior of such a system will therefore contain concurrency. When executing a System Level Model on a general purpose computer, which is basically a von Neumann machine that executes a single thread of instructions sequentially, the concurrency of the System Model must be translated into a single thread of execution. That is the purpose of the simulation engine. In that respect, the simulation engine can be considered an operating system that is optimized for massive concurrency. In accordance with an embodiment of the present invention a simulation engine is provided which is a discrete event simulation engine that uses a mechanism for handling concurrency that is similar to the mechanism employed in VHDL.

Fig. 4 is a schematic representation of a simulation model in accordance with an embodiment of the present invention. The simulation model may be implemented on a suitable workstation such as a UNIX workstation. This will generally be a computer with a processing engine and memory as well as output/input devices. The present invention includes inputting a system specification at a near terminal and transmitting this specification to a remote terminal, e.g. via a LAN, a WAN or the Internet, where a processing engine is running the system model in accordance with the present invention.

The present invention makes use of a System Level Model described as a set of concurrent processes that communicate through signals, queues and/or containers. A process can contain other System Level Models or is a primitive process. The behavior of a primitive process is described as a single thread of statements. Executing the behavior of a primitive process is calculating the new output and internal state values, based on the current value of the inputs and the internal state. This process is referred to as Evaluation.

A Signal is an object with two values: a current value and a new value. During the Evaluation, processes read the current values of their input signals and write to the new value of their output signals. Optionally, a signal stores its values at a limited number of previous time steps. This is called the delay line of a signal. The Update of a signal is replacing its current value by its new value.

A Queue is an object with two FIFO stacks: a main FIFO and an entry FIFO. During the Evaluation, processes read from the main FIFO of their input queues and write to the entry FIFO of their output queues. The state of the queue is linked to the state of the main FIFO. All the queue's attributes (Empty, Full, Filling) correspond to the state of the main FIFO. The Update of a queue is transferring the entry FIFO to the main FIFO and updating the attributes.

A Container is an object that is used to transfer a block of data between a Producer and a Consumer. It contains an array of values and an access lock. During Evaluation, the process that has acquired the lock (the Producer or the Consumer) can access the array of values. The process that has the lock can transfer it to the other party. The update of a container is the actual transfer of the lock.

An Event occurs if the new value and the current value of a signal differ or if the state of a queue changes or if the lock of a container is transferred. If an event has occurred, the simulation engine will perform a delta cycle. A delta cycle contains 2 phases. In phase 1, the Evaluation phase, all processes are evaluated. In phase 2, the Update phase, all signals, queues and containers are updated.

The simulation engine in accordance with the present invention will continue performing delta cycles until no more Events occur. This is called delta cycle convergence. This guarantees that the results are independent of the order in which the processes are executed.

After delta cycle convergence, the simulation engine updates the delay lines of the signals and advances by one simulation step to the next system position at which an Event is scheduled. At that point delta cycle convergence is performed again. The simulation step may be a simulation time variable. In this case, the process of advancing the time and performing delta cycle convergence is repeated until no more events are scheduled.

Because of the delta cycle convergence mechanism, the engine has the important property of determinism. Since there is a clear separation between the Evaluation phase and the Update phase, the order in which the processes are Evaluated is irrelevant. The simulation engine in accordance with the present invention operates on a high level, object oriented specification of the system. This differs from conventional VHDL engines which operate on a lower level description. Compared to VHDL simulation engines, the simulation engine in accordance with the present invention adds a number of features that are important in System Level modeling:
- Processes can contain other processes. This is important for achieving true hierarchical descriptions. VHDL can only encapsulate state in a component, but a component cannot be instantiated in a process.
- Queues are often used in System Level Models. For example, a Petri net model is based on queues. In the present invention, queues are embedded in the environment itself, thereby preserving the determinism property.
- Delay lines are embedded in the simulation environment of the present invention. They are extremely useful for describing the data flow graph models of DSP systems.
- Containers are a high level implementation of block transfers that are often found in shared memory architectures and DMA types of communication.

The choice of the language is probably the most important choice of a System Level modeling environment. The language that is preferably used in according to the present invention is ANSI C++. However, the present invention is not limited thereto. A library may be provided in accordance with the present invention that extends C++ with classes for:
- Modeling the concepts introduced in the section above (concurrent processes, signals, queues, etc.)
- Non-standard built-in number types. The modeling of systems requires a much larger set of numeric types than the standard C++ numeric types.
The choice of C++ as the base language was made for several practical reasons:
- C++ is object oriented. Object oriented programming techniques are to date the most powerful techniques for describing complex systems, and have excellent reuse properties because of object encapsulation and inheritance.
- C++ is extendable. By adding classes and using operator overloading, the simulation environment of the present invention can be extended with concepts that are particularly well suited for a wide range of application domains. For example, systems that need error detection/correction may benefit from classes that support polynomial arithmetic. Thanks to operator overloading, polynomial arithmetic can be described in a very user-friendly fashion.
- Since C and C++ compilers exist for most embedded processors, a description generated in accordance with the present invention can be compiled into an implementation on an embedded processor with minimal effort. This makes the present invention suited for describing both the hardware and software aspects of a system. Unlike other languages, such as VHDL, the System Level Model of the software part of a system can, with the proper coding style, be translated directly into microcode. Moreover, with the new generation of C-based synthesis tools such as System Compiler (an advanced C synthesis tool from C Level Design), the hardware part of a system can also be translated into synthesizable descriptions.
- C and C++ are widely used. System designers are therefore likely to be familiar with C/C++. Moreover, if System Level Models are already available, they are probably written in C or C++. Vice versa, other System Level modeling environments, such as SPW, COSSAP or Felix, provide a C interface, which makes it easy to export models in accordance with the present invention to foreign environments.
- Excellent development tools, such as a compiler and debugger, are available on all platforms for a reasonable (or even zero) cost.
- Compared to other high level languages (e.g. Java, Python or Lisp) C++ programs run quickly. Simulation speed is important to achieve verification goals.
Especially when the System Level Model is used as a virtual prototype during software debugging, simulation speed should be maximized.

### CONCURRENT PROCESSES

### The Module Class

The simulation environment of the present invention provides a class called Module. Each concurrent process is an instance of a class derived from the Module class. For example, suppose that a system contains a cascade of two filters with an identical structure, called IRR. The description of this system in accordance with the present invention contains a class IRR, derived from the class Module, and two instances, e.g. Filter_1 and Filter_2, of type IRR.

Three files are recommended to describe the behavior of the IRR filter:
- IRR.h which contains the declaration of the IRR class.
- IRR_create.h which contains the constructor of the IRR class.
- IRR.cpp which contains the definition of the behavior of IRR objects. By means of the appropriate tool, the first two files can be created automatically. A template for the third file is also generated if it does not already exist. An example set of files is shown below:

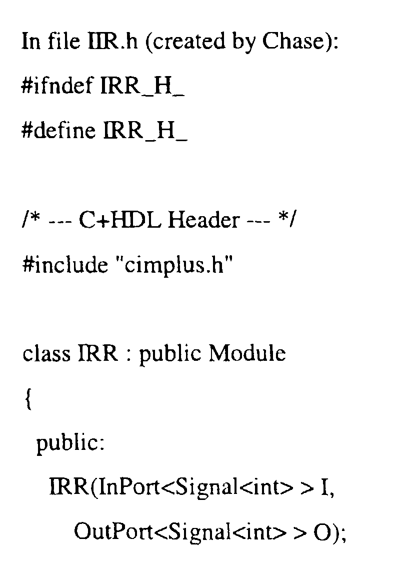

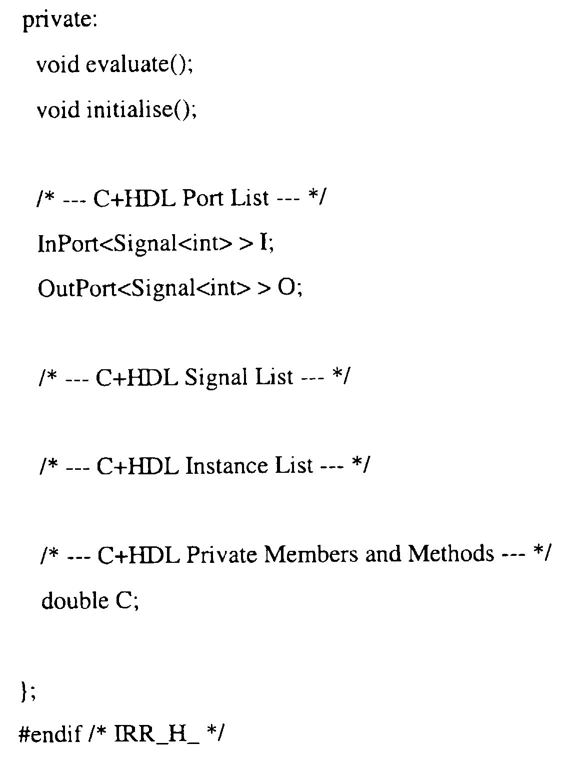

The class declaration contains:
- The evaluate() member function that contains the behavior of the IRR. While executing the evaluate() member function, the IRR may read from its input port signals and write to its output port signals. This function is defined in the IRR.cpp file and describes the behavior of the objects of the class. It has to be written by the designer.
- A declaration of the initialise() member function. This function is also defined in the IRR.cpp file and contains user-defined initialization code.
- A port declaration: This is a set of InPorts and OutPorts to Signals, Queues or Containers. These InPorts contain a reference to the Signal that gets connected to it and are used to connect an object of the IRR class (an instance), to its environment in the system. The actual connection is done in the constructor during initialization of the simulator.
- A list of internal Signals, Queues, Containers and Instances.
- Private members: For example the variable C. These members are internal, private objects that are not accessible from objects outside the IRR class. Each instance of the IRR class has its own set of private members.

In addition, the IRR class declaration contains the constructor member function. The constructor member function is executed only once, during startup of the simulation, and is normally used for initialization purposes. The constructor makes the connections of ports and calls the CONSTRUCT_AUTO_MODULE function to register the module to the simulation engine:

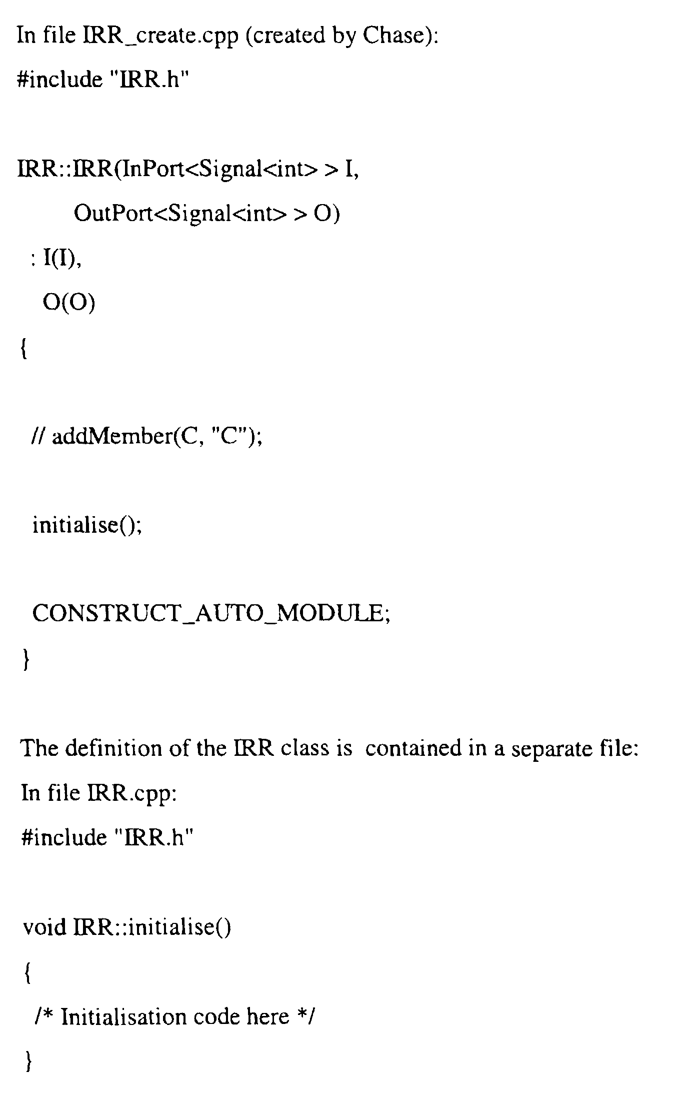

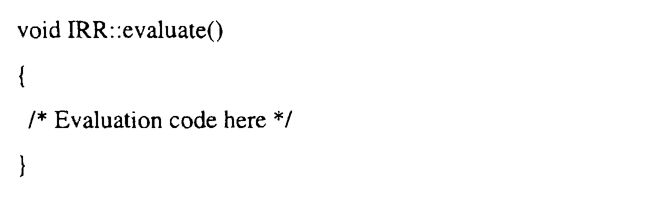

### THE MODULE EVALUATION MODES

There are three modes to Evaluate concurrent processes. A mode is defined by the way a process is registered to the simulation engine:
- CONSTRUCT_MODULE: the user is responsible for calling the evaluate function. The advantage of this type is that the user can clearly specify the conditions under which a process is evaluated, that the user can use a function name other than evaluate, and that the user can add arguments to the evaluate member function.
- CONSTRUCT_AUTO_MODULE: The simulation engine makes sure that the evaluate function is called when necessary. A sensitivity list can be supplied to trigger the function only in case of an event on one of its sensitivity signals. This is the preferred method to construct a module.
- CONSTRUCT_THREAD: The simulation engine makes sure that the evaluate function is called when necessary. The evaluate function has to contain wait statements (WAIT_ON, WAIT_UNTIL, WAIT_FOR). Modules constructed this way can be distributed over several processors in case the model is executed on a multiprocessor workstation.

### HIERARCHY

An example of hierarchy is shown below. It illustrates how a process TOP contains another process of type SubModule.

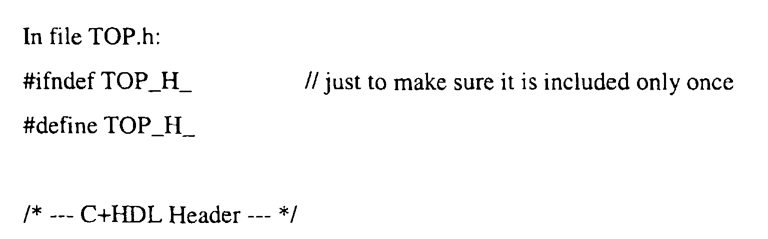

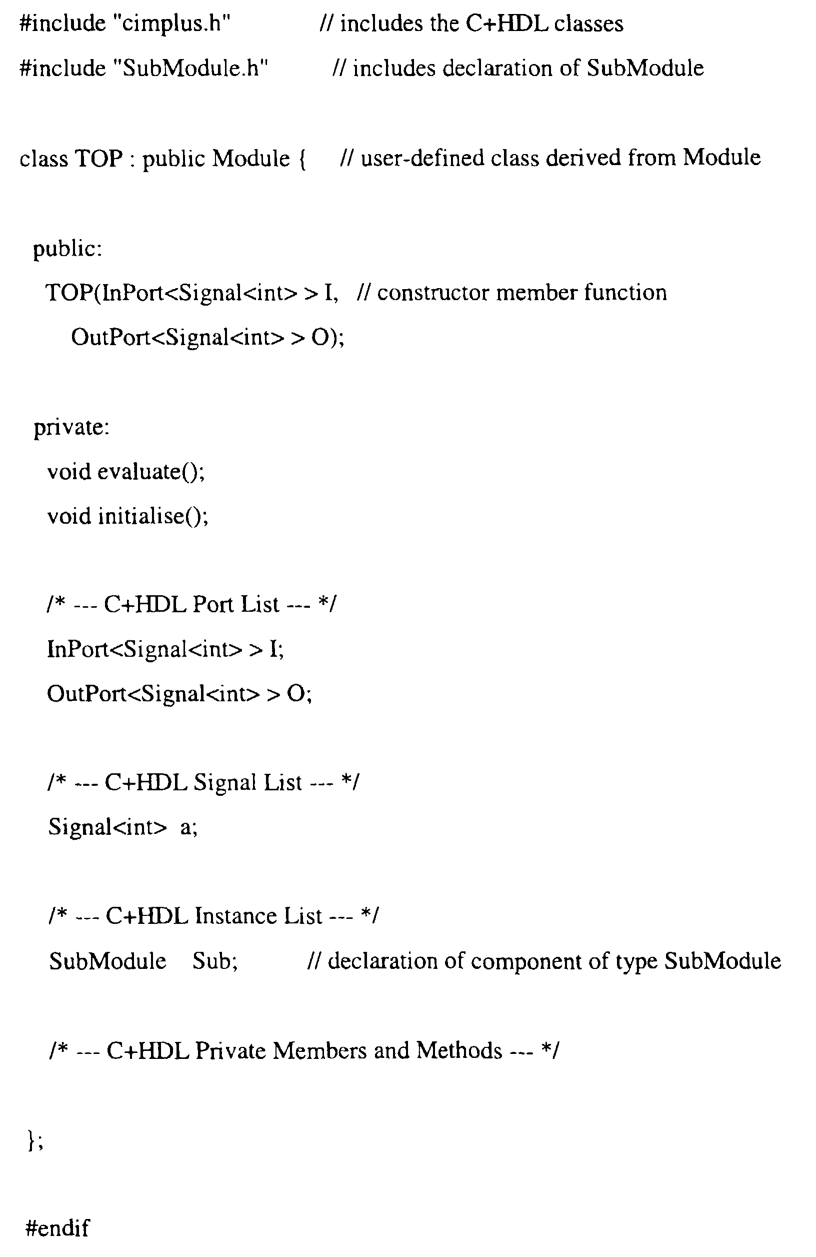

The file TOP.h includes the declaration of SubModule, and an object Sub of type SubModule is instantiated in TOP.

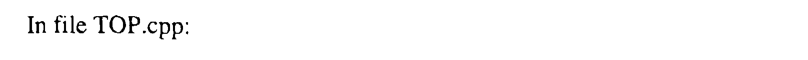

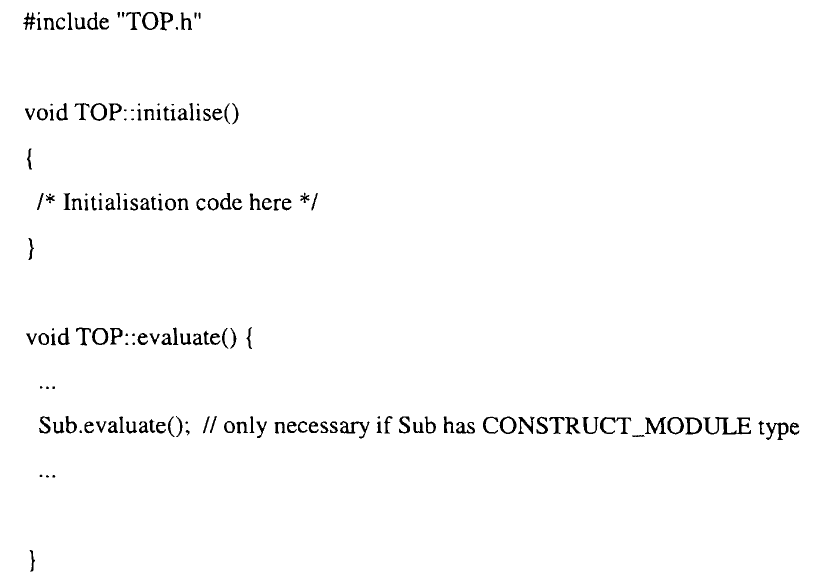

In the constructor of TOP, the instance is connected to the proper signals and optionally given a name with a call to the annotate function. Instances that are not explicitly named receive an internally generated name (e.g. O#213):

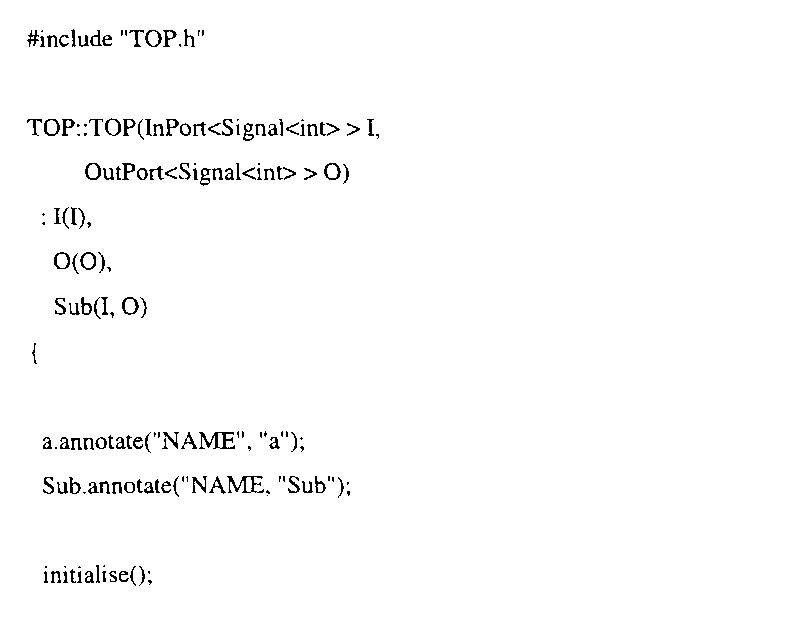

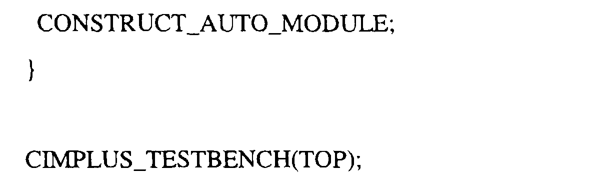

In the evaluate() member function of TOP, the evaluate() member function of the SubModule is called (This is not necessary if SubModule is registered to the simulation engine as an AUTO_MODULE or a THREAD). Of course, SubModule can in its turn contain other components, creating a hierarchical tree. At the root of this tree is a process that is called TestBench by convention. This is comparable to the main function of a C program that is by convention the starting point of the execution. To declare a module as the root of a hierarchical tree, the CSIM_TESTBENCH() statement is included.

### WAIT STATEMENTS

Modules that are registered with CONSTRUCT_THREAD can be suspended at any point within their evaluate function. There are four ways to suspend:
- WAIT_ON(signal) blocks the evaluation of the module until there is an event on the signal signal.
- WAIT_ON(signal, value) blocks the evaluation of the module until the signal has an event that sets its value to value.
- WAIT_FOR(period) blocks the evaluation of the module for period number of simulation steps, e.g. time units.
- WAIT_UNTIL(boolean_expression) blocks the evaluation of the module until boolean_expression evaluates to true.
Note that the first 3 methods are a special case of the last method. Indeed, WAIT_ON(Clk);
is (functionally) equivalent to
WAIT_UNTIL(Clk.hasChanged());
and
WAIT_ON(Clk, HIGH);
is equivalent to
WAIT_UNTIL(Clk.hasChanged(HIGH));

Likewise,
WAIT_FOR(100);
is equivalent to
long long continueTime = NOW + 100;
WAIT_UNTIL(NOW == continueTime);

However, the WAIT_ON and WAIT_FOR functions are far more efficient.

An example of wait statements is:

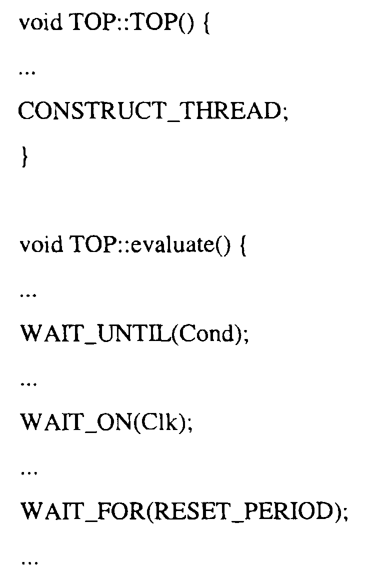

### LOCAL VARIABLES

Every module can have local variables to hold state. To be able to trace these variables, they are registered with the kernel of the simulation engine with the addMember call. This call is placed in the module constructor.

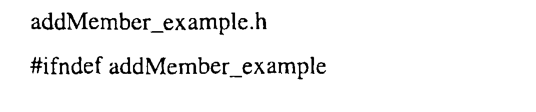

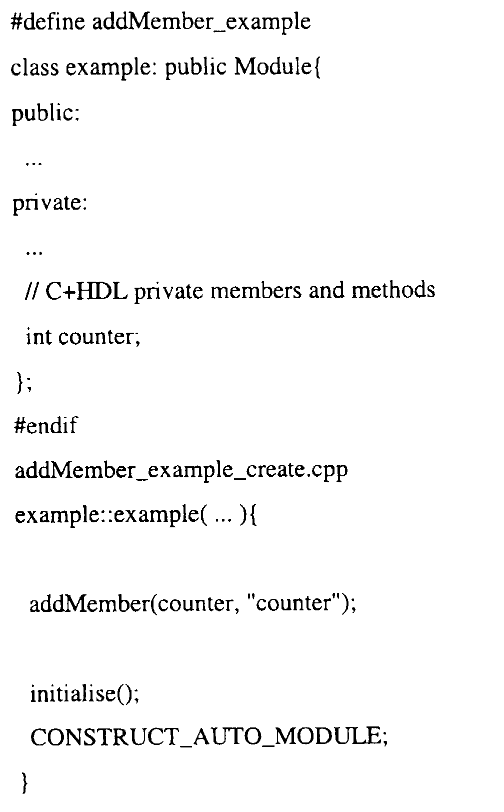

### SENSITIVITY LISTS

For modules that are registered to the simulation engine with CONSTRUCT_AUTO_MODULE, a sensitivity list can be supplied, using a sensitive call.
There are two kinds of sensitivity:
- sensitive(signal) makes evaluation sensitive to any event on signal or inport.
- sensitive(signal, value) makes evaluation sensitive to any event that assigns value to signal or inport.
A typical positive-edge clocked process with asynchronous reset could be written as follows:

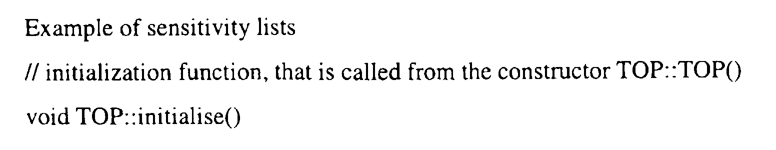

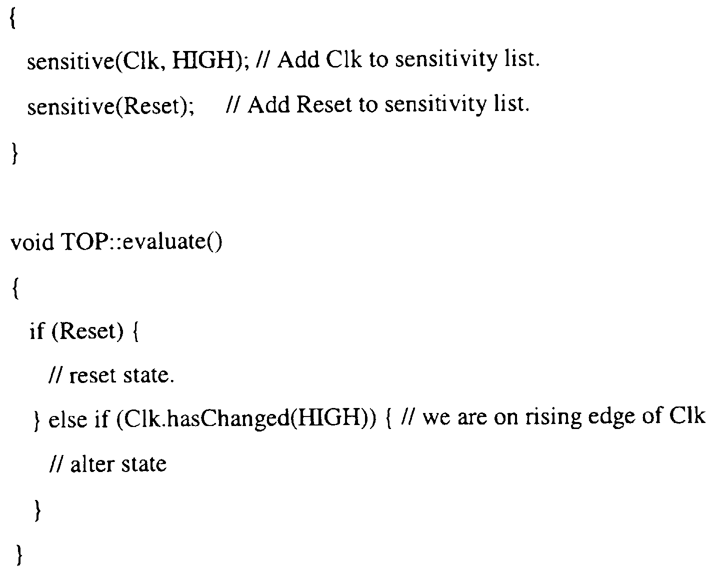

Without a sensitivity list the evaluate function is called in every delta cycle. With a sensitivity list, the evaluate function is only called when a signal in the sensitivity list has changed. Note that in this example, omitting the sensitivity list won't change the behavior. However, if the module had been made sensitive to only the Clk, the behavior would be different (a change of the Reset signal would not cause TOP to evaluate and hence would model a synchronous reset instead of an asynchronous one).

### STOPPING A SIMULATION

A simulation can be stopped at any time using the exception StopSimulation. This exception takes an optional string argument, containing the reason for stopping the simulation.

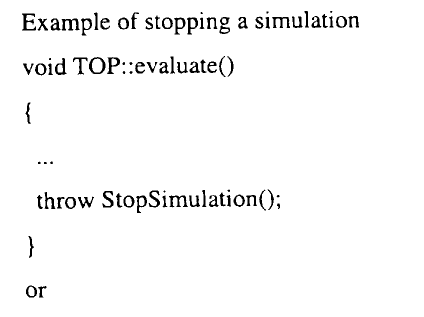

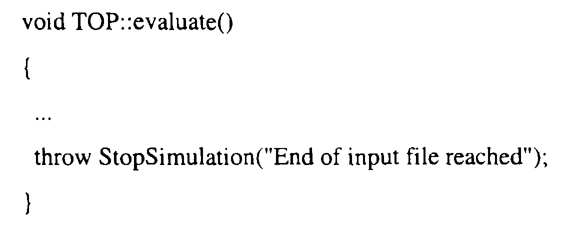

### CURRENT SIMULATION TIME

The global variable contains the current simulation time. Simulation time should be distinguished from real time. When the simulation engine in accordance with the present invention is run on a particular computer the simulation will take a certain real time to execute. In the simulation, a time variable is used to indicate a theoretical time for the execution of the processes being simulated. This latter time is described as "simulation time". Ideally the theoretical simulation time should be close to the time that the same processes would take when run on a target processing engine but the present invention is not limited thereto. The simulation time can be used to do things such as print diagnostics or do time stamping of events.

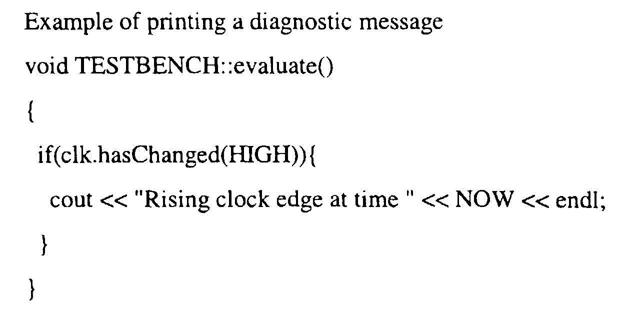

The user should not try to assign a value to NOW. Assignments to NOW will be discarded by the simulation kernel.

### SIGNALS

Signals (and queues and containers, which are described below) are the recommended method of communication between concurrent processes in accordance with the present invention. Although the simulation environment in accordance with the present invention supports the use of variables as communication between processes, the designer must be aware that this may destroy the property of determinism. The present invention does not exclude the use of variables however, because in some cases they may be convenient (e.g. for implementing semaphores), but they must be used with care.

### SIGNAL OBJECTS

A signal is an object with two values: a current value and a new value. During evaluation, processes read the current values of their input signals and write to the new values of their output signals. Optionally, a signal stores its values at a limited number of previous time steps. This is called the delay line of a signal.
In C++ terminology, Signals are objects of the template class Signal<T>. They are used as shown in the example below (see Fig. 5):

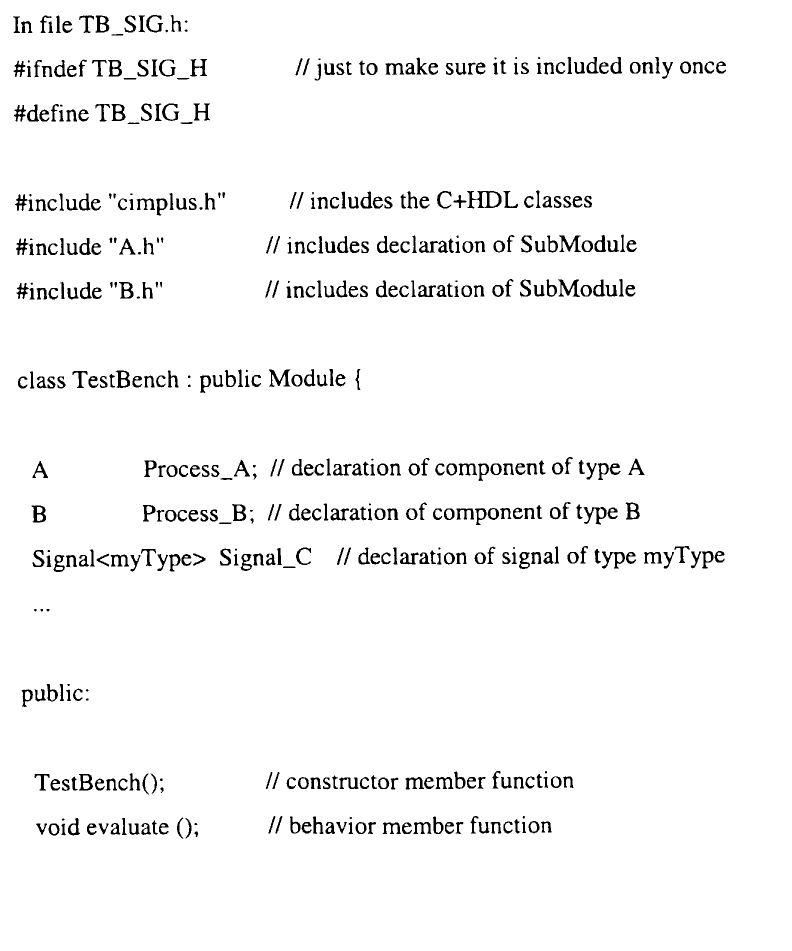

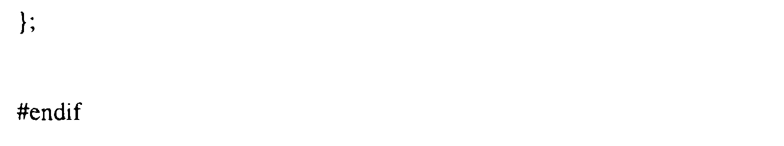

The declaration contains 3 member objects: the processes A and B and the signal C that is used as communication between the two concurrent processes.

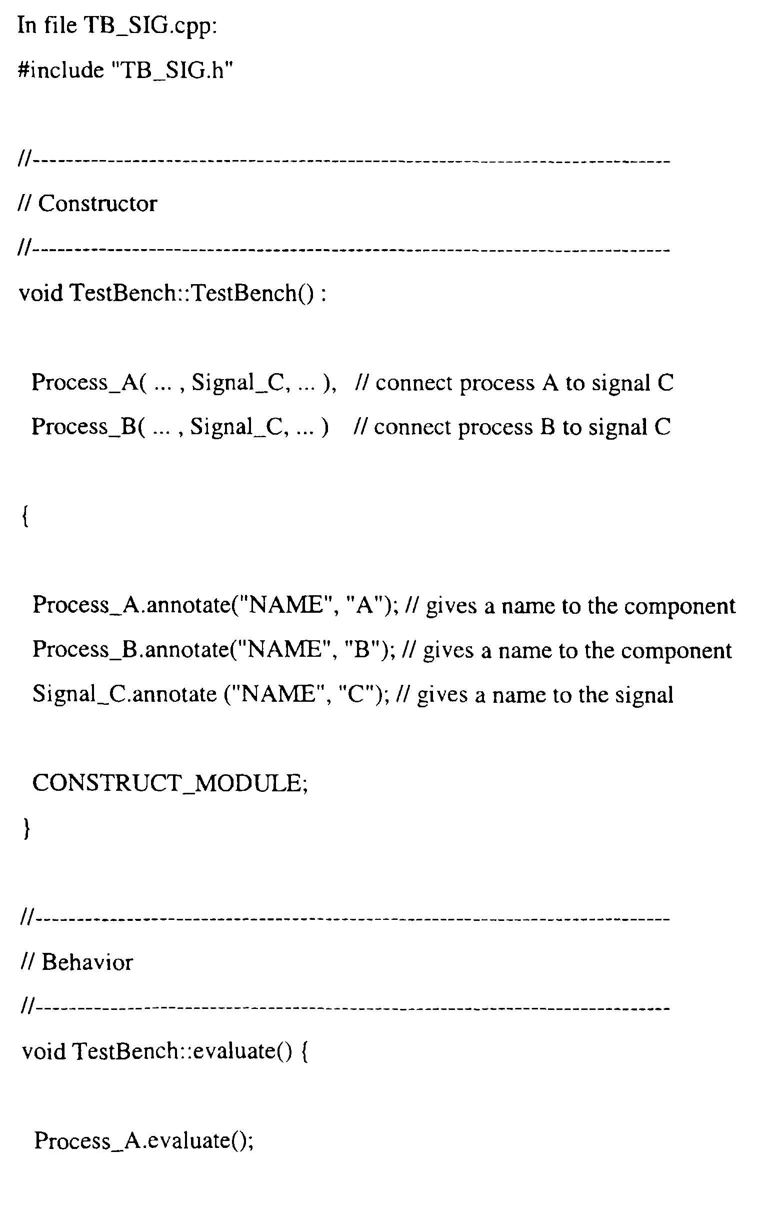

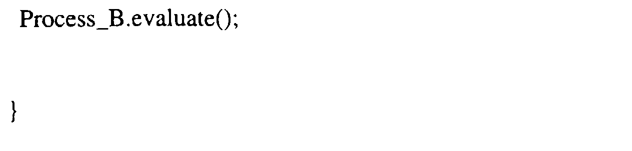

The constructor connects process A and B to signal C. Moreover, it contains the optional annotate() method calls. These functions attach names to objects. The names are necessary to identify objects for tracing or plotting. In the evaluate() member function, the evaluate() member functions of Process_A and Process_B are called (if they are registered as CONSTRUCT_MODULE evaluation types).
The data type of a Signal<T> can be any user-defined or built-in type.

### Signal Class

### Signal Assignment

Signal assignment is done by means of the <<= operator. E.g.
Signal<int>S; // S is a signal of type int
S <<= expression_returning_int;
...
S = b; // error! only <<= operator is allowed here
...
S <<= other_expression_returning_int; // last assignment overrules previous ones
...
S.after(10, v); // S <<= v after 10 time units

The use of the regular assignment operator "=" is not permitted on signals: attempting to use it will produce a compile-time error message. The <= operator is disabled to prevent erroneous use. If you want use this operator to compare a signal to a value, use the getValue() method:
if(s.getValue() <= 3) return 1 else return 0;

As in VHDL, if several assignments are done on a signal in the same delta cycle (e.g. from within an evaluate() function call), the last one will prevail. This feature is often used to assign a default value that can conditionally be subsequently overruled. The simulation environment of the present invention provides both resolved and unresolved signals. Resolved signals have a resolution function to decide what the resolved value of the signal is when multiple drivers are present. Unresolved signals are signals that have only one driver and therefore are determined.

It is checked that each unresolved signal is only driven by one process. An unresolved signal can be read by one or many processes, but can be written by only one process. This assumption is important relative to determinism. If a signal is driven by two or more processes, the order in which these processes are executed is not determined. Since the last assignment prevails, the order of execution might have an impact on the simulation results.

As with VHDL, there is a delayed signal assignment by means of the after(delta, value) member function. The arguments to this function are a value for the type of the signal and an integer number representing the number of time units delay before the assignment takes place.

### ASSIGNMENT AS A FUNCTION OF THE SIGNAL TYPE

Signal assignments follow the assignment rules of the data types they contain. For example:
If one declares a Signal<int>, this Signal follows the C++ rules to assign an int. If one declares a Signal<vhdl_bit>, only assignment with HIGH or LOW is allowed.

### Example 1: Signal Assignments

// Some declarations
Signal<int> a;
Signal<vhdl_bit> b;
a <<= 0; // ok: C++ int assignment
a <<= "test"; // error: no conversion from char[] to int
b <<= HIGH; // ok: vhdl_bit can be assigned HIGH or LOW
b <<= 0; // error: no conversion int->vhdl_bit
b <<= true; // error: no conversion bool->vhdl_bit

All assignments that can be done on a data type can also be done on Signals of that data type.

### Signal Attributes

A Signal<T> class contains the following public methods:

**Table 1:**

| Signal Attributes | |
|---|---|
| hasChanged() | Member function that returns true if the Signal changed its value in the previous delta cycle. |
| hasChanged(Value) | Member function that returns true if the Signal changed its value in the previous delta cycle and the new value is equal to Value. |
| hasTransaction() | Member function that returns true if the Signal was subject to a signal assignment in the previous delta cycle |
| getValue() | Member function that returns the current value of the Signal. This can be useful if the compiler is not able to derive the proper conversion functions automatically. |
| getDrivingValue() | Member function that returns the value that is being driven on the signal by the calling process. If the current process does not drive the signal, the default value is returned. |
| after(delay, value) | Assigns value to the signal after delay time-units |
| getD(delay) initD(value) initD(value, delay) | Signal delay line methods |
| annotate("NAME", string) | Assigns the name string to the signal |
| annotate("SIZE", n) | Defines the length of the delay line |
| annotate("MONITOR", id) | Enables bandwidth monitoring |

**Table 2:**

| Signal Functions | |
|---|---|
| anyChange(S1, S2,...) | Function that returns true if any of the Signals in the argument list has changed in the previous delta cycle. Up to 5 signals can be specified. |
| sensitive(S) | The module's evaluation is made sensitive to events of signal S (only for AUTO_MODULES) |

### Example 2: How Signal Attributes Can Be Used

S.hasChanged();
S.hasTransaction();
S.getValue();
anyChange(S1, S2);

These attributes can be used to implement various modeling styles:

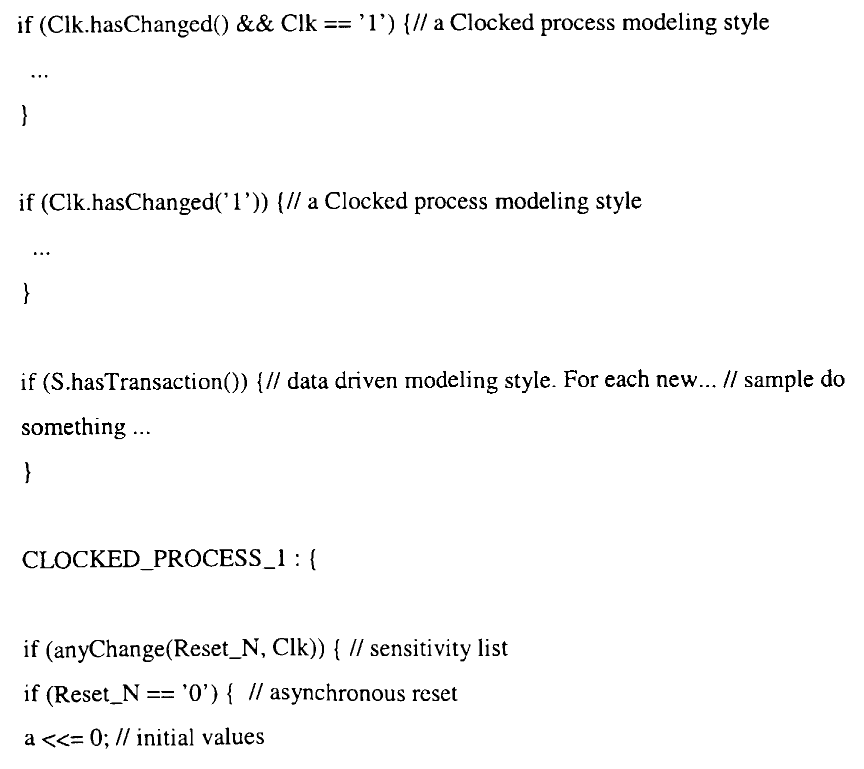

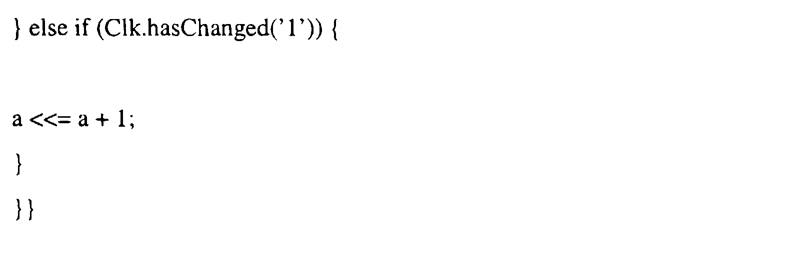

### SIGNAL DELAY LINES

Each signal can optionally store a history of its previous values. This is as if a delay line were to be attached to the signal. The delay line utility is turned on using the annotate() method in the constructor:

### Example 3: How a Signal Delay Line is Used

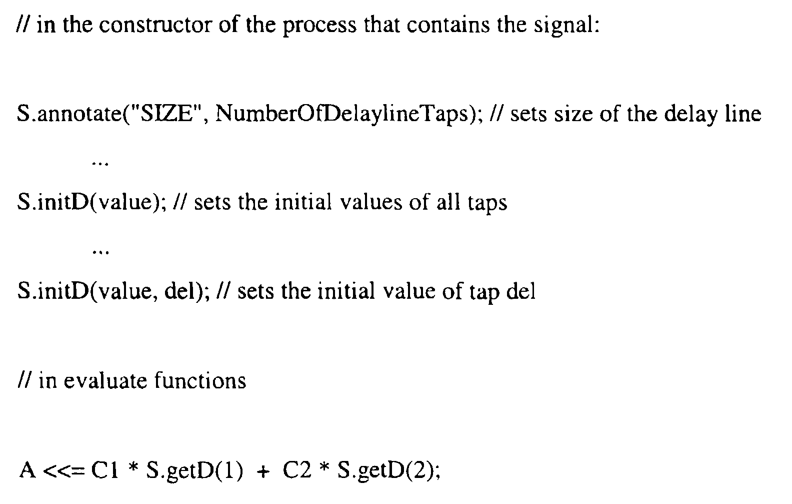

By means of the initD() method, the delay line can be initialized.
By using the getD() method, the value of the signal at previous time points can be accessed. The argument of the getD() method must be an integer in the range [1, size]. Only the time steps at which the signal received an assignment are relevant. S.getD(1) refers to the value of S at the previous time step at which S was subject to an assignment. This is not necessarily the previous time step at which a delta cycle convergence took place. Especially in multi-rate systems, the difference is important.

### BANDWIDTH MONITORING

The System Level Model in accordance with the present invention can be used to estimate the bandwidth requirements of a system. Such information is extremely important in dimensioning the appropriate architecture of the system.
The bandwidth that corresponds to the communication over a signal S can be monitored by enabling the monitor feature: 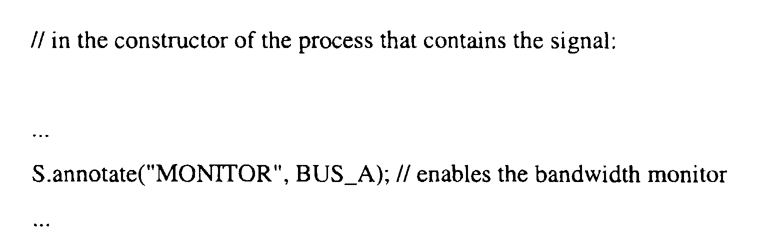 The aggregate bandwidth of all signals that have their bandwidth monitors enabled is calculated. BUS_A is a group number that identifies a set of signals (or queues) for which the aggregate bandwidth is calculated.

The bandwidth calculation is based on the size of the data types. For user-defined data types, which are derived from UserType, the getDataSize() method must be used to return the size in number of bits.
The present invention includes other monitors, for example, a switching activity monitor.

### RESOLVED SIGNALS

In addition to unresolved signals, the simulation environment in accordance with the present invention supports resolved signals. Resolved signals can be driven by multiple processes, and can in this way be used to model e.g. tristate busses. The simulation environment in accordance with the present invention provides the user with the ability to design unique resolved data types to use within a resolved signal. One resolved bit type is implemented as standard: the vhld_logic, which is a 9-valued bit type, very similar to VHDL's std_logic.

The use of a resolved signal type is identical to the use of an unresolved signal: it is declared using
Signal<vhdl_logic> aSignal;
and can be driven using assignments (<<=) or delayed assignments (.after()). With the .getDrivingValue() method, the value that is driven by the current process can be queried, while the actual value is what is returned by the implicit type conversion to a vhdl_logic, or by the .getValue() method.

### SIGNALS AND TYPES

A signal cooperates with the value that it holds. This is useful if user-defined types are added to the simulation environment and there is no desire to inherit UserType for some reason, or a user-defined resolved type is added.
For a Signal<Type> to work properly, there are a few requirements to the type Type:
- Type is derived from UserType, has a default constructor and working assignment operator. A Usertype that is defined this way cannot be a resolved type.
- Alternatively, Type is not derived from UserType, but the traits class DataTypeTraits is properly specialized for the Type and Type has a default constructor and a working assignment operator. This allows the Type to be a resolved type.

With reference to the second kind of user-defined type: suppose a new type MyType is to be added. A specialization of the DataTypeTraits class looks like the following:

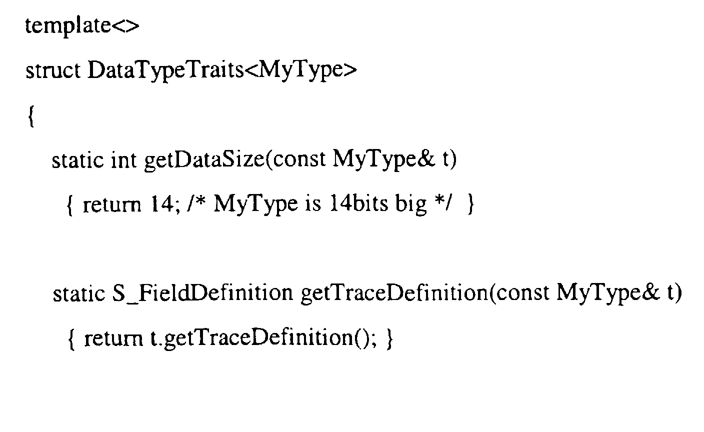

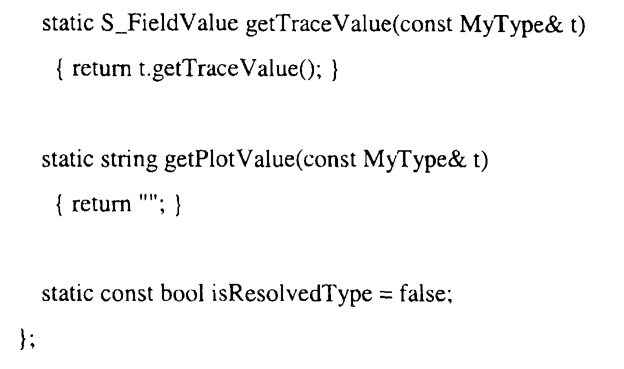

The getDataSize() method must return the size of its argument.
The getTraceDefinition, getTraceValue and getPlotValue return information for tracing and plotting the type and their definition is similar to the same methods in UserType. The isResolvedType parameter indicates whether a user-defined type is a resolved type. When this parameter is true, the user must implement an additional function, the resolution-function :
template<>
MyType resolve(const slist<Driver<MyType> >& drivers);

The resolution function must determine the value on the wire, given a number of driven values as a list. A Driver<MyType> object has one method that returns the current value driven by the driver: Driver<type>::value().

An example of such a resolution function could be:

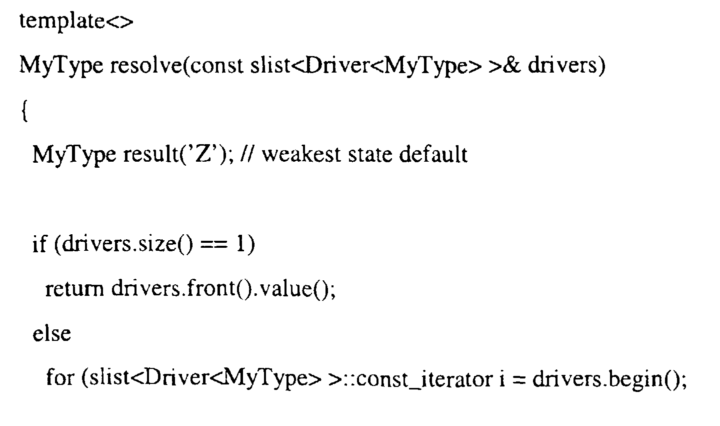

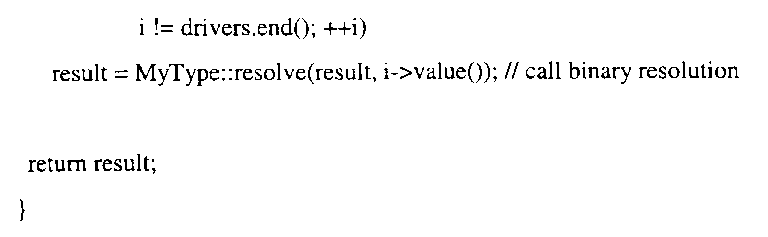

### QUEUES

Queues (together with Signals and Containers) are the recommended method of communication between concurrent processes. Although the simulation environment according to the present invention supports the use of variables as communication between processes, these may destroy the property of determinism. Variables are included within the present invention, however, since in some cases they may be convenient (e.g. for implementing semaphores).

### Queue Objects

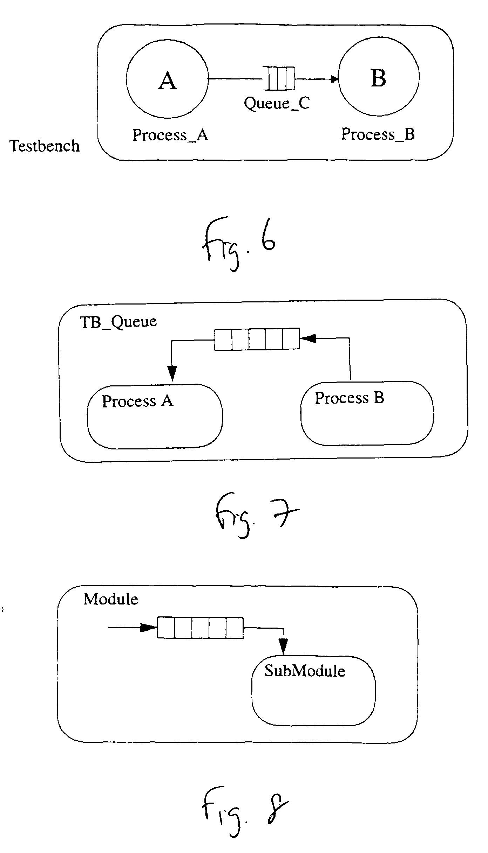

In C++ terminology, Queues are objects of the template class Queue<T>. They are used as shown in Fig. 6.

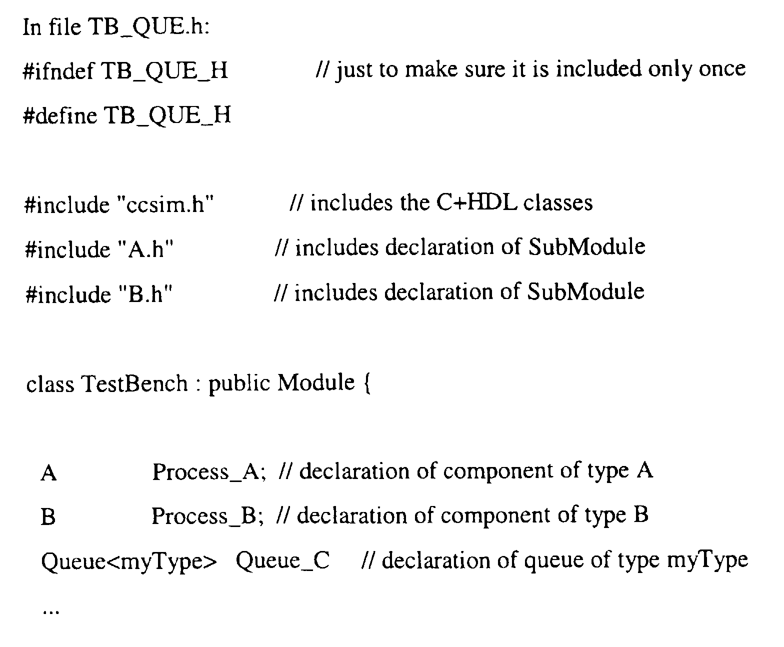

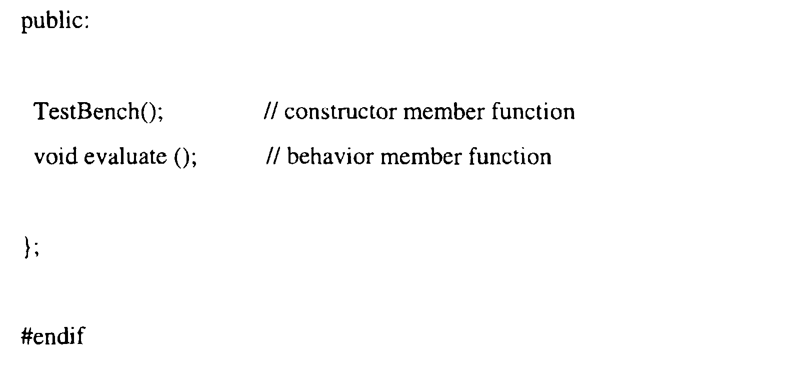

The declaration contains 3 member objects: the processes A and B and queue C, which is used as communication between the two concurrent processes. 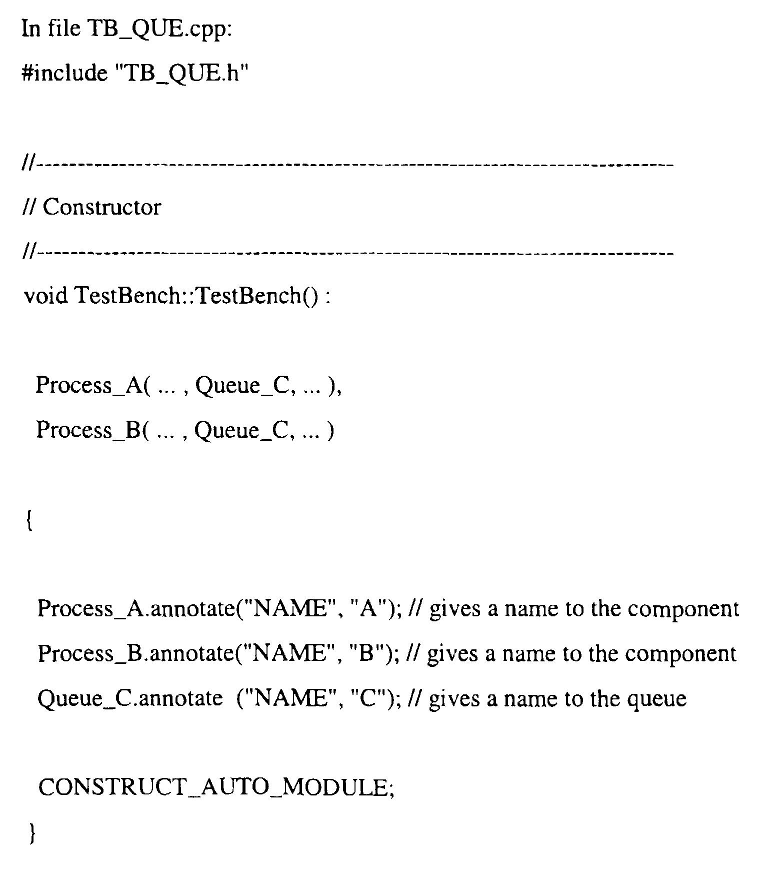 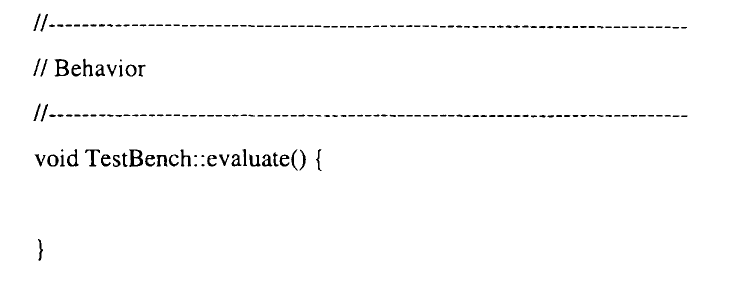 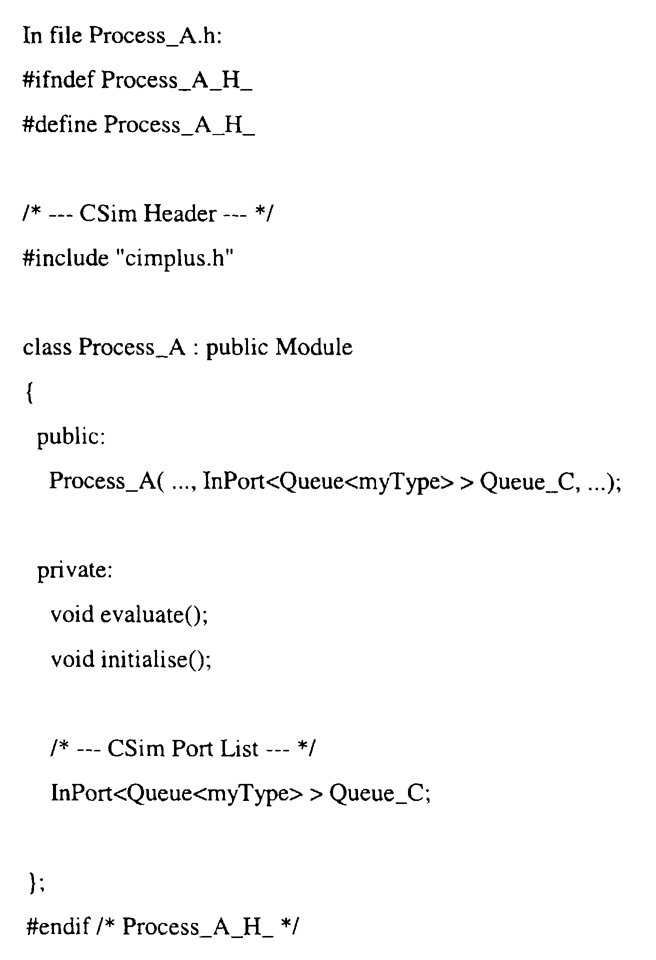 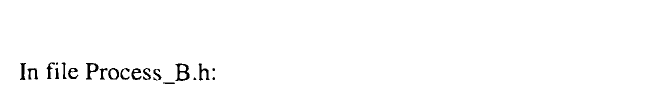 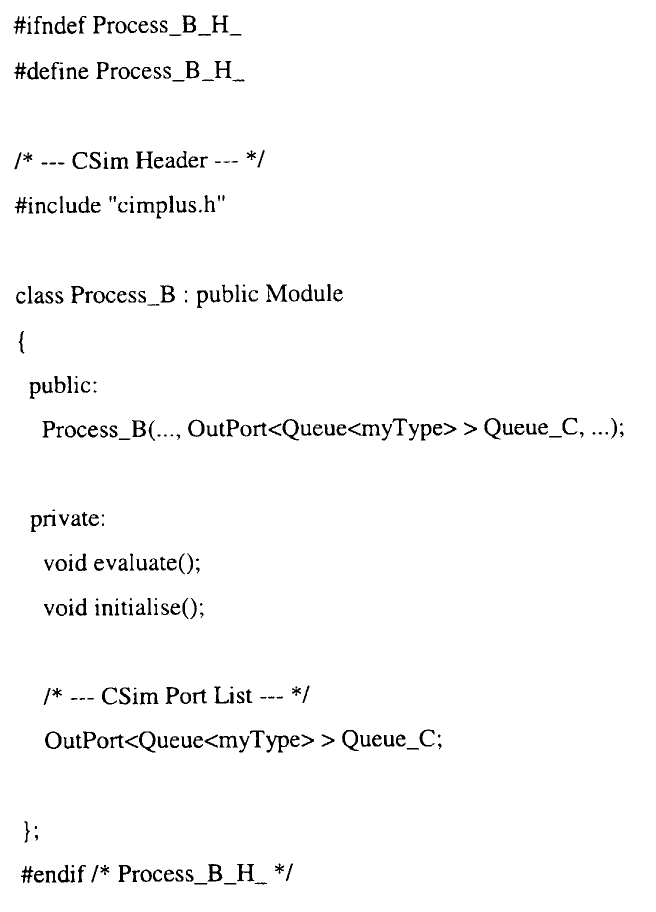 The constructor of the testbench connects processes A and B to Queue C. Moreover, it contains the optional annotate() method calls. In process A, the Queue is an InPort. That means that data will be popped in process A. In process B, the Queue is an Outport, where data can be written to (pushed on) the Queue.
The data type of a Queue can be any user-defined or built-in type.

### QUEUES AND DETERMINISTIC SIMULATIONS

Because a Queue is used for communication between modules, special care has been taken to ensure deterministic simulation results. A Queue has two sides, one from which data can be popped (cfr. reading), and one on which data can be pushed (cfr. writing). As with signals, the read side can be passed on to an InPort, while the write side can be connected to an OutPort. So, a Queue that is available in an InPort can only be popped from, and a Queue that is available as an OutPort can only be pushed on.

Values pushed on the write side will not be visible to the read side until the next delta cycle. Furthermore, two entirely independent views of the Queue are presented to the user. Most of the attributes that can change value during simulation are available in two versions, one for the queue read (pop) side, and one for the queue write (push) side. For each queue it is important that each set of attributes is used in a single module only. To ensure deterministic simulation, actions on one side of the Queue will never have effect on the attributes of the other side until the next delta cycle. Note the equivalence with the delayed update of signals.

### QUEUE CLASS

### QUEUE PUSH AND POP

Values are pushed on the Queue by means of the <<= operator and popped from the Queue by means of the >>= operator. E.g. 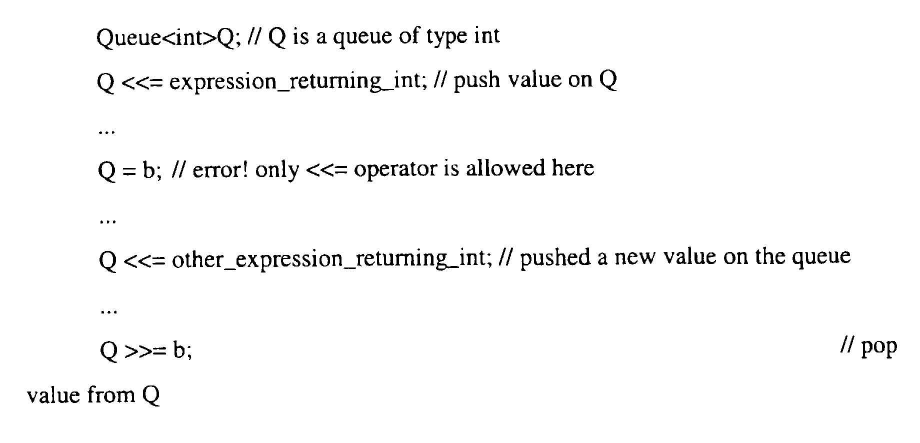 The use of the normal assignment operator "=" is not allowed and will produce error messages.

It is assumed that each Queue is pushed by only one process and popped by only one process. This assumption is important relative to determinism. Suppose a Queue is pushed (or popped) by two or more processes. Since the order in which these processes are executed is not determined, the order of the values in the Queue would not be determined.

### QUEUE INSTANTIATION

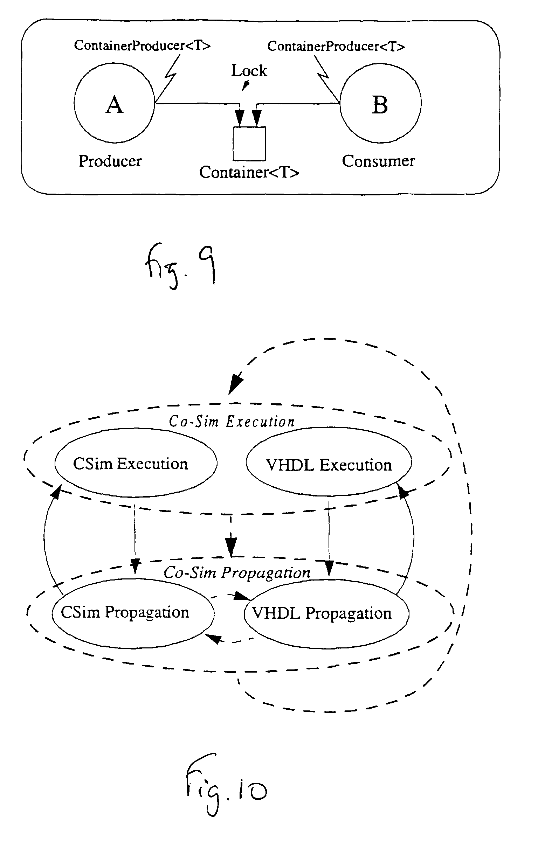

A Queue can be used in several ways. The Queue object will always be instantiated in some module, and the 'in' and 'out' sides can be passed to other modules as shown in Fig. 7. The Queue is instantiated in the testbench. Process A has the Queue as InPort and therefore pops from the Queue. Process B has the Queue as OutPort and therefore pushes on the Queue. The testbench process itself is not allowed to push or pop from the Queue, since we would then have multiple pushing/popping processes (i.e. Process A (or B) and the Testbench).

A second possibility for using the Queue is to pass one side of the Queue to a submodule and use the other side in the instantiating module, as indicated in Fig. 8.

The Queue itself has four classes of methods: the InPort methods (e.g. pop), the OutPort methods (e.g. push), general methods (e.g. getSize) and initialization methods (e.g. annotate). If the write side of the Queue is connected to a submodule, as in Fig. 8, only the output methods and the general methods of the Queue class itself can be used in Module, method.

### QUEUE METHODS

The following table lists all methods and indicates whether the method is a read method, a write method, a general method or an initialization

### Methods of the Queue class itself :

**Table 3:**

| Methods of the Queue Class | | |
|---|---|---|
| getSize() | general | Returns the filling limit of the queue |
| hasTransaction() | general | Returns true if the state of Q changed in the previous delta cycle |
| annotate("NAME", string) | init | Gives name string to the queue object |
| annotate("SIZE", n) | init | Specifies the maximum size of the queue |
| annotate("MONITOR", id) | init | Enables bandwidth monitoring |
| push(v) | write | Pushes value on the queue, returns false if an error (e.g. overflow) occurred |
| pop() | read | Pops a value from the Queue |
| hasUnderflowed() | read | Returns true if the previous push caused the queue to overflow |
| hasOverflowed() | write | Returns true if the previous pop caused the queue to underflow |
| isFull() | write | Returns true if a push on the Queue will cause the Queue to overflow |
| isEmpty() | read | Returns true if a pop from the Queue will cause the Queue to underflow |
| getValue() | read | Returns the value that will be returned by the next pop() in this delta cycle. |
| getReadFilling() | read | Returns the number of elements that can be popped from the Queue |
| getWriteFilling() | write | Returns the filling of the write/push/outport side of the Queue |

When passed through an InPort or an OutPort, the Queue methods that can be called are limited and the getFilling() method (together with methods that depend on it, such as isEmpty() and isFull()) behave slightly differently. The methods for an InPort<Queue<Type> > can be found in the following table: (these are the 'read' methods from the previous table)

**Table 4:**

| Methods for an InPort | |
|---|---|
| pop() | Pop a value from the Queue |
| getFilling() | Returns the number of values that can be popped from the Queue |
| getSize() | Returns the filling limit of the Queue |
| hasTransaction() | Returns true if the state of Q changed in the previous delta cycle |
| hasUnderflowed() | Returns true if the previous pop caused the queue to underflow |
| isFull() | Returns true if getFilling() == getSize() |
| isEmpty() | Returns true if getFilling() == 0 |
| getValue() | Returns the value that will be returned by the next pop() in this delta cycle. |
| reset() | Resets the Queue: The Queue becomes empty and will also be empty in the next delta cycle (i.e. all pushed values are discarded) |

The methods for an OutPort<Queue<Type> > are in the following table: (these are 'write' methods from the previous table)

**Table 5:**

| Methods for an OutPort | |
|---|---|
| push() | Pushes value on the queue, returns false if an error (e.g. overflow) occurred |
| getFilling() | getSize() - getFilling() elements can be pushed on the Queue this deltacycle. Note that getFilling() of the In and the Out side of a Queue can be different |
| getSize() | Returns the filling limit of the Queue. |
| hasTransaction() | Returns true if the state of Q changed in the previous delta cycle |
| hasOverflowed() | Returns true if the previous push caused the Queue to overflow |
| isFull() | Returns true if getFilling() == getSize() |
| isEmpty() | Returns true if getFilling() == 0 |
| reset() | Resest the Queue: all values currently in the queue are discarded and won't be available for popping anymore in the next delta cycle. All values pushed after the reset, however, will be available for popping in the next delta cycle. |

### Example 4: Queue Methods

Q.getSize();
Q.hasTransaction();
Q.isEmpty();
Q.isFull();
Q.getReadFilling();
Q.getValue();
Q.hasOverflowed();
Q.hasUnderflowed();
allAvailable(Q1, Q2,...);
Q.reset();
Q.pop();
Q.push(v);

The allAvailable method above returns true if values can be popped from all the queues in the actual parameter list.

### QUEUE SIZE

The size of a Queue is not limited, or to be more precise, is only limited by a large number that is related to the amount of memory on the workstation on which the simulation is executed. In an actual system, the queues will have a limited size. Simulations with limited queue size can be performed by annotating the queues by calling the annotate() method in the constructor:

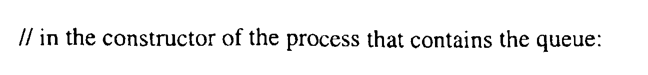

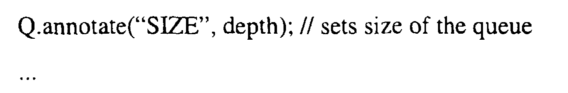

### Bandwidth Monitoring

The System Level Model in accordance with the present invention can be used to estimate the bandwidth requirements of a system. Such information is extremely important in dimensioning the appropriate architecture of the system.

The bandwidth that corresponds to the communication over a queue Q can be monitored by enabling the monitor feature: 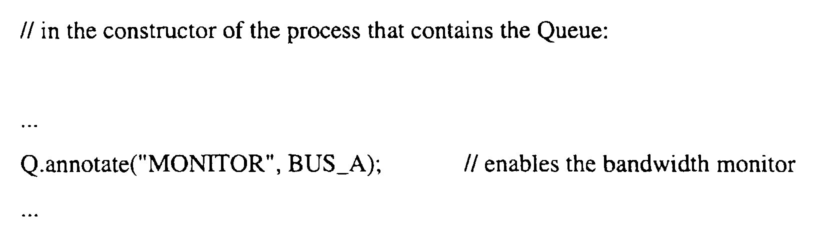 The aggregate bandwidth of all signals that have their bandwidth monitors enabled is calculated. BUS_A is a group number that identifies a set of signals and/or queues for which the aggregate bandwidth is calculated.

The bandwidth calculation is based on the bit-accurate size of the data types. For user-defined data types, which are derived from UserType, the getDataSize() method must be implemented to return the size in number of bits.
As previously indicated, the present invention may include other monitors, for example, a switching activity monitor.

### TRACING AND PLOTTING QUEUE FILLING RATE

Queue filling rates can be traced and/or plotted. The traced number represents the quantity of values that will be available for popping during this delta cycle.

### CONTAINERS

Like Queues, Containers provide a high level abstraction of communication between Processes. Containers provide an efficient means of transferring blocks of data between a Producer and a Consumer. Containers use a shared memory pool with access control. To make sure that data is exchanged between the Producer and the Consumer in an orderly fashion, the shared pool is protected by an access lock. Only if one has acquired the lock, access is permitted. After the Producer or the Consumer has completed its access, it can turn over its lock to the other party.

To guarantee determinism, the lock must be treated with care by the simulation engine. If the lock is transferred to another party, the actual transfer will only take place during the Update phase, after all processes have been evaluated. The data in the memory pool behaves like variables, i.e., it is updated immediately.

### CONTAINER OBJECTS

Containers are instantiations of the Container<T> template class. The size of the Container has to be specified at construction. The Container class itself has no member functions that allow access the data in the Container. There are two classes ContainerConsumer<T> and ContainerProducer<T>, derived from Container<T> , that are provided to access the data in the Container.

Containers are visualized in Fig. 9. Containers provide a method of communication between two Processes. A lock determines who is allowed to access the Container. After construction, the Producer has the lock. Typically, the Producer will put some data in the Container and pass the lock to the Consumer. Then it's the Consumer's turn to access the data, and after completion, the Consumer passes the lock back to the Producer.
An example.

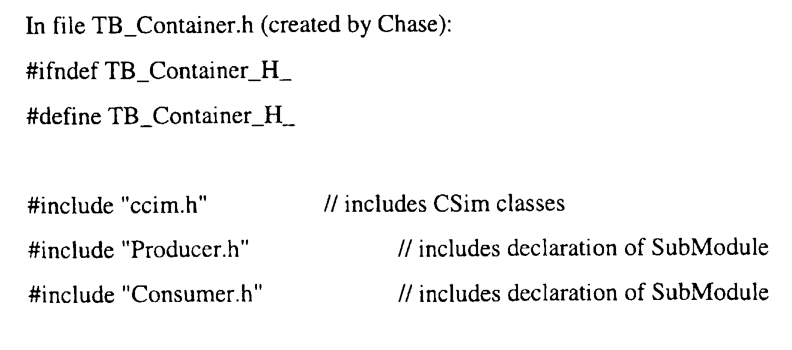

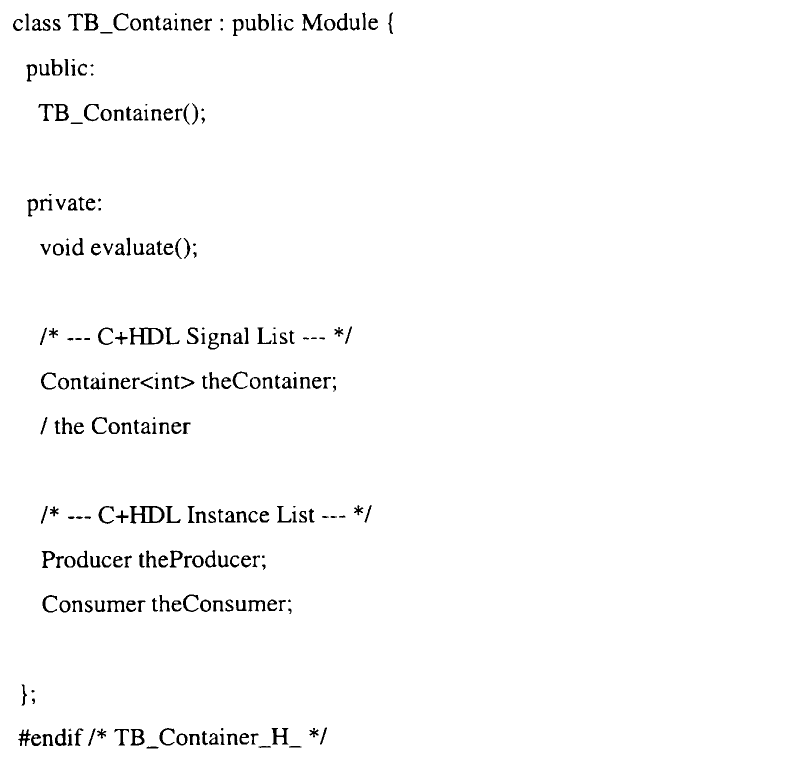

The declaration contains 3 member objects: the Producer, the Consumer, and the Container that is used as communication between the two concurrent processes. 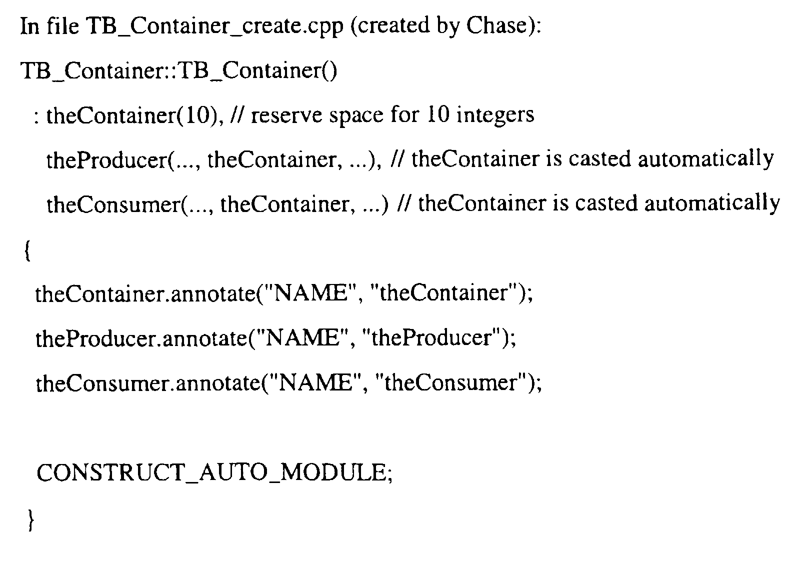 Just like Signals and Queues, Containers are passed by reference. Trying to make a copy of a container results in a compile-time error. The constructors of the classes theProducer and theConsumer are declared below:
Consumer(..., ContainerConsumer<int>& theContainer, ...);
Producer(..., ContainerProducer<int>& theContainer, ...);

The constructor connects the consumer and the producer to Container theContainer. Moreover, it contains the optional annotate() method calls. The lock in the container will be annotated as Containername_ContainerLock and can be traced like any other signal.
The data type of a Container can be any user-defined or built-in type.

### CONTAINER CLASS

### CONTAINER METHODS

The Class Container contains the following public methods:

**Table 6:**

| Container Methods | |
|---|---|
| getSize() | Returns the size of the container |
| getProducer() | Returns the producer container associated with this container |
| getConsumer() | Returns the consumer container associated with this container |
| Annotate("NAME", string) | Gives the name string to the container |

### CONTAINERPRODUCER CLASS

### CONTAINERPRODUCER METHODS

**Table 7:**

| ContainerProducer Methods | |
|---|---|
| getSize() | Returns the size of the container |
| hasLock() | Returns true if the Producer has the lock, false if the Consumer has the lock |
| giveLock() | If the Producer has the lock, this method gives the lock to the Consumer. If the Producer doesn't have the lock, an exception is thrown. |
| operator [n] | Accesses the nth element in the container. If n >= size, or if the Producer doesn't have the lock, an exception is thrown. |

As explained before, operations on the data of the container have immediate effect. The effect of giveLock() is delayed until the next delta cycle. Therefore, the following two code snippets are valid and equivalent: 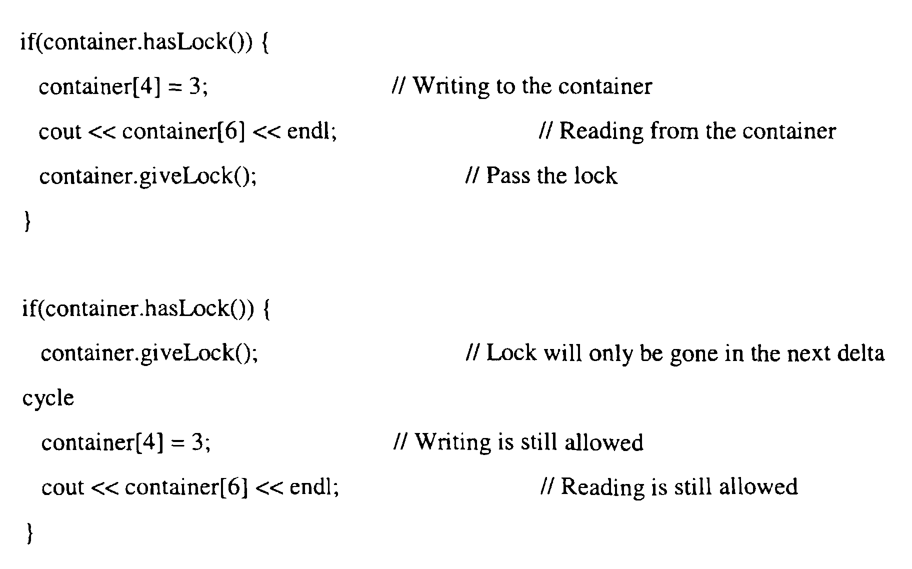 At initialization time, the Producer has the access lock.

### CONTAINERCONSUMER CLASS

### CONTAINERCONSUMER METHODS

ContainerConsumer methods are identical to ContainerProducer methods. The only real difference between a ContainerConsumer and a ContainerProducer is in the start conditions for the lock: after creation, the Producer has the lock.

**Table 8:**

| ContainerConsumer Methods | |
|---|---|
| getSize() | Returns the size of the container |
| hasLock() | Returns true if the Consumer has the lock, false if the Producer has the lock |
| giveLock() | If the Consumer has the lock, this method gives the lock to the Producer. If the Consumer doesn't have the lock, an exception is thrown. |
| operator [n] | Accesses the nth element in the container. If n >= size, or if the Consumer doesn't have the lock, an exception is thrown. |

### BANDWIDTH MONITORING ON CONTAINERS

A container internally uses a RAM (Random Access memory). A RAM is an array with bandwidth monitoring. Writes to the RAM are visible immediately, i.e. the data of the RAM does not have the delayed assignments of Signals. That implies that a RAM per se cannot be used for communication between modules. If the bandwidth of a C-style array within a single module is to be measured, the Ram<Type> class can be used. The constructor takes one argument, the size of the RAM. Annotation methods to give the RAM a name and to put the RAM in a bandwidth monitoring are provided:
SomeRam.annotate("NAME", "SomeRam");
SomeRam.annotate("MONITOR", aMonitorGroup);

### DATA TYPES

The simulation system in accordance with an embodiment of the present invention is derived from the C++ type system. It consists of basic language-defined types, user-defined types and types that can be derived from the basic and class types. Class types can also have operations and conversions defined for them, thus allowing classes to be used as consistent extensions of the predefined type system.

### STANDARD NUMERIC TYPES

Since the simulation environment is derived from C++, it has both integer and floating point numeric types. The standard integer types are char, short, int and long. Each type can represent at least the same range of values as the previous type on the list, so each can be thought of as larger than or equal in size to the preceding type. The integer types come in both signed and unsigned versions. In declarations, signed versions are assumed, unless unsigned is explicitly specified.

Integer values may also be represented symbolically by members of enum lists. If not otherwise initialized, the enum members have successive int values, with the first one having the value 0.
enum { mon, tues, wed, thur, fri, sat, sun };

The floating point types are float, double and long double.

### VHDL-LIKE DATA TYPES

In addition to the standard numeric types, the simulation environment of the present invention provides numeric types that are convenient for describing hardware components. Some of these (vhdl_bit, vhdl_bit_vector, vhdl_unsigned, vhdl_signed), reside in the C++ namespace vhdl. This namespace can be imported as follows:
using namespace vhdl;

The VHDL-like bit types are considered to be an extension to the VSI bit types. Therefore, VHDL-like bit types and VSI-like bit types may be intermixed, as long as length constraints are not violated.
vhdl_bit
A vhdl_bit represents a single bit. It has two possible values, HIGH and LOW. Normal bit operations are supported on this bit type. To use vhdl_bit, you must #include <vhdl_bit.h> and import the vhdl namespace.
#include <vhdl_bit.h>
using namespace vhdl;
vhdl_bit a, b;
a = HIGH;
a &= ∼a | (b ^ HIGH);

A vhdl_bit is initialized with value LOW.
Following operations with vhdl_bits are supported:

**Table 9:**

| vhdl_bit Operations | |
|---|---|
| a == b | Returns bool true if a equals b |
| a != b | Returns bool true if a differs from b |
| a \| b | Returns a vhdl_bit that represents (a or b) |
| a & b | Returns a vhdl_bit that represents (a and b) |
| a ^ b | Returns a vhdl_bit that represents (a xor b) |
| ∼a | Returns a vhdl_bit that is the complement of a |
| a \|= b | Equivalent to a = a \| b |
| a &= b | Equivalent to a = a & b |
| a ^= b | Equivalent to a = a ^ b |
| strm << a | Saves a vhdl_bit into a stream |
| strm >> a | Reads a vhdl_bit from a stream |

A vhdl_bit_vector mimics bit_vector from vhdl. The two parameters, left and right, represent the range of the vector, and must be arbitrary positive numbers. The range may be ascending or descending.
Example:

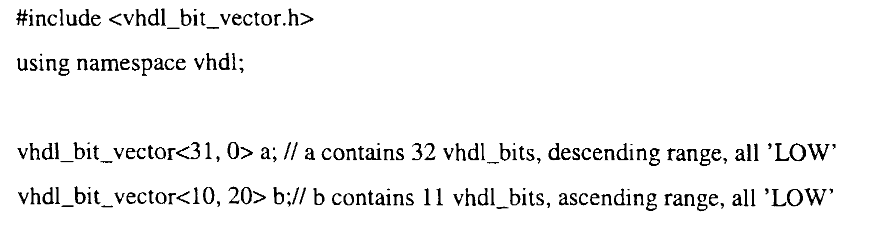

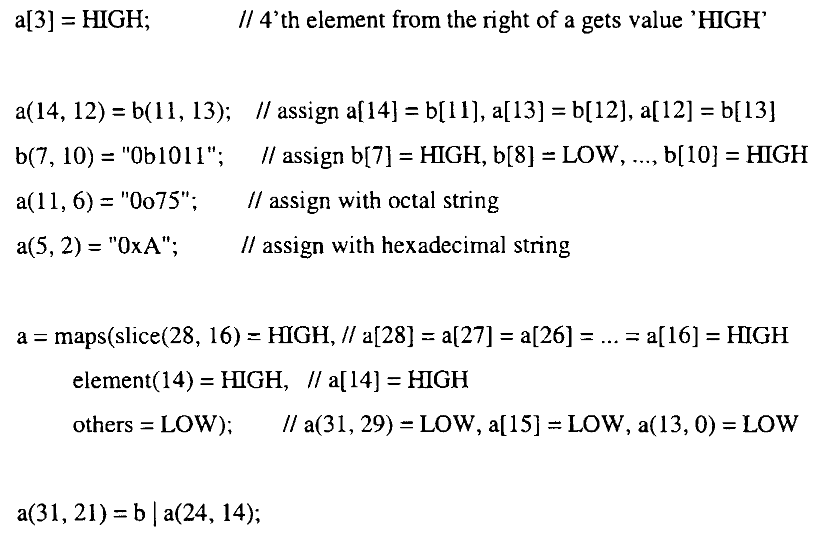

At construction, a bit_vector is initialized with all elements LOW. In strings, which may be used as bit_vectors, you may insert underscores (_) at any point to enhance readability.
All operations can be performed on either the whole vector or either a slice of it. Bitwise operations require that the operands have the same length (but not necessarily the same range direction), and a bit_vector of the same length will be returned. A runtime error will occur if one of these requirements is not met.
A summary of operations is:

**Table 10:**

| vhdl_bit_vector Operators | |
|---|---|
| a == b | Returns bool true if a is bitwise equal to b |
| a != b | Returns bool true if a is bitwise not equal to b |
| a \| b | Returns a vhdl_bit_vector that represents bitwise a or b |
| a & b | Returns a vhdl_bit_vector that represents bitwise a and b |
| a ^ b | Returns a vhdl_bit_vector that represents bitwise a xor b |
| ∼a | Returns a vhdl_bit_vector that represents the bitwise complement of a |
| a << n | Returns a vhdl_bit_vector that represents a left shift over n positions of a. n must be a positive integer smaller than the length of a. LOW's are inserted at the right side. |
| a >> n | Returns a vhdl_bit_vector that represents a right shift over n positions of a. n must be a positive integer smaller than the length of a. LOW's are inserted at the left side. |
| a \|= b | Equivalent to a = a \| b |
| a &= b | Equivalent to a = a & b |
| a ^= b | Equivalent to a = a ^ b |
| a <<= n | Equivalent to a = a << n |
| a >>= | Equivalent to a = a >> n |
| strm << a | Prints the value of a on the stream |
| strm >> a | Reads the value of a from the stream |
| a = b[n] | a is a vhdl_bit that receives the value of the bit at position n in b n must be within the range of b. |
| a[n] = b | The value of the bit at position n in b is set to the value of vhdl_bit b. n must be within the range of b. |
| a = b(n, m) | vhdl_bit_vector a gets the value of the slice [n,m] of b. The range (n, m) must be a valid subrange of b, i.e. within the limits of the range of b, and using the same ordering (ascending/descending). |
| a(n, m) = b | The slice [n,m] of a gets the value of b. The range (n, m) must be a valid subrange of b, i.e. within the limits of the range of b, and using the same ordering (ascending/descending). |
| a && b | Returns a vhdl_bit_vector that is the concatenation of a and b. |
| a.size() | Returns the number of bits in a. |
| a.left() | Returns the index of the leftmost bit. |
| a.right() | Returns the index of the rightmost bit. |
| a.low() | Returns min(a.left(), a.right()). |
| a.high() | Returns max(a.left(), a.right()). |
| a = maps(...) | Assigns a by mapping values to individual bits. The mappings are a comma separated lists of : - slice(m, n) = c - element(k) = b - others = b with b a vhdl_bit, and c either a vhdl_bit or a vhdl_bit_vector with exactly as many elements as in the slice. The mapping 'others' must be the last mapping in the list and assigns b to the bits that were not yet included in the mapping. |

A vhdl_unsigned mimics the bit_vector based unsigned type from vhdl. A vhdl_unsigned inherits vhdl_bit_vector and all of its functionality. Therefore these features will not be repeated here.

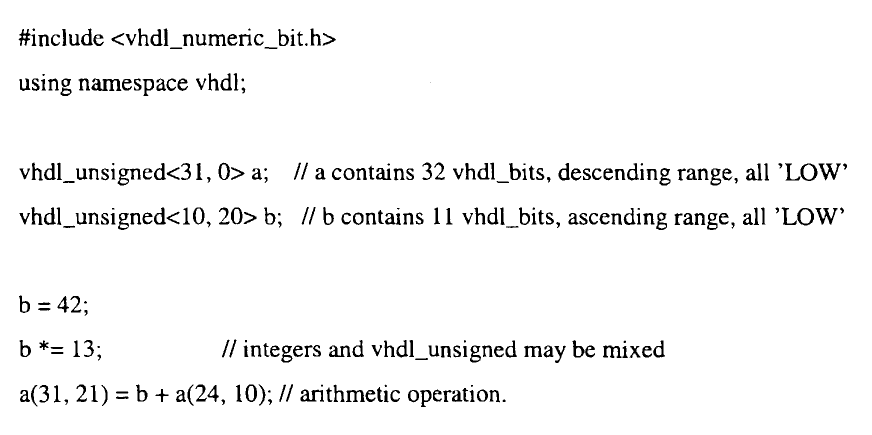

At construction, a vhdl_unsigned is initialized to 0. In strings, which may be used as vhdl_unsigneds, underscores (_) may be inserted at any point to enhance readability. All operations can be performed on either the whole vector or a slice of it. Unlike for bitwise operations, for arithmetic operations it is not required that both operands be the same size. However, the length of the returntype depends on the lengths of the operands, and the kind of operation.
Following is a summary of vhdl_unsigned specific operations (for the vhdl_bit_vector operations, see documentation of vhdl_bit_vector):

**Table 11:**

| vhdl_unsigned Operators | |
|---|---|
| a < b | Returns a boolean that is true if a < b |
| a <= b | Returns a boolean that is true if a <= b |
| a > b | Returns a boolean that is true if a > b |
| a >= b | Returns a boolean that is true if a >= b |
| a + b | Returns a vhdl_unsigned that represents a + b. The length of the returntype is max(a.size(), b.size()). |
| a - b | Returns a vhdl_unsigned that represents a - b. The length of the returntype is max(a.size(), b.size()). |
| a * b | Returns a vhdl_unsigned that represents a * b. The length of the returntype is a.size() + b.size(). |
| a / b | Returns a vhdl_unsigned that represents a / b. The length of the returntype is a.size(). |
| a += b | Adds b to a. Note that this is not entirely equivalent to a = a + b, when b.size() > a.size(). |
| a -= b | Subtracts b from a. Note that this is not entirely equivalent to a = a - b, when b.size() > a.size(). |
| a *= b | Multiplies a with b. Note that this is not entirely equivalent to a = a*b, as a = a*b is in general illegal because of incompatible sizes. |
| a /= b | Equivalent to a = a/b |
| a++ | Equivalent to a = a+1. If used as an expression, the value of a is returned before incrementing. |
| ++a | Equivalent to a = a+1; If used as an expression, the value of a is returned after incrementing. |
| a-- | Equivalent to a = a-1. If used as an expression, the value of a is returned before decrementing. |
| --a | Equivalent to a = a-1; If used as an expression, the value of a is returned after decrementing. |
| rem(a, b) | Returns the remainder of a divided by b. The returntype has the same size as a. |
| mod(a, b) | Returns a modulo b. The returntype has the same size as a. |
| a.to_unsigned_int() | Returns the unsigned int representation of a. |
| a.to_unsigned_long() | Returns the unsigned long representation of a. |

A vhdl_ulogic is a multivalued bit that can have 9 possible values: HIGH, LOW, U (uninitialized), Z (high impedance), X (short circuit, smoke), H (weakly pulled up), L (weakly pulled down), W (weekly short circuited), DC (don't care). These states match the states of the VHDL IEEE type std_logic. Normal bit operations are supported on this bit type and have the same behavior as in VHDL. To use vhdl_ulogic, #include <vhdl_logic_1164.h> is required followed by importing the vhdl namespace.
#include <vhdl_logic_1164.h>
using namespace vhdl;
vhdl_ulogic a, b;
a = HIGH;
a &= ∼a | (b ^ HIGH);

A vhdl_ulogic is initialized with the uninitialized value U.
The operations supported by a vhdl_ulogic are identical to those supported by a vhdl_bit.

The vhdl_logic type is the resolved type that goes with vhdl_ulogic: they are identical, except that a Signal<vhdl_logic> will allow for multiple drivers and apply resolution to the result, where a Signal<vhdl_ulogic> will not allow for multiple drivers.
This type is also defined in the header file vhdl_logic_1644.h
Wrap<T, nrbits>, Sat<T, nrbits>
Numeric values of type T, with overflow mechanism.
VSI Data Types
The system level development working group of the Virtual Socket Interface Alliance (SLD DWG of VSIA) is currently creating a set of standards for data of type bit, bitvector, signed and unsigned.

The VSI bit types reside in the C++ namespace vsi. This namespace can be imported as follows:
using namespace vsi;

The VHDL-like bit types are considered to be an extension to the VSI bit. Therefore, VHDL-like bit types and VSI-like bit types may be intermixed, as long as length constraints are not violated.
vsi_bit
vsi_bit is the recommended way to represent data of type bit. A vsi_bit is identical to a vhdl_bit.
vsi_bitvector<length>
vsi_bitvectors are the recommended way to represent arrays of bits. A vsi_bitvector is a special case of vhdl_bit_vector: vsi_bit_vector<7> is equivalent to vhdl_bit_vector<6, 0>. When using vsi_bit_vectors, a user can verify that he is using only VSI-compliant features by providing the switch -DVSI_COMPLIANT. Various operators are defined for vsi_bitvector data types:

**Table 12:**

| vsi_bitvector Operators | |
|---|---|
| a == b | Returns bool true if a is bitwise equal to b |
| a != b | Returns bool true if a is bitwise not equal to b |
| a \| b | Returns a vsi_bitvector that represents bitwise a or b |
| a & b | Returns a vsi_bitvector that represents bitwise a and b |
| a ^ b | Returns a vsi_bitvector that represents bitwise a xor b |
| ∼a | Returns a vsi_bitvector that represents the bitwise complement of a |
| a << n | Returns a vsi_bitvector that represents a left shift over n positions of a. n must be a positive integer smaller than the length of a. LOW's are inserted at the right side. |
| a >> n | Returns a vsi_bitvector that represents a right shift over n |
| | positions of a. n must be a positive integer smaller than the length of a. LOW's are inserted at the left side. |
| a \|= b | Equivalent to a = a \| b |
| a &= b | Equivalent to a = a & b |
| a ^= b | Equivalent to a = a ^ b |
| a <<= n | Equivalent to a = a « n |
| a >>= n | Equivalent to a = a » n |
| strm << a | Prints the value of a on the stream |
| strm >> a | Reads the value of a from the stream |
| a = b[n] | a is a vsi_bit that receives the value of the bit at position n in b n must be smaller than b.length(). |
| a[n] = b | The value of the bit at position n in b is set to the value of vsi_bit b. n must be smaller than b.length(). |
| a = b(n, m) | vsi_bitvector a gets the value of the slice [n,m] of b. The range (n, m) must be a valid descending subrange of b. |
| a(n, m) = b | The slice [n,m] of a gets the value of b. The range (n, m) must be a valid descending subrange of b. |
| a && b | Returns a vsi_bitvector that is the concatenation of a and b. |
| a.length() | Returns the number of bits in a. |

vsi_unsigned<length>
Similarly to vsi_bitvector<length>, vsi_unsigned<length> is a special case of a vhdl_unsigned<left, right>. vsi_unsigned extends a vsi_bitvector with arithmetic manipulations that interpret the individual bits as an unsigned.
In addition to the functions available for vsi_bitvectors, vsi_unsigneds have following arithmetic operators:

**Table 13:**

| vsi_unsigned Operators | |
|---|---|
| a < b | Returns a boolean that is true if a < b |
| a <= b | Returns a boolean that is true if a <= b |
| a > b | Returns a boolean that is true if a > b |
| a >= b | Returns a boolean that is true if a >= b |
| a + b | Returns a vsi_unsigned that represents a + b. The length of the returntype is max(a.length(), b.length()). |
| a - b | Returns a vsi_unsigned that represents a - b. The length of the returntype is max(a.length(), b.length()). |
| a * b | Returns a vsi_unsigned that represents a * b. The length of the returntype is a.length() + b.length(). |
| a / b | Returns a vsi_unsigned that represents a / b. The length of the returntype is a.length(). |
| a += b | Adds b to a. Note that this is not entirely equivalent to a = a + b, when b.length() > a.length(). |
| a -= b | subtract b from a. Note that this is not entirely equivalent to a = a - b, when b.length() > a.length(). |
| a *= b | Multiplies a with b. Note that this is not entirely equivalent to a = a*b, as a = a*b is in general illegal because of incompatible sizes. |
| a /= b | Equivalent to a = a/b |
| a++ | Equivalent to a = a+1. If used as an expression, the value of a is returned before incrementing. |
| ++a | Equivalent to a = a+1; If used as an expression, the value of a is returned after incrementing. |
| a-- | Equivalent to a = a-1. If used as an expression, the value of a is returned before decrementing |
| --a | Equivalent to a = a-1; If used as an expression, the value of a is returned after decrementing. |
| rem(a, b) | Returns the remainder of a divided by b. The returntype has the same length as a. |
| mod(a, b) | Returns a modulo b. The returntype has the same length as a. |
| a.to_unsigned_int() | Returns the unsigned int representation of a. |
| a.to_unsigned_long() | Returns the unsigned long representation of a. |

### USER DEFINED TYPES

As an extension to the provided types, it is possible to implement additional types. These custom types should be derived from UserType. These types may then be used inside simulation communication concepts such as Signals and Queues.

### ARRAY TYPES

Preferably, the simulation environment provides an array type that cooperates smoothly with Ports, Signals and Queues. In this way, it allows the designer to easily pass arrays of Signals or Queues through the design.
An Array of length 5 of sometype is preferably declared as
Array<sometype, 5> a;

The size may also be omitted in the type, and instead be given in one of the following ways:
- As a constructor argument:
   Array<sometype> a(5);
- By a method call to setSize():
   Array<sometype> a;
   a.setSize(5);
- Implicitly during an assignment of another Array to it:
   Array<sometype> a;
   Array<sometype, 5> b;
   a = b;

Once an Array object has a size, it cannot change, and an attempt to change it will generate a run-time error.
The size of an array can be requested using the size() method.
The Array class imposes three assumptions on the type that it contains: it has to have a default constructor, an assignment operator, and a comparison operator.
One element of an array can be accessed using indexing (e.g. a[i]). The elements in an array are assumed to be stored from 'right' to 'left', so element 0 is the rightmost. This is only important when taking an alias of an array. When an array is assigned to another array, the elements are copied (unlike when assigning two C-style arrays, where an alias is created for the same data).
An alias for a slice of an array may be created: 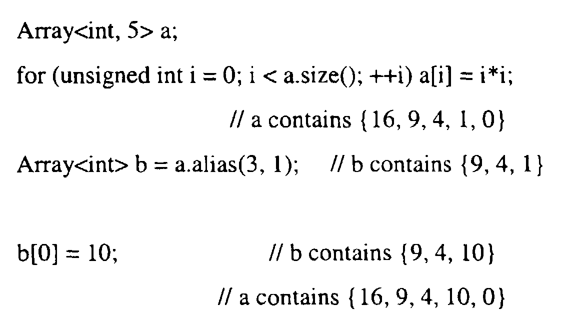 Note that the alias() method expects a descending range, which corresponds to the view of an array stored from 'right' to 'left'.

**Table 14:**

| Array<type> Operators: | |
|---|---|
| a == b | Returns a boolean that is true if a and b have the same length and all elements in a[i] == b[i] for all i. |
| a != b | Is equal to !(a == b). |
| > a = b | Copies all elements from b into a. If a has a size different from the size of b, then an Error is returned |
| a[i] | Returns a reference to the ith element in a. A bounds check is done to validate that i is within the bounds of a, and an error is returned if it is not the case. |
| a.alias(i1, i2) | Returns a new array which is an alias for (a[i1], a[i1-1], ..., a[i2]). |
| a.size() | Returns the number of elements in a. |
| a.setSize(asize) | If a has no size, it is given the size asize, otherwise an error is returned. |
| a && b | Returns a new array by concatenating elements of a and b |

One of the most valuable uses of Array is in conjunction with other simulation concepts in accordance with the present invention. For example, an Array of Signals can be connected to In- and OutPorts of other Modules, as demonstrated in the bits of code below:

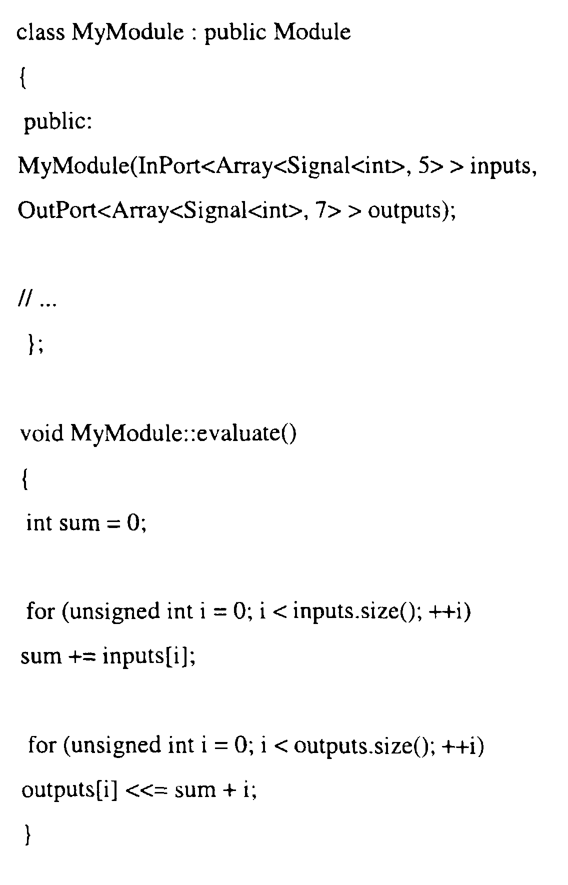

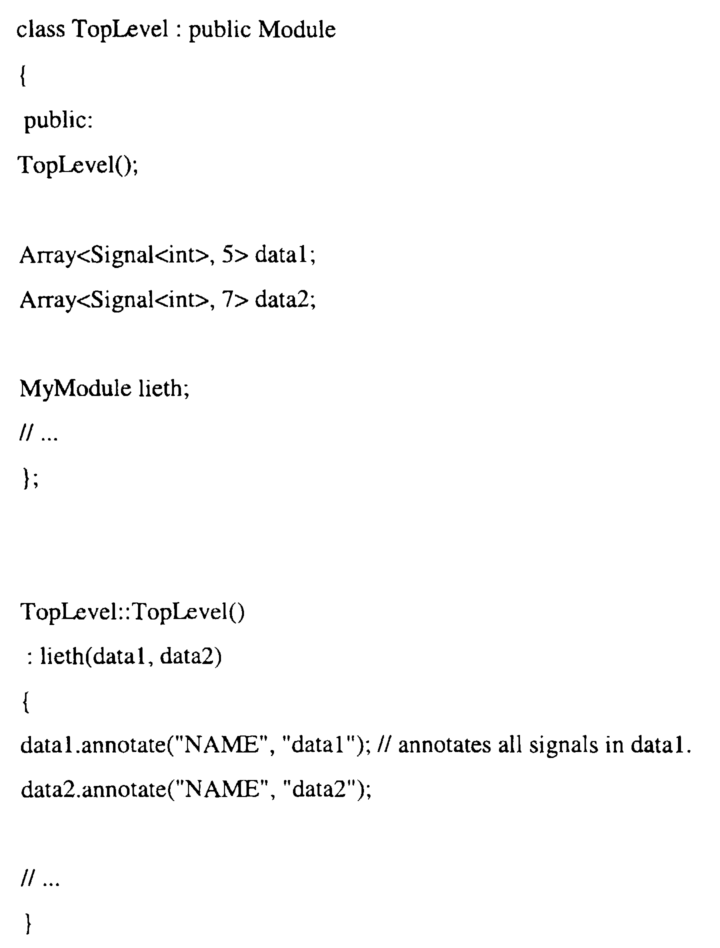

Note that when accessing an element in an InPort<Array<Signal<int> > >, an InPort<Signal<int> > is returned.
The same is true for Queues.
2D and higher dimensional Arrays can be created by nesting Arrays within Arrays. For example, the following defines a 5x4 2D array:
Array<Array<int, 4>, 5> a;

### THE DEVELOPMENT ENVIRONMENT

A development environment in accordance with the present invention may include a makefile generator, a graphical user interface to control the simulations, a debugger and output facilities to inspect the simulation results.
System Level Model development usually proceeds in the following steps:
1. Define components using a graphical tool called chase.
   Chase supports the designer in the definition of the following components:
   × Ports (type, name, direction)
   × Internal signals, queues or containers
   × Instances and how they are connected
   chase effectively hides the details of the constructor from the designer.
2. Write source code that defines the behavior of the components.
3. Compile the source code.
   Descriptions in accordance with the present invention can be compiled by the g++, the GNU C++ compiler. To shield system designers from the details of source code compilation, the simulation environment includes a makefile generator.
4. Run a simulation.
   The simulation environment preferably supports two simulation modes:
   × A command line mode for running simulations in batch mode
   × An interactive mode, via a GUI/debugger
5. Inspect the output result.
   In addition to the standard C/C++ I/O facilities, the simulation environment preferably offers output facilities to inspect the values of signals.

The System Level modeling simulation environment preferably provides a makefile generator. This generates a file, the so-called makefile, that can be used as input to the "make" utility. "make" is a UNIX utility that performs a minimal set of compilation jobs to update object code whenever source code files are modified. The make utility reads a file, called the makefile, that describes the dependencies between the set of files and the actions that must be taken to update a target. Complex systems, involving a large number of files, may require complex makefiles. The manual creation of these makefiles is a tedious and error-prone task.
The Principles of this generator (called cma) are:
Principle 1:
   An object file is derived from a single source file by means of compilation. An object file must be re-created (by means of compilation) if its source file is modified, or if one of the files that is included directly or indirectly by the C preprocessor is modified.
Principle 2:
   To construct the minimal set of source files that are required to build a complete System Model, the generator uses the following rules:
   - The argument given with the invocation of the generator identifies the source file that contains the root of the hierarchical tree of the System Model.
   - For each of the files that is included, directly or indirectly, it is assumed that:
      × The included file can be found in, or below, the directory of the argument's directory. Additional directories can be specified to be included in the search process.
      × The included file (e.g. F.h) can have a corresponding source file (e.g. F.cpp or F.c). The source file is assumed to be located in the same directory as the included file, except when the included file is located in a directory, called "include". In this case, cma will look for the corresponding source file in the directory, called "../src".
      × If a source file is found as described in the previous step, it is processed in the same way as the root. This recursive process continues until no new files are found.
   - For each of the source files, an object file is generated, unless a static library is found that contains the corresponding object file. If present, this library should be located in the same directory as the source, unless the source file is located in a directory called "../src". In this latter case, the library should be located in "../lib". By convention, the name of the static library is "libxyz.a", where "xyz" is the name of the source file, without the extension.

### GRAPHICAL USER INTERFACE

Preferably, running System Level simulations can be done in two modes:
- Command line mode, for running simulations in batch mode
- Interactive mode, using the GUI/debugger
Calls xgraph to display the signals you selected to monitor

### OUTPUT FACILITIES

The simulation development environment preferably contains hooks to a waveform viewer and a plot facility. The values of signals over time can be traced and plotted as well as bandwidths calculated.

### ARCHITECTURAL EXPLORATION

One of the steps in designing a system is estimating the different needs of the design. Various resources, such as busses, busspeeds, number of processor cores, and the policies how they could be shared, must be chosen. This effort, referred to as architectural exploration, is in time situated in between the behavioral specification of the system, and the refinement toward the implementation on the actual architecture.

The simulation environment according to the present invention allows the designer to explore different architectural options by 'annotating' the behavioral design with architecture choices. An architecture is specified by defining a set of *resources,* assigning *users* to these resources and specifying the *cost of usage* by the particular user.
A **resource** is typically an architectural hardware component, such as a bus or a processor core. The simulation environment however deals with different kind of resources in the same way, and the flavor of the resource will implicitly be inferred by how it is used. For example, a resource which is allocated to a process will act like a processor core. Or a resource which is allocated to a signal or queue will act like a bus.
A **user** for a resource can be any concept described above. It is the user who will do requests to use the resource and will spend some time using it before releasing the resource. Some concepts, such as signals and queues and processes, are resource-aware: they already know how to use a resource. They will do this implicitly and this makes it convenient for the designer to rapidly specify architectures. Furthermore, the designer can also specify other usages for a resource, but will then have to deal with the particular resource manually.
The **cost of usage** is time. There probably are other costs of a resource, such as area or power or component cost, but this is not simulated in the simulation environment according to the present invention since this simulates the time behavior.

### Basic concept: a shared resource

In the simulation environment according to the present invention, the designer can create shared resources, and annotate the system-level model to use these resources. A **shared resource** is a resource which is possibly shared between multiple users, and can track how the different users spend it.
The resource has a scheduling policy and dynamically allocates the resource to one (or more) users that are requesting this resource.
There are three quite different situations in which shared resources can be used to explore and simulate architectural possibilities:
- a resource can be critical to a *Process:* for the Process **to execute**, it has to have access to the Resource. This is an abstraction of a software thread running on a microprocessor: whenever the software is executing, it is spending cycles of the microprocessor.
- a resource can be needed in order **to perform communication**, and is therefore associated with communication primitives *(Signal* and *Queue).* This is the abstraction of a bus which is shared for several communication purposes, for example a system bus used for communication between several software- and/or hardware components.
- a shared resource can be needed to perform an operation which is not related to one of the above cases. In this case, Resources must be request and releases directly.

### Scheduling policies

With each Resource a scheduling policy must be chosen. This is done by choosing one out of many Resource types. Built-in, some common scheduling policies are readily available. However it is also possible to create your own custom scheduling algorithm to be used during simulation.
All resources can optionally be given a timeloss which represents the scheduling overhead: this is the minimum amount of time that the resource cannot be used, in between two consecutive usages.

### Built-in resource types

### FCFSResource

An FCFSResource is a Resource with First Come First Serve scheduling policy. This resource can be allocated by only one user at a time, and the allocation is done in the same order as the requests are done. When two users ask the resource at the same time (and within the same delta-cycle), then the order of allocation is deterministically solved based on a fixed priority.
An FCFSResource can be instantiated by giving it a name and an overhead, for example:
FCFSResource MicroCorel("MicroCorel", 100);
   instantiates an FCFSResource MicroCorel with a scheduling timeloss of 100 time-units.
   If there is a possibility that 2 users can be requesting it at the same time, then a fixed prioritymechanism will solve this, based on the order of 'addUser' calls which must be done before the simulation starts.
MicroCore1.addUser(User1); // User1 gets a higher priority
MicroCore1.addUser(User2); // User2 gets a lower priority

### RRResource

An RRResource implements a Round Robin scheduling algorithm. This resource will be allocated to requesting users by iterating over a circular list and allocating it to the next requester in this list. The order of the list is based on the order of 'addUser' calls which must be done before the first usage.
RRResource MicroCore2("MicroCore2", 0);
instantiaties an RRResource MicroCore2 which has no scheduling timeloss.

### Creating user-defined types of resources with custom scheduling policies.

Using the natural capabilities of C++, it is possible to implement a new kind of Scheduling Policy. Therefore you must create a new type which inherits AbstractSingleResource. The custom Scheduling policy is then specified by overriding 2 abstract virtual methods:
virtual void addRequest(const ResourceUser& asker)

This method should record the fact that *asker* has made a request to the resource.
virtual bool giveScheduledUser(ResourceUser& result)

This method is called when the resource is ready to be allocated to a user. If you want a user (who has made a request) to allocate this resource, you should assign that user to result and return true. If you do not want to allocate a user to the resource, you simply return false.

The ResourceUser type has one public method (other information is only used internally), which gives the user.
BaseClass *ResourceUser::user();

Signals, Queues, Modules and Processes are all special kinds of BaseClasses and are therefore possible Resource users.

To illustrate how to define user defined resource types, consider the next example of a simple FCFSResource which does not take into account that multiple users can be requesting at the same time:

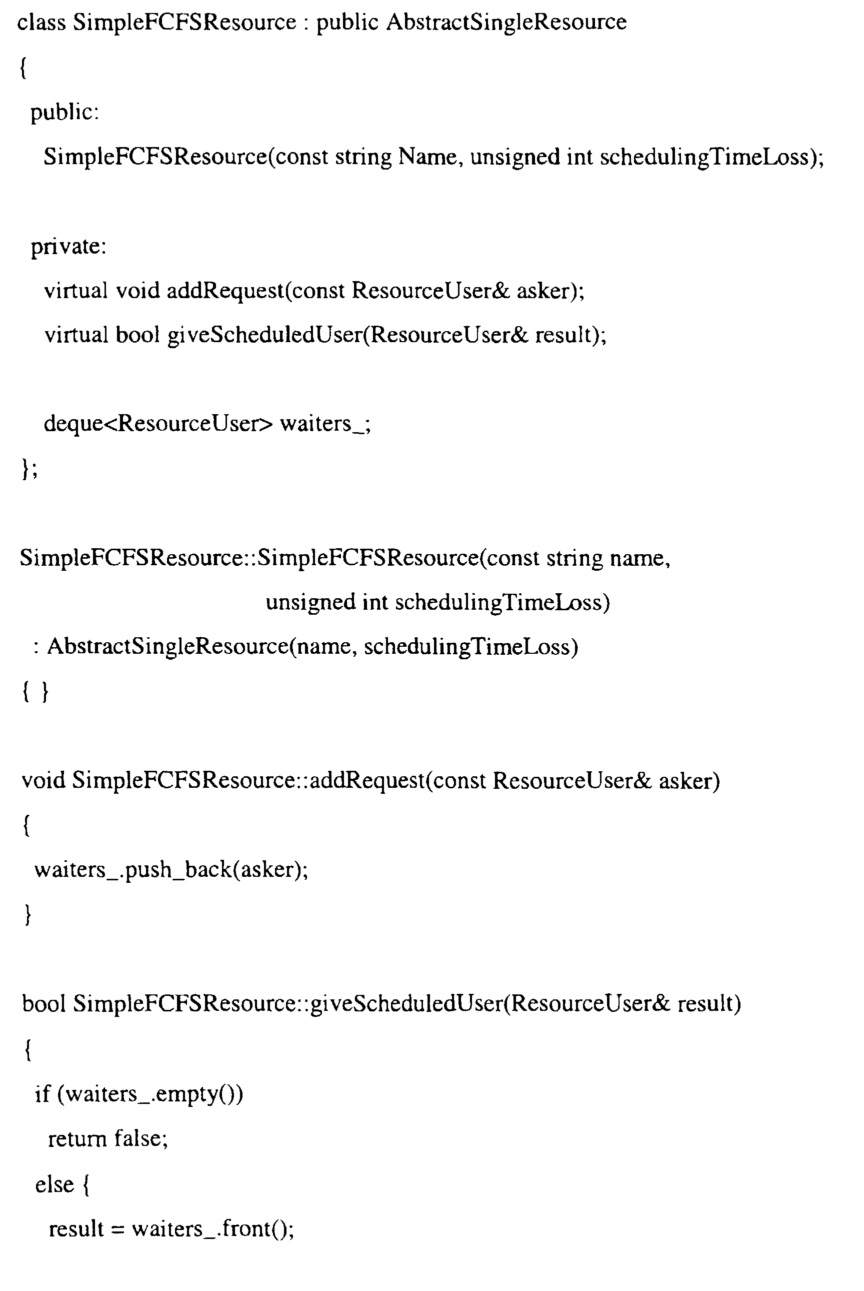

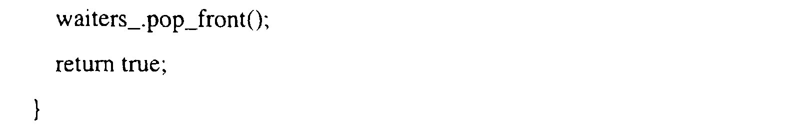

This resource uses an STL deque (part of the C++ Standard Library) to store the requests. Requests are pushed at the back, and scheduling happens by popping requests from the front.

### Evaluating resource usage: creating a Gantt plot.

When opening a design which uses resources in a GUI, the structure window will also display these resources, where they can be selected for plotting. During simulation, information about resource requests and allocation will be dumped to a so- called Gantt file. By selecting view->Gantt plot, a program for viewing these Gantt files called 'GanttPlot' will show the information stored in this file, and also statistics of resource usage.

### Assigning a Resource to a Process (or Module).

When assigning a Resource to a Threaded Process1, we express that the Process needs to be allocated on the Resource in order to execute. Also, during execution of the Process, some Resource time will be spent. This is an abstract model of a software thread running on a microprocessor: in order to execute instructions, the OS needs to allocate the thread on the microprocessor, and during execution clockticks will be used.

The following example will illustrate how to annotate a high-level behavioral model to use a resource in this way.

We would like to annotate the following threaded process which waits on a buffer to be filled, and then performs a complex calculation like an FFT on the data.

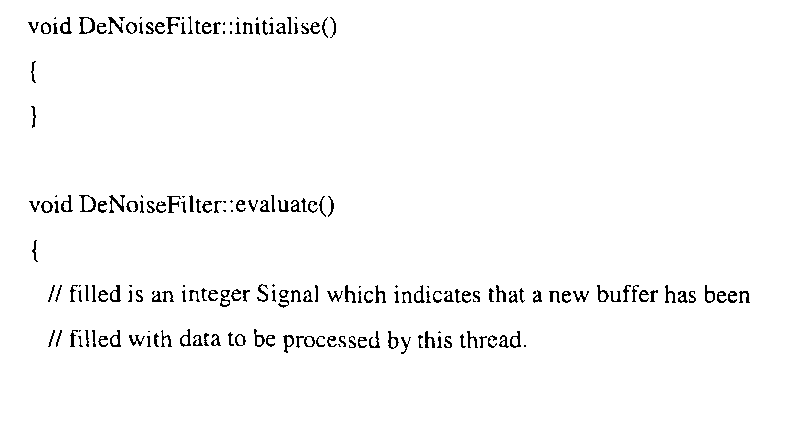

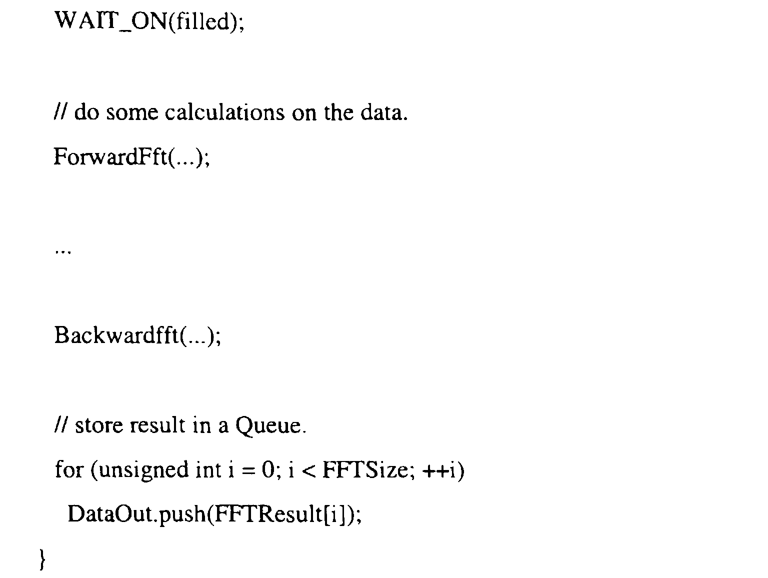

First we have to create a shared resource MicroCore 1:
FCFSResource MicroCore 1 ("MicroCore1", 10);

Next, during initialisation, we assign the resource to our Module:

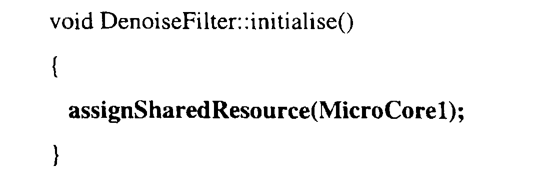

Finally, we have to indicate that execution costs cycles, and thus time. Therefore, we can at any point in the source code, do calls to SpendResource(int amount):

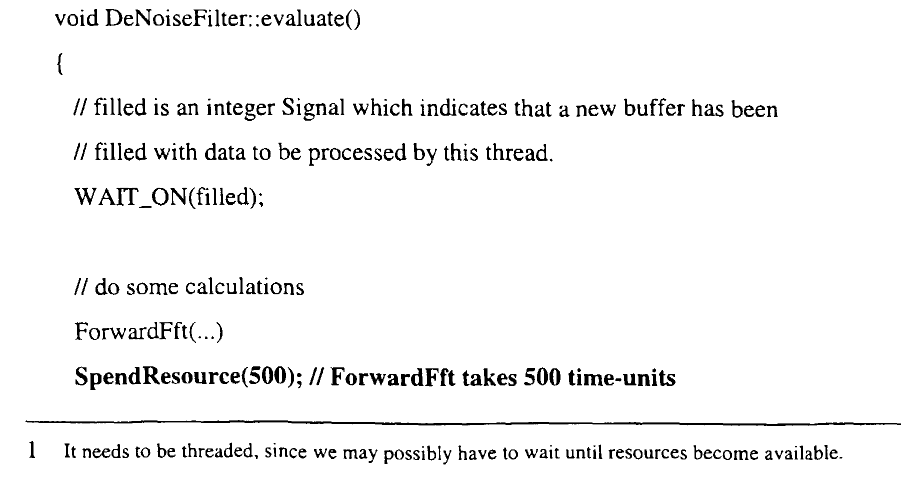

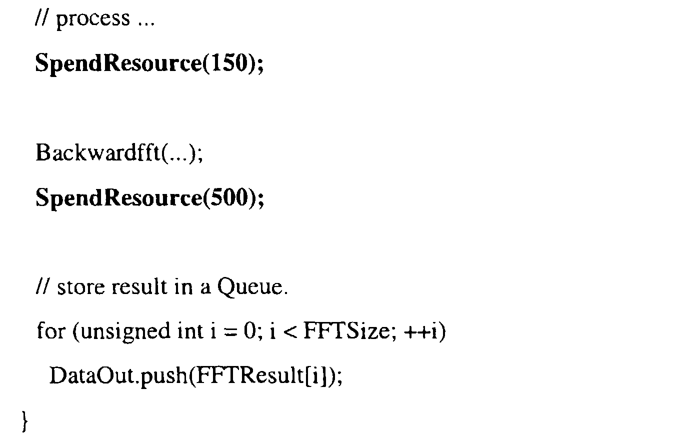

The order, and the individual amounts and positions of all the SpendResource calls, in between two WAIT statements are not important, only the total amount (int this example 1150) is taken into account.

The modifications have following implications:
the critical resource is grabbed by the kernel before calling evaluate().

At each WAIT statement following events happen:
The process suspends and the resource is held for the total amount of time spent (by doing spendResource() calls) since the last WAIT (or since the very start if it is the first time the process suspends on a WAIT).

All communication through Signals and Queues which was scheduled during the execution is delayed until after this resource has been released.

The resource is released
Signal- and Queue assignments are propagated now and the process suspends until the WAIT condition becomes satisfied, which is in fact the behavior as if there was no resource assigned to this process.

The process requests the resource and proceeds as soon as the resource has been allocated to this process.

Note that the WAIT statements are the only places where resources are released: the scheduling is not preemptive.

This set of rules guarantees that, if the timing specifications are met, the simulation will have the same behavior after resource annotation as before (except for timing).

Moreover, these rules are the same as what is being done when simulating the process on a real ISS (see ISS integration kit), which allows the designer to easily switch between these different levels of timing-accuracy.

### Assigning a resource to a Signal or Queue.

Assigning a resource to a Signal or Queue is the abstract equivalent for creating a bus which is shared between multiple Signals and/or Queues. Thus, we simulate that operations2 on these communication concepts are in fact transactions on a bus, and that they consume time. For Signals it is the assignment that will consume time, and for Queues it is the push.

Consider an example of a small high level Module which will store data samples in a set of memory buffers and indicate when a buffer is full.

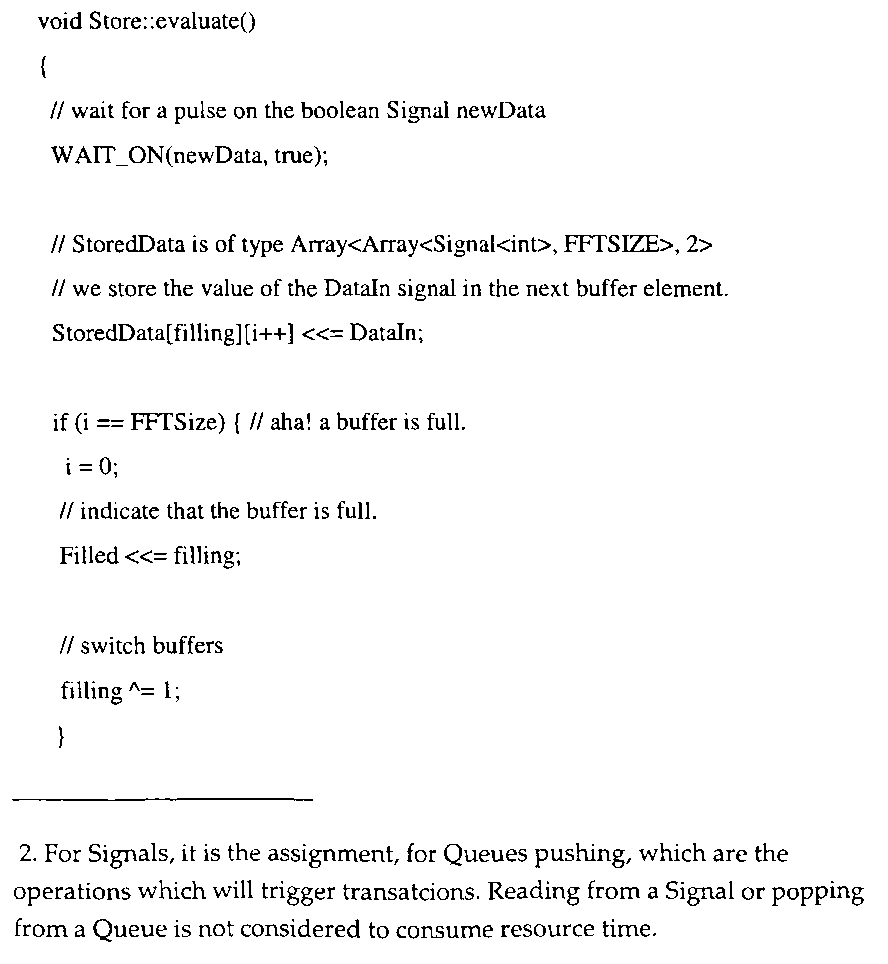

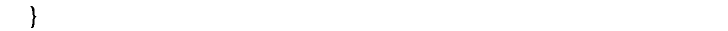

In this example, filling is a variable which toggles between the values 0 and 1 to select one of two buffers. While one buffer is being processed by another Module, the other buffer is being filled by this Module.

Now suppose we want to model the system bus to the memory, in which the buffers are stored. So, amongst a number of other users, StoredData will be a user of this bus.

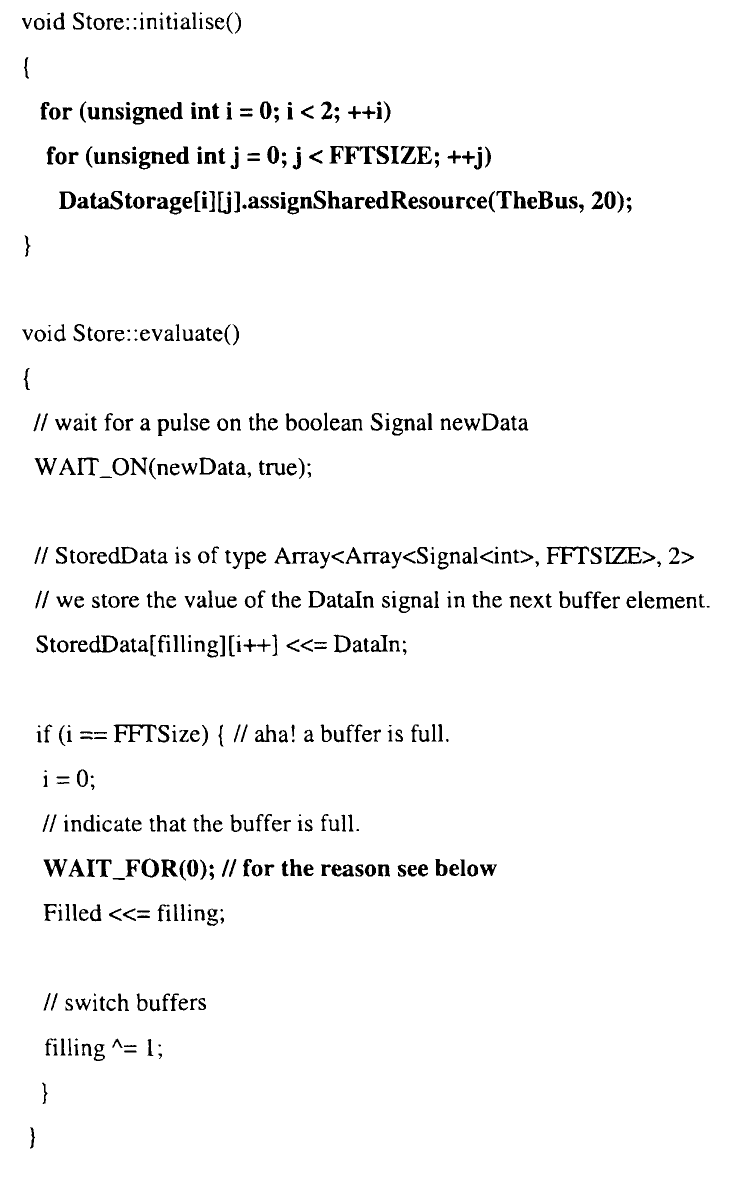

The assignSharedResource calls, which are methods of the Signal (and Queue) objects, indicate that these objects shall use the given Resource for the specified amount of time.

This will implicate that:
Assignment statements still do not consume any time during the execution phase, and the normal semantics for Signal assignments or Queue pushes apply: the actual propagation is delayed until during the propagation phase.

During signal propagation, for every Signal (or Queue) which has a shared resource assigned to it, following actions are taken in the given order (note the numbering should start from 1, but frame maker is giving me a hard time):
the Process or Module which caused these assignments is suspended.
the shared resource is requested.
the shared resource is occupied for the amount of time as specified during the assignSharedResource statement.
the resource is released and the Signal or Queue involved propagates its value.

After all signals have been propagated, the Process may resume:
a threaded process will proceed with its WAIT statement, by continuing as soon as the condition becomes satisfied.
an Automatically evaluated process will react again on changes in its sensitivity list.

This set of rules guarantees that the behavior of the process execution is not different from the behavior without resources, at least if we take into account that not all signal updates are equally fast.

Consider for example two signals which are assigned new values during the same delta cycle, but of which only one requires a transaction on a bus, as in the example above (StoredData and Filled). We have to make sure that the signal to indicate that the buffer has been filled does not propagate before the bus assignment has actually been executed. Therefore, we have the extra WAIT_FOR(0) statement, which will cause this bus assignment to be propagated before we signal that the new buffer is filled. The WAIT_FOR(0) statement may thus suspend the process for more that 0 seconds to do these bus transactions!

### Using resources manually.

Resources may also be used manually to simulate user defined resource usage.

Therefore a resource has 2 methods:
void Resource::grab(BaseClass ∗user = 0);

This call we request the given resource, and suspend until the resource is allocated. Since this will suspend the calling Process, this Process must be a threaded Process. The optional argument may be used to specify more exactly who is going to use this Resource, and if it is not given, the Process will be assumed to be the user.
void Resource::release(unsigned int period);

This call, which may only be called after a grab, specifies that the Resource will be released after the given amount of time. It will suspend the calling process for the given amount of time.

### Co-simulation with a hardware description language

In the following the simulation model of the present invention will be described as by the name "Csim" to distinguish from hardware description languages. The present invention has some similarities with a hardware description language such as VHDL it has a natural co-simulation interface with existing VHDL simulators. These basic concepts are:
- The building of hierarchy through recursive instantiations of modules in CSim and entities in VHDL.
- A delta-cycle engine which allows for a deterministic simulation of simultaneous events.
- Signals which are delta-cycle aware communication channels to interconnect modules through ports.
- Support for hardware oriented bit types which can be used in these communication channels.

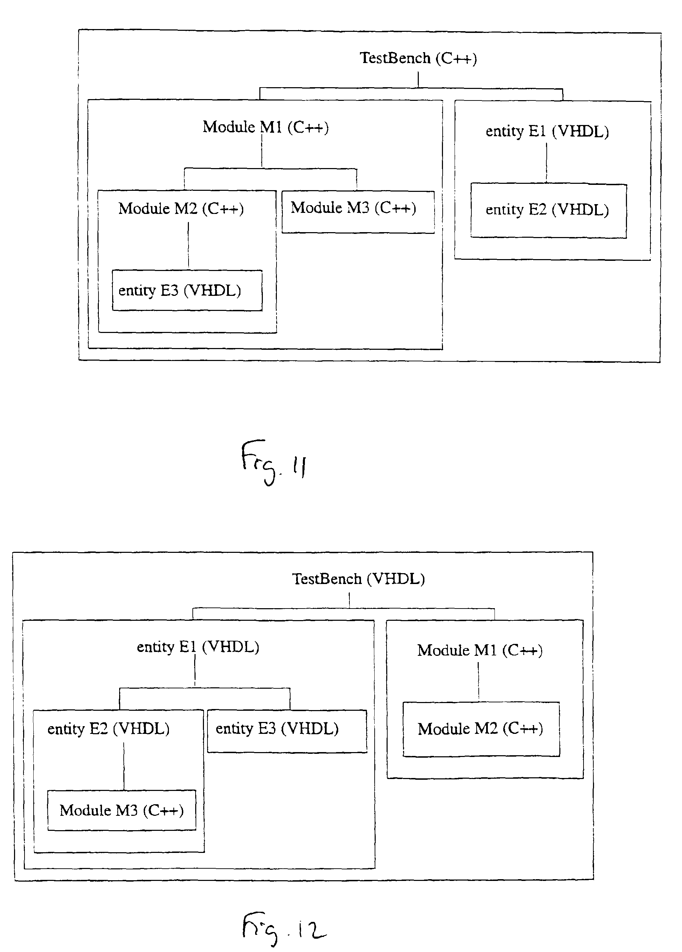

Moreover, VHDL simulators allow for this kind of integration through their PLI's. This allows a VHDL-CSim Co-simulation to happen in exactly the same way as if there is only one simulator which understands both VHDL and CSim. This means that the Execute-Propagate loops are merged as if there is only one execute and one propagate phase which combines both the C++ and VHDL execute and propagate phases. Fig. 10 clarifies the situation.

The arrows in the Co-Sim Propagation phase between CSim and VHDL propagation represent propagation of value changes between VHDL and CSim within the same Co-Sim propagation phase. It is this communication that assures that moving a module from VHDL to CSim or the other way around will not change the simulation, not even at the delta-cycle level.

There is one exception, however: the existing implementation does not support resolved signals fully: a CSim signal will not create a new driver on a VHDL resolved signal. When transferring a value from CSim to VHDL, the value is "forced" on the VHDL signal and resolution is bypassed. The other way around, that is, driving a resolved signal in CSim from VHDL will work for the normal resolution functions. Two Views on Co-simulation.

There are two ways in which co-simulation can be used, which are each others dual. each are embodiments of the present invention. One of the first decisions to make is how to organize co-simulation according to one of these two views.

### EXTERNAL VHDL IMPLEMENTATION OF ONE OR MORE CSIM MODULES.

In this view a CSim design or verification environment is provided where one or more entities can be plugged in that are implemented in VHDL.
In this situation CSim contains the top level module (the testbench), while the VHDL part of your design consists of some largely decoupled entities. Fig. 11 depicts this situation.
In this situation the C++ TestBench contains two Modules:
- M1 is a CSim Module. M1 further contains 2 C++ Modules of which one (M2) contains a VHDL entity E3.
- E1 is a VHDL entity, which contains another VHDL entity E2.
There is one important constraint in this situation: a VHDL entity cannot hierarchically contain foreign CSim Modules (this means that the two views cannot be mixed in one simulation). Entity E2 for example could not be a CSim Module.

In CSim, which contains the testbench of the design, a foreign Module must be instantiated for each VHDL entity that is instantiated within a CSim Module. For the previous example this is thus for E1 and E3. This foreign module must contain CSim equivalents for the ports in the VHDL entity, and these ports must have the same name. Moreover the CSim Module name must match the VHDL entity name. This Module is then instantiated in the CSim design instead of the VHDL Component, and with the correct port connections. A foreign Module is a conventional CSim Module, except that:
- It contains the function call ExternImplementation(); in the constructor (or initialise() method) and
- The evaluate() is empty, or at least it will never be called.
- It has only signal ports with data types that are supported by the co-simulation implementation (see further).

In VHDL a stub testbench is created, since the CSim code contains the actual top level testbench. There are three options now:
1. The VHDL testbench mimics the hierarchical structure of the C++ testbench, and instantiates the implementation of the foreign VHDL entities at the same hierarchical place and with the same label as the instantiation name in CSim. For example foreign VHDL entity "Bar" with CSim pathname "/Calvin/Hobbes/Bar" is located in VHDL as "/Calvin/Hobbes/Bar".
2. The foreign VHDL entities are put directly in the testbench with the same label as the instantiation name in CSim. So, foreign VHDL entity "Bar" with CSim pathname "/Calvin/Hobbes/Bar" is located in VHDL as "/Bar"
3. There is a compromise between the two previous methods to avoid name clashes since, for example, CSim modules with the pathnames "/Calvin/Hobbes_0/Bar" and "/Calvin/Hobbes_1/Bar" cannot both be put in the testbench with label "Bar". The functionality of both can be instantiated in VHDL as "/Hobbes_0/Bar" and "/Hobbes_1/Bar".
On startup CSim will try to locate the foreign VHDL implementation of a CSim Module with path "/Calvin/Hobbes/Bar" by looking for a VHDL module "/Calvin/Hobbes/Bar". If this is unsuccessful, the leading names in the pathname will be stripped until the entity is located. So, "/Hobbes/Bar" is considered and finally "/Bar".

### EXTERNAL CSIM IMPLEMENTATION OF ONE OR MORE VHDL MODULES.

In this view a hardware description in a VHDL design or verification environment is provided into which one or more modules that are implemented in C++ are to be plugged in. In this situation VHDL contains the top level entity (the testbench), while the CSim part of the design consists of some largely decoupled modules. This is the other way around from the previous view, and therefore the following is very analogous to the previous description. Fig. 12 depicts the situation. In this situation the VHDL TestBench contains two components:
- E1 is a VHDL entity. E1 further contains 2 VHDL components of which one (E2) contains a CSim Module M3.
- M1 is a CSim module, which contains another CSim module M2.
There is one important constraint in this situation: a C++ Module cannot hierarchically contain foreign VHDL entities (this means that the two views cannot be mixed in one simulation). Module M2 for example could not be a VHDL entity.

In VHDL, which contains the testbench of the design, an entity must be instantiated for each VHDL entity that is instantiated within a CSim Module. For the previous example this is thus for M1 and M3. This foreign entity must contain VHDL equivalents for the ports in the CSim Module, and these ports must have the same name. Moreover the VHDL entity name must match the CSim Module name. This entity is then instantiated in the VHDL design instead of the CSim Module, and with the correct port connections. The entity has a foreign architecture attribute (of which the actual syntax depends on the brand of the VHDL simulator, see further)

In CSim a stub testbench is created, since the VHDL code contains the actual top level testbench. There are three options now:
1. The CSim testbench mimics the hierarchical structure of the VHDL testbench, and instantiates the implementation of the foreign CSim Modules at the same hierarchical place and with the same name as the component instantiation label in VHDL. For example foreign CSim Module "Bar" with VHDL pathname "/Calvin/Hobbes/Bar" is located in CSim as "/Calvin/Hobbes/Bar".
2. The foreign CSim Modules are put directly in the testbench with the same instantiation name as the component instantiation label in VHDL. So, foreign CSim Module "Bar" with VHDL pathname "/Calvin/Hobbes/Bar" is located in CSim as "/Bar".
3. A compromise between the two previous methods to avoid name clashes since VHDL modules with pathname "/Calvin/Hobbes_0/Bar" and "/Calvin/Hobbes_1/Bar" cannot both be put in the testbench with instantiation name "Bar", but can be instantiated in CSim as "/Hobbes_0/Bar" and "/Hobbes_1/Bar".
On startup CSim will try to locate the foreign CSim implementation of a VHDL entity with path "/Calvin/Hobbes/Bar" by looking for a CSim module "/Calvin/Hobbes/Bar".
If this is unsuccessful, the leading names in the pathname will be stripped until the entity is located. So, "/Hobbes/Bar" is also considered and finally "/Bar" is tried.
Mapping of Port Data Types.
Irrespective of which view on co-simulation is picked, at one point VHDL ports have to be mapped on to CSim ports.
First, the ports that match must have the same name. They also have the same mode: an InPort< > in CSim maps to an "in" port in VHDL, and likewise an OutPort< > in CSim maps to an "out" port in VHDL.
Next, the types must match. The following table contains the rules for a mapping.

**Table 15:**

| Mapping Between CSim and VHDL Ports. | | |
|---|---|---|
| **CSIM PORT** | **VHDL PORT** | **COMMENTS** |
| Signal<int> | integer | or any subtype of integer |
| Signal<unsigned int> | integer | or any subtype of integer (such as natural) |
| Signal<vhdl_bit> | bit | |
| Signal<bool> | boolean | |
| Signal<vhdl_bit_vector<N1, N2> > | bit_vector (N3 [down]to N4) | The size of the bit_vectors must match, but not the order or offset: bits correspond by position. |
| Array<Signal<vhdl_bit>, N> | array (N1 [down]to N2) of bit | The size of the arrays must match, but not the order or offset: bits correspond by position. |
| Array<Signal<T1>, N > | array (N1 [down]to N2) of T2 | CSim type T1 and VHDL type T2 must map on each other (and may also recursively be Arrays again). The size of the arrays must match, but not the order or offset: bits correspond by position. |
| Signal<vhdl_logic> or | std_logic or | Be careful: no driver is created in |
| Signal<vhdl_ulogic> | std_ulogic | VHDL for resolved types, values are forced instead. |
| Signal<vhdl_bit_vector<N1, N2> > | std_logic_vector( N3 downto N4) or std_ulogic_vector( N3 downto N4) | The size of the vectors must match, but not the order or offset: bits correspond by position. A warning is issued when attempting to convert anything besides '0' and '1'. |
| Signal<vhdl_unsigned<N1, N2> > | unsigned(N3 downto N4) | The size of the vectors must match, but not the order or offset: bits correspond by position. A warning is issued when attempting to convert anything besides '0' and '1'. |

### SUPPORTED SIMULATORS AND INTERFACE-SPECIFIC NOTES

In all cases, the VHDL simulator acts like the "master" and the CSim simulator is the "slave" (even if your real testbench is in CSim). When starting the VHDL simulator, its foreign interface will start the CSim simulator. Also the VHDL simulator controls the simulation (advancing the simulation time, stopping and starting). VHDL Simulators That Support Vhpli

### IMPLEMENTING A VHDL ENTITY AS A CSIM MODULE

In VHDL, the foreign architecture of an entity Foo that has a C++ implementation is:
architecture CSim_vhpli_implementation of Foo is
attribute FOREIGN of CSim_vhpli_implementation: architecture is "VHPI:CSimTestBench:csim_implement_elaborate:csim_implement:Foo";
begin
end CSim_vhpli_implementation;
where CSimTestBench is the name of the stub testbench that contains the Module. On startup, the VHDL simulator will look for a file libCSimTestBench.so in the directories listed in the LD_LIBRARY_PATH environment variable.

### IMPLEMENTING A CSIM MODULE AS A VHDL ENTITY

The stub testbench in VHDL must contain:
- A signal named dummy of type natural, which is not used by the VHDL code, but will be manipulated by CSim for internal reasons.
- An instantiation of an entity without ports with following architecture (the name of the entity is not important). This component will trigger the loading of the CSim part of the design. Again, CSimTestBench is the name of the testbench in CSim that contains the design (the top level testbench), and the VHDL simulator will look for a file libCSimTestBench.so in the directories listed in the LD_LIBRARY_PATH environment variable on startup.
entity CSimBlock is
end CSimBlock;
architecture CSim_vhpli_Implementation of CSimBlock is
attribute FOREIGN of CSim_vhpli_Implementation: architecture is "VHPI:CSimTestBench::csim_simulate_elaborate:csim_simulate:CSimBlock";
begin
end CSim_vhpli_Implementation;

### A WORKAROUND FOR VHDL ENTITIES INSTANTIATED IN CSIM TESTBENCHES

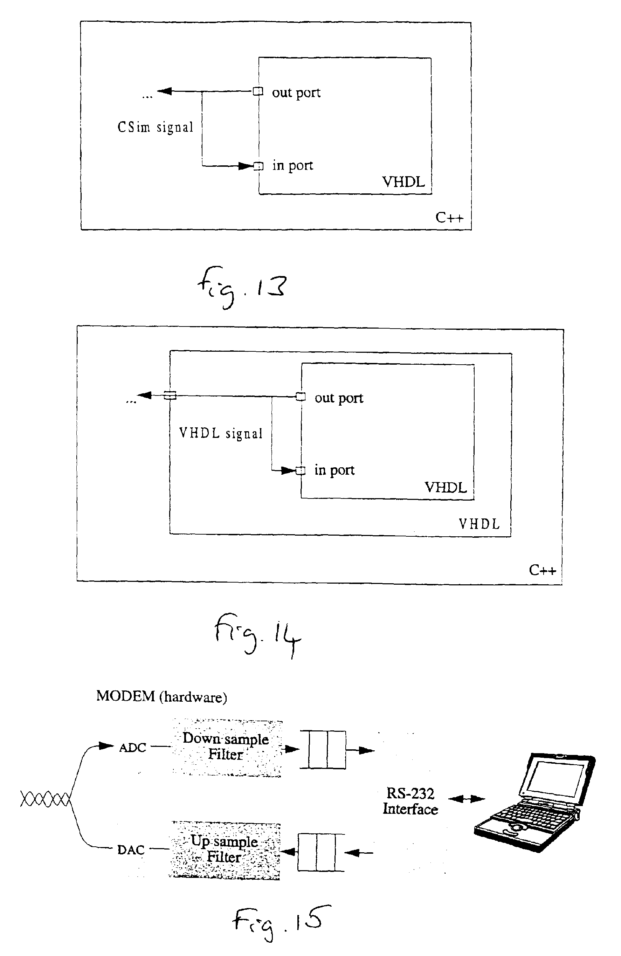

This section describes a technique to work around a problem seen when a VHDL entity is instantiated in a CSim testbench, and there is a CSim signal which connects a port, driven by VHDL, to another port which is read by VHDL. The key to the workaround proposed here is to make this connection in VHDL, and not in CSim. The fundamental reason why this workaround is needed is that currently VHDL simulators have a PLI interface which does not allow the perfect combination of propagation loops.
Suppose you have following situation, depicted in Fig. 13. A CSim signal connects the in- and out port of the same VHDL entity, which triggers the error. The solution is to wrap the VHDL block in a new VHDL block which connects the in- and out ports with a VHDL signal, instead of the CSim signal. This is shown in the Fig. 14.

### CO-SIMULATION WITH ANALOG SIMULATORS (SPICE)

In the following, Csim refers to a component or concept in accordance with the present invention in order to distinguish over components which belong to co-simulated systems. An analog module which encapsulates the analog design block is within the simulation environment represented by a CSim module, which will be referred to as the AnalogModule.

An arbitrary number of input and output ports can interface with the analog model. The inputs, which are input port signals, are associated with an independent voltage source within the analog model, by means of the name of the voltage source. The outputs, which are output signals, are associated with a pair of nodes within the analog model, by means of the 2 node numbers where the output voltage can be measured.

When evaluating the AnalogModule in a evaluate-update cycle in accordance with the present invention, if the current time within the digital Csim system differs from the current time in the analog system, the analog simulator catches up with the digital time. This happens by assigning the value of the inputs (which they had during the digital timestep which will now be simulated by the analog simulator) to their associated independent voltage sources, then performing an analog simulation up to the current digital time, and then assigning the measured outputs to the signals.

### Integrating an Instruction Set Simulator in a System-Level Hardware Simulation Language for System-Level Hardware-Software Co-Simulation

The simulation environment in accordance with the present invention can be used to describe systems at various levels of abstraction. A system described by use of the present invention consists of a set of Modules. Each of these Modules describes a specific task. These Modules communicate to each other using special communication concepts, such as Signals, Queues and Containers. All these modules, which are C++ classes, are compiled and linked together with a simulation kernel. This results in a program which is in fact an executable specification for the system, by which the behavior of the system can be verified.

Using the present invention makes architectural exploration easier. During architectural exploration, the designer decides what must be done in hardware, what can be done in software, what the dimensions of busses and FIFO's are,... The present invention provides a method to enable the designer to make a cycle-accurate estimation of processor time that is required to execute a task performed by a module on a certain processor, very early in the design phase.

To distinguish between ISS and the present invention the simulation environment according to the present invention will be described as "CSim". With the present invention it is possible to connect an ISS in the simulation environment and the software that runs on the ISS can use the same Csim communication concepts (Signals, Queues, Containers,...), in such a way that any Module that fulfills certain conditions can be run on an ISS without modifications by compiling it's source code for the target processor. This will enable the user of the present invention to make cycle-accurate estimations about how long that algorithm would take if it were run on the processor that is simulated by the ISS. Eventually, the timing information obtained from simulating the Module can be annotated in the original CSim module

### CONSISTENCY

By moving a task from the CSim Module to the ISS, we do not want to change the CSim behavioral description (which is valid C++). The unmodified program recompiled for the target processor architecture should semantically mean the same as the same program when it's run within a CSim thread. When executed, the behavior should be the same, and we want to concentrate on timing constraints. You can compare this to the RTL vs gate level simulations: both simulations should yield the same results, unless timing constraints are violated. It's the same kind of timing problems we want to detect in hardware/software co-simulations, but on a different level.
Firstly, we have to make CSim's inter-module communication primitives available for use in the ISS. We do this by making it possible to memory map all CSim communication objects (Signals, Queues, Containers,...) in the ISS memory space. We provide a different implementation of the classes that represent the communication objects for use on the ISS. This implementation has the same methods as the one in Csim as described above, but it uses the values mapped in the signal to reconstruct the behavior of a signal as if it was a true CSim signal/queue/container/... How the memory map looks like is explained in the next section, and it will be clear how all ISS-signal methods can be implemented in only a few lines of read/write accesses to areas in the memory map.

So far we can communicate with CSim modules, but that's not enough: we have to make the ISS delta cycle aware. At first sight, there is a big difference in semantics between program code executed within CSim and code executed on a processor: it's specified that the code executed in a CSim Module does not take any simulated time at all, all of it is executed within the same *delta cycle*. Time can only advance when (1) the end of the evaluate() function of a module is reached (for non-threaded processes) or (2) some WAIT() statement is encountered (for threaded processes). Within a delta cycle, it is specified that Signals, Queues and Containers will not be updated. However, when compiled code of a Module is executed on the ISS, the code takes simulated time to execute, which is in conflict with the delta cycle concepts. During execution of the task on the ISS, other CSim tasks get evaluated and signals get updated. Thus on the ISS, input and output Signals, Queues and Containers locks would not remain stable during the execution of code that was written in the assumption that they would remain stable. That is undesired behavior since results would be different for code run on the ISS and code that runs in CSim. We will solve this inconsistency by modifying the update cycle for threads that run on the ISS and by introducing a coding style.

### INTERFACE BETWEEN CSIM AND ISS

The description of the interface of between CSim and the ISS can be divided in two parts:
To be able to move CSim modules to an ISS and still communicate with the other CSim modules as if we were a CSim module ourselves, we have to bring all inter-module communication primitives to the ISS (signals, Queues, Containers,...). This is done by memory mapping these CSim primitives in the memory of the ISS. To maintain the same behavior in the ISS as we had in CSim (consistency), we introduce a special update-algorithm. This algorithm is described in the second subsection below.

### MEMORY MAPPING CSIM COMMUNICATION PRIMITIVES

In CSim Modules communicate to each other using special primitives to ensure deterministic simulation results. These primitives usually consist of methods to access the data being transferred between modules (reading from a signal, popping from a queue, an access at an address in a container,...) and some methods to query the status of the primitive (also called attributes, such as signal.hasChanged(), queue.isEmpty(), container.hasLock()). Since a CSim module can access both the data and the attributes of the communication primitives, we don't only have to map the data in the ISS memory, but also the attributes.
A memory map for a CSim Signal in a Module that uses only a subset of the attributes of a Signal can look like outlined in the table below

| offset from base | Read value | Write action |
|---|---|---|
| 0 | Bit 0: 1 iff signal.hasChanged() Bit 1: 1 iff signal.hasTransaction() | Unused |
| 1..N | The signal value, as in getValue() in the CSim simulator | Assignment to the signal at the next synchronization point in the ISS |

. A default memory layout for a signal of any C++ built in type, where all signal attributes are accessible and all possible actions on the signal object (after, delay line access,...) can be performed through the memory map, is included in CSim as a default implementation. The user can always add his own signal mapping layout for his own tasks.
The implementation of the Signal/Queue/Container class for use on the ISS can now easily look up both data and attributes by reading values from (or writing values to, or a combination of both reading and writing) a memory address. When a task that runs on the ISS now requests the hasChanged attribute of a signal, the ISS implementation of the Signal can simply look them up.

### MODIFIED EVALUATE/UPDATE MECHANISM FOR ISS'ES: NON-THREADED TASKS

As explained in the introduction, we can't use the evaluate/update mechanism of the kernel for modules that run on the ISS, since these modules take time to execute. By consequence, the signals exported to the ISS would not remain stable within a single evaluation function execution (for non-threaded modules), or between two WAIT function calls (for threaded modules). When the evaluation code is executed and signals change before the ISS is stalled again, the resulted actions performed by the code that runs on the ISS could very well be different from the actions performed by a CSim module that contains the same code.
To avoid these differences, we change the update-algorithm so that signals, queues and container locks that are mapped in the ISS do not get updated until the place where they would have been updated when the task is run in CSim, i.e. at the end of the evaluation function for non-threaded processes, or at a wait for threaded processes. The ISS signals CSim when such a place is reached. For threaded modules, this is done by providing a different implementation for the WAIT_ON and WAIT_UNTIL methods for the ISS than in CSim. For non-threaded processes, some control structure must be present so that after every execution of the evaluate() method the CSim kernel is informed that an evaluate() function call is completed. This can be done by either a special instruction or by a read or write to some specific address.

For non-threaded tasks, when CSim is informed that the code on the ISS reaches a synchronization point (i.e. an evaluate() function is completed), all memory mapped signals that have been written to from the ISS since the last synchronization point are driven in CSim. Also, the CSim signals that can be read through their memory mapping in the ISS are sampled and these values are copied and stored to remain stable. It are these stable copies that will be used when these signals are read through the memory map. This scheme is slightly more complicated for threaded modules, as will be explained later.
In this way, we achieved pretty much our goals: The code executed on the ISS will have the same view on the CSim Modules as if it were a CSim Module. The only restriction on moving a CSim Module to the ISS processor is that the simulated execution time on the ISS is small enough to ensure that the code can handle all it's tasks on time. When simulation results are identical for a module simulated in CSim or simulated on an ISS, then we know this is the case.

In some cases, however, there is a problem with the execution of non-threaded tasks on the ISS. Not all valid CSim code can easily be run on an ISS in such a way that both CSim and ISS simulation results are the same. Especially code that is reactive on conditions that are only valid during a single delta cycle (signal.hasChanged() == true, signal.hasTransaction() == true) or a very limited time (queue.getFilling() == 3) are hard or even impossible to simulate, since these checks cannot be done at every delta cycle anymore: the processor needs time to evaluate them. Let's demonstrate this problem by a small example that uses hasChanged() to express reactivity to a change in a signal. In a later section, we will propose a solution to this problem (using threaded tasks) and demonstrate it on the hasChanged() example again.
In CSim, it's perfectly legal and it makes sense to write: 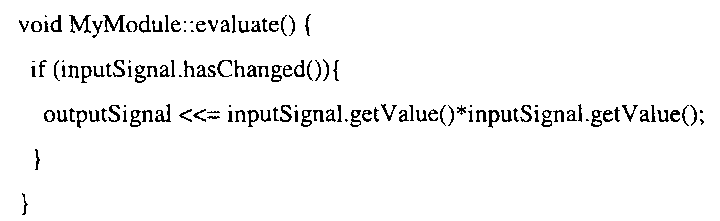 This code expresses that every delta cycle (unless module sensitivity is used), it will be checked whether the input signal is changed, and if it's changed, the square of it will be assigned to the output signal.
If we want to do this multiplication on an ISS, we can compile this code for an ISS, with some modifications. We need a kind of over-simplistic operating system to schedule the thread, and somehow the memory mapped signals must be defined. For simplicity, only one thread per ISS is allowed. Multiple threads on one processor can be simulated by instantiating an ISS for every thread, and then use a locking mechanism to ensure that only one ISS (= one thread) runs at a time. The resulting code for the ISS might look a bit like this:
void evaluate();
// inputSignal and outputSignal are CSim memory mapped
// signals. They get their data from memory mapped CSim signals.
Signal<int> outputSignal;
Signal<int> inputSignal;
// The main function will be executed on the ISS

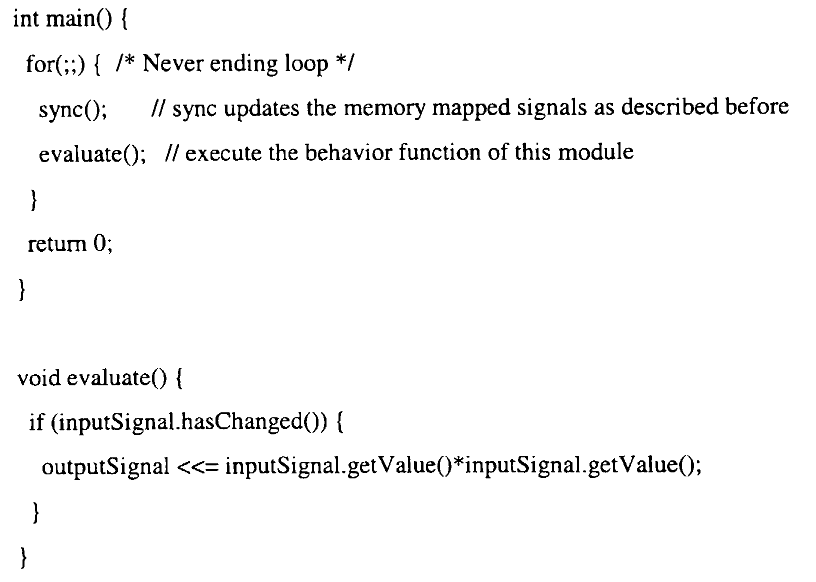

Typically, the ISS will be clocked by a CSim signal which can for example be driven from a CSim crystal. Every time this signal becomes high, one instruction on the ISS will be executed. Let's now compare the result of the CSim module with the result of ISS code:
*CSim module:* At time 0, the input signal changes. The evaluate function of the module is executed, the signal change is detected, and the square of the input value is written to the output signal. 1 delta cycle later, but still at time 0, the output signal will be the square of the input signal.
*ISS module:* In the ISS, at most 1 processor instruction per time unit can be processed, so execution will not be immediate like in the CSim module case. That's exactly our goal: we want to know how long the execution of the module will take. See the table below for a fictive example of how the time could advance during simulation

| Time | Action |
|---|---|
| 0 | The inputSignal changes. Suppose that, by coincidence, the ISS executes the synchronization instruction in this delta cycle. InputSignal.hasChanged() is true, so that is the value of the hasChanged attribute that will be copied in the ISS memory map |
| 1 | On the ISS, evaluate() is called (a jump instruction) |
| 2 | The ISS fetches the hasChanged() attribute from the memory map |
| 3 | The if(inputsignal.hasChanged()) is evaluated and is true, so don't jump to the end of the evaluate() function |
| 4 | The inputSignal value is fetched from the memory map |
| 5 | The multiplication is performed |
| 6 | The result of the multiplication is written to the memory map |
| 7 | Function evaluate() returns |
| 8 | The jump instruction at the end of the for(;;) loop is executed |
| 9 | The synchronization instruction is executed. inputSignal is sampled again, and the value assigned to outputSignal in the memory map is written to the signal |
| 9 | One delta cycle later, outputSignal has it's new value. |

. Note that the output signal will be updated only 9 cycles after the input changes. There's one big problem with this scenario: how can we assure that, at time 0, the sync instruction is executed at exactly the same delta cycle as when the input signal changes? We can't, and that's why you shouldn't use the hasChanged() method to trigger a process that runs on the ISS: the chances that you will check whether the signal has changed in the single delta cycle when this attribute is true, are usually very small. Triggers for non-threaded processes should be written using conditions that remain true until the evalutate() function has been executed, such as queue.getFilling() >= 5. In the next section, a coding style will be presented for reactivity on conditions that are active for only a small period of time.

### MODIFIED EVALUATE/UPDATE MECHANISM FOR ISS'ES: THREADED TASKS

Although you can't express reactivity on value changes using the hasChanged() method, you can use reactivity on changed signals using WAIT_ON(variable). Special care has been taken in the ISS implementation so that WAIT_ON in the ISS environment works like in CSim modules. We will first concentrate on reactivity on signals, and we will provide a method later in this document to express reactivity on a user-specified condition.
The WAIT_ON function signals to CSim that the ISS module did a WAIT_ON on a specific signal. This can be done by either a special instruction, or by a write to some memory-mapped region. The CSim kernel will stop the ISS (i.e. preventing it from executing instructions) until the signal that's been waiting for changes values. When that happens, the memory map is updated and ISS execution is resumed.
When a WAIT_ON(someSignal) call returns (someSignal changes value), we want that the signals in the ISS to be exactly the same as what you would get in CSim, e.g. someSignal.hasChanged() should be true, exactly like it would be true when this WAIT_ON() function would have been executed in a CSim module. To achieve this behavior, the CSim kernel has a special ISS scheduling algorithm. When the CSim kernel is notified that an ISS waits for a value change on some specific signal, all values written to the memory map from within the ISS are written to their corresponding CSim signals. From that point onward, the CSim kernel will watch the signal that the ISS is waiting on. In the delta cycle that the watched signal changes values, the memory mapped signals are sampled, and on the next active edge of the clock that drives the processor that's represented by the ISS, the ISS is restarted. This will ensure us that the ISS will continue with the same signal values as the ones that a CSim module with the same code would have, including special attributes like hasChanged() or hasTransaction().

So the complete kernel scheduling algorithm for threaded modules which are run on an ISS (with WAIT_ON) looks like this: 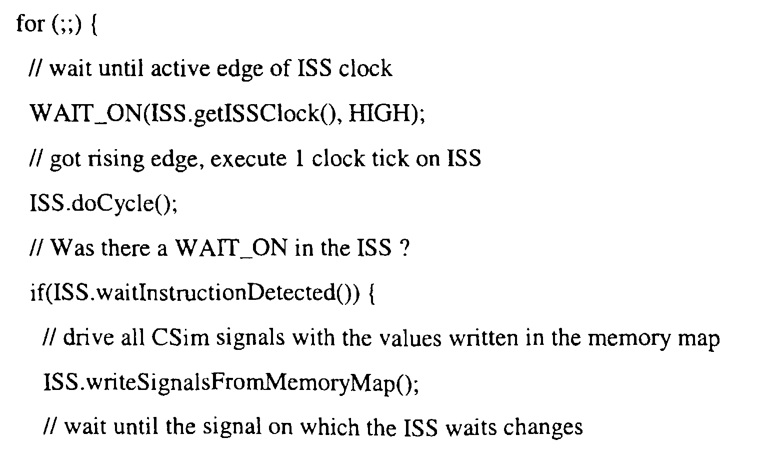 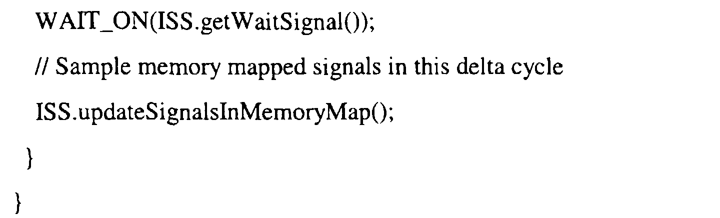 We will now demonstrate this technique on our previous example to rewrite it in a more ISS-friendly way. Instead of using signal.hasChanged(), we will use WAIT_ON to model reactivity: 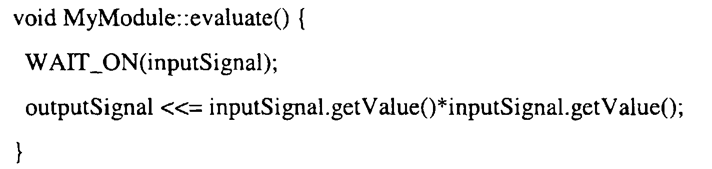 Please notice that we changed the module type from a non-threaded module to a threaded module to be able to use WAIT statements.
On the ISS, the same module including a minimalistic process scheduling algorithm (an infinite loop executing a single function) translates to: 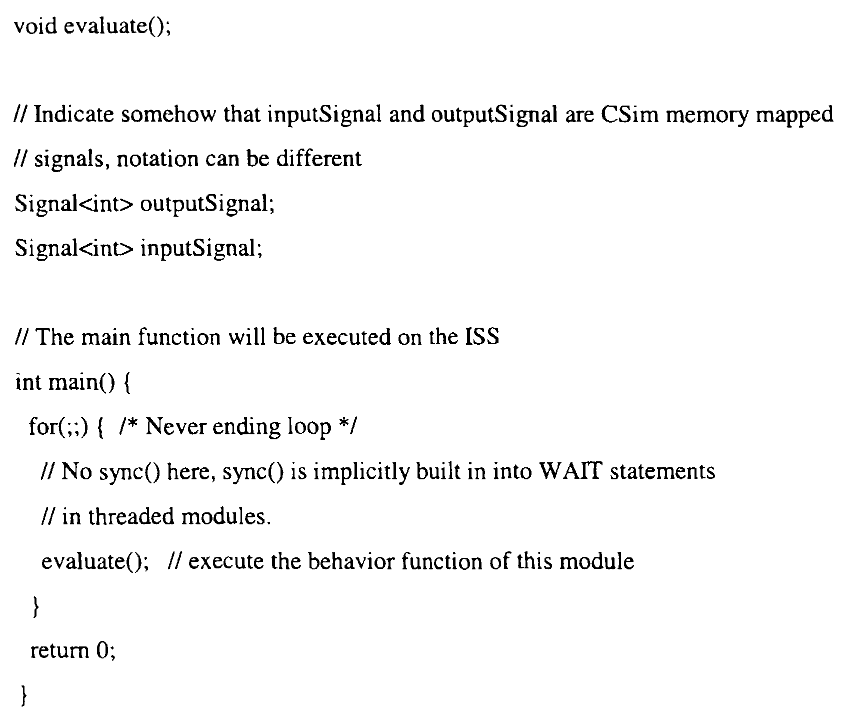 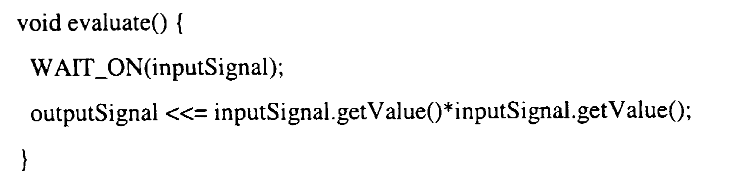 The WAIT_ON function informs the CSim kernel (either by a dedicated instruction, a memory mapped region, or anything else) that the ISS waits on a signal change in the input signal. If we assume that the ISS is fast enough to calculate the square of the signal in between two input signal value changes, the ISS code will compute the same values as it's corresponding CSim code.
So far, we only talked about triggering processes based on the hasChanged() attribute of a signal. With the knowledge that you can trigger processes on signal value changes, we now can rewrite other trigger conditions (hasTransaction(), getFilling() == 3,...) so that an ISS can also trigger on them. Split your process in two separate processes, one that monitors all trigger conditions, and one that contains the functionality. Every time a trigger condition is met, some bool signal is toggled. The process containing the functionality waits on this signal toggle, and then executes it's content.
For example, suppose we have a module that is triggered by a transaction on a signal: 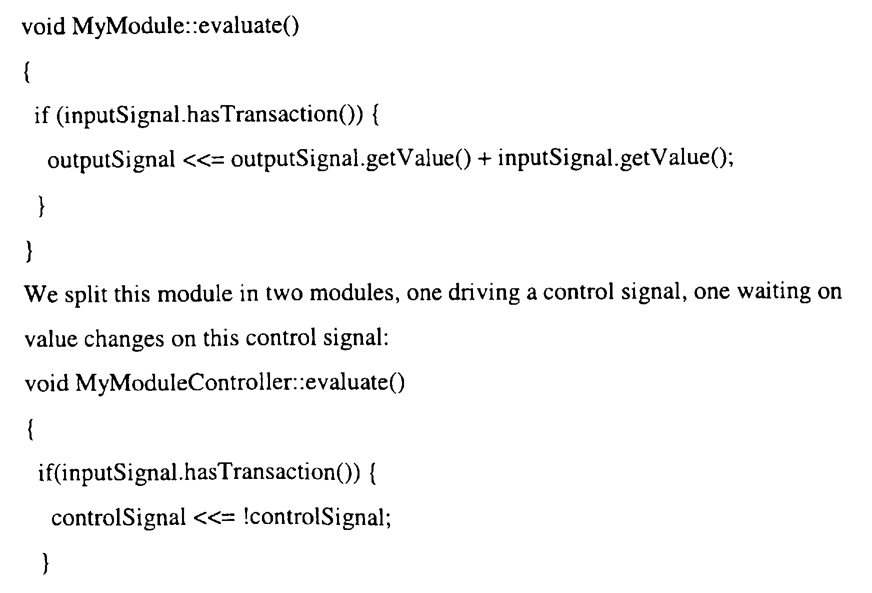 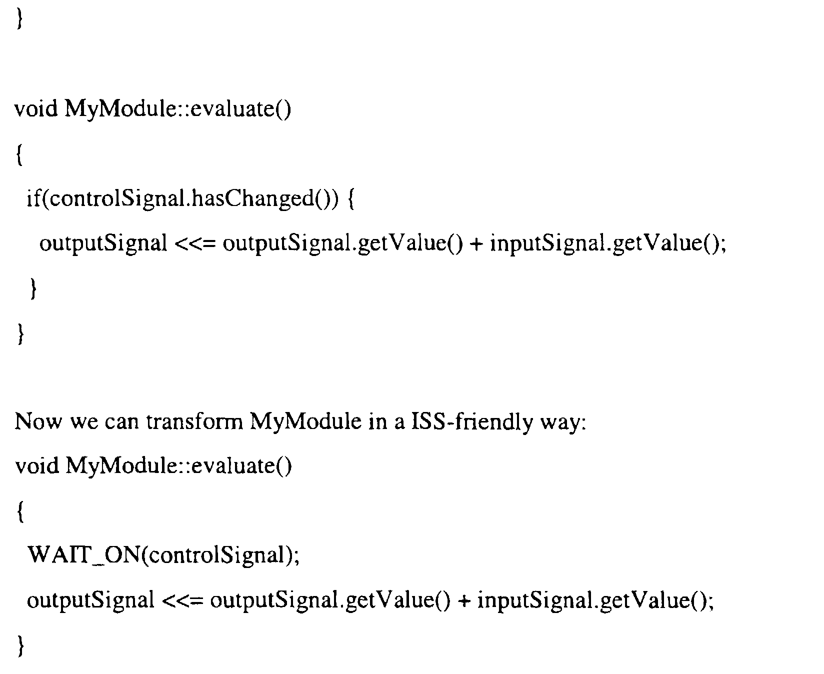 So we have modeled reactivity on the hasTransaction() attribute of a signal. Note however that inputSignal.hasTransaction() will not be true due to the lost delta cycle in the control signal assignment. This solution is not perfect, but the most important thing is that simulation of this module in CSim and on the ISS will behave exactly the same when all timing criteria are met.

### IMPLEMENTATION

### MAPPING CSIM DATA STRUCTURES IN ISS MEMORY

In previous examples, a C++ object called MMSignal was used. This represents a memory mapped signal, i.e. both the signal value and all it's attributes. The memory map layout for a simple signal (e.g. a CSim Signal<int>) with only hasChanged and hasTransaction attributes mapped, can therefore look like outlined below

| offset from base | Read value | Write value |
|---|---|---|
| 0 | Bit 0: 1 iff signal.hasChanged() Bit 1: 1 iff signal.hasTransaction() | Unused |
| 1 | The signal value, as in getValue() in the CSim simulator | Assignment to the signal at the next synchronization point in the ISS |

Using this memory layout, an assignment to a signal of type MMSignal<int> can now easily be implemented as a write to the base address of the memory mapped signal + 1. How the memory layout looks like is not specified and is subject to the imagination of the implementor. If required, extra control fields will have to be added, e.g. for accessing the delay line of a signal, or for making a delayed assignment.
CSim datatypes can be more complex than just 1 word as in the memory map above. 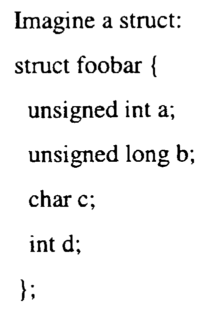 If our ISS has a wordlength of 32 bits, and a char is 8 bit, an int is 32 bits, and a long is 64 bits, then we cannot map this struct in a single 32 bit ISS-word anymore. How this struct is spread across several words is highly architecture dependent (big/little endian, alignment,...). In order to be able to linearize this struct, the user has to specify a function that does this work for a specific ISS. If our ISS maps this struct in memory like described in the table below

| offset | content |
|---|---|
| 0 | value of foobar.a |
| 1 | MSB part of foobar.b |
| 2 | LSB part of foobar.b |
| 3 | Bit 0-7: foobar.c Bit 8-31: unused padding bits |
| 4 | value of foobar.e |

, the user has to specify a function that takes a struct foobar as input and returns an array of ISS-sized words words as output, exactly as the compiler for the ISS would represent the struct in it's memory. For the other way around, the user has to specify a function that has a vector of ISS-sized words as input, and returns an object of type mayonaise.

To make it easier for the user, he can define these functions recursively: he can write his vector<unsigned long> FromCSimToIss(const struct foobar&) conversion function in such a way that it uses the conversion functions for plain integers, so that the foobar struct conversion function only has to take care of padding/ alignment. A struct that contains foobar as a substruct can then use the FromCSim-ToIss(const struct foobar&) function to convert that part of the enclosing struct to the flat memory representation for the ISS.

### Example 1

An example is given of a simple modem chip that interfaces between the AD/DA convertors that are connected to the telephone lines and a RS232 serial port that connects to a PC.

### ARCHITECTURE

The overall architecture is shown in Figure 15.

In this example, only the hardware (the digital modem chip) is described. The code is provided in Appendix 1.

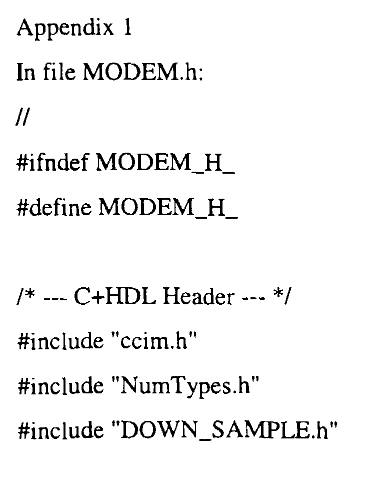

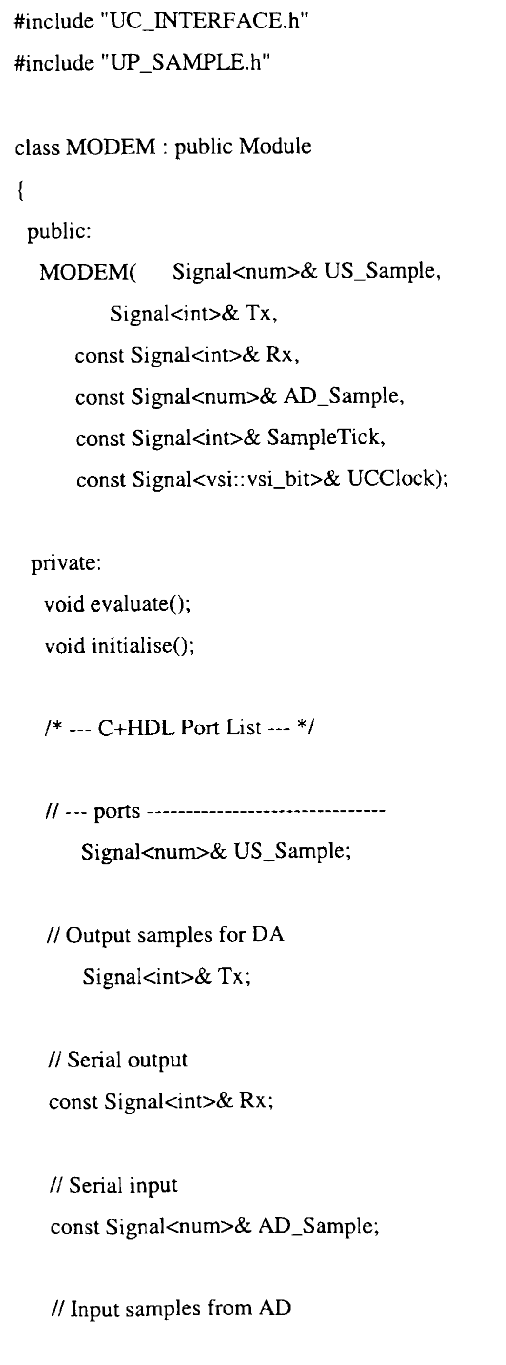

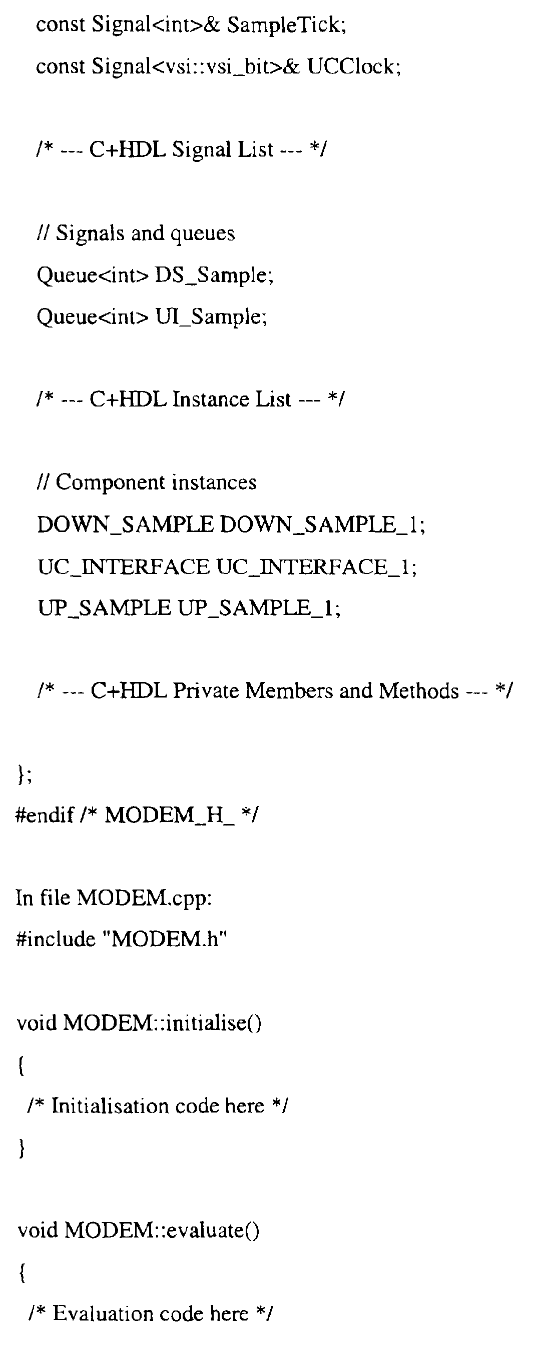

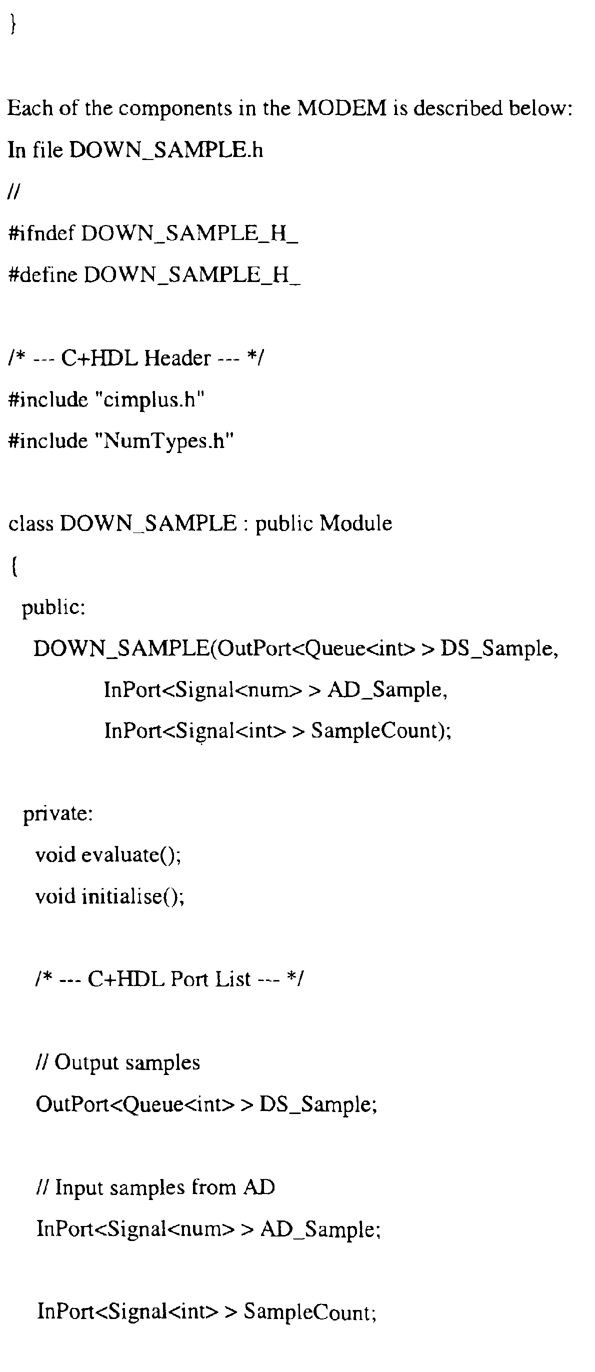

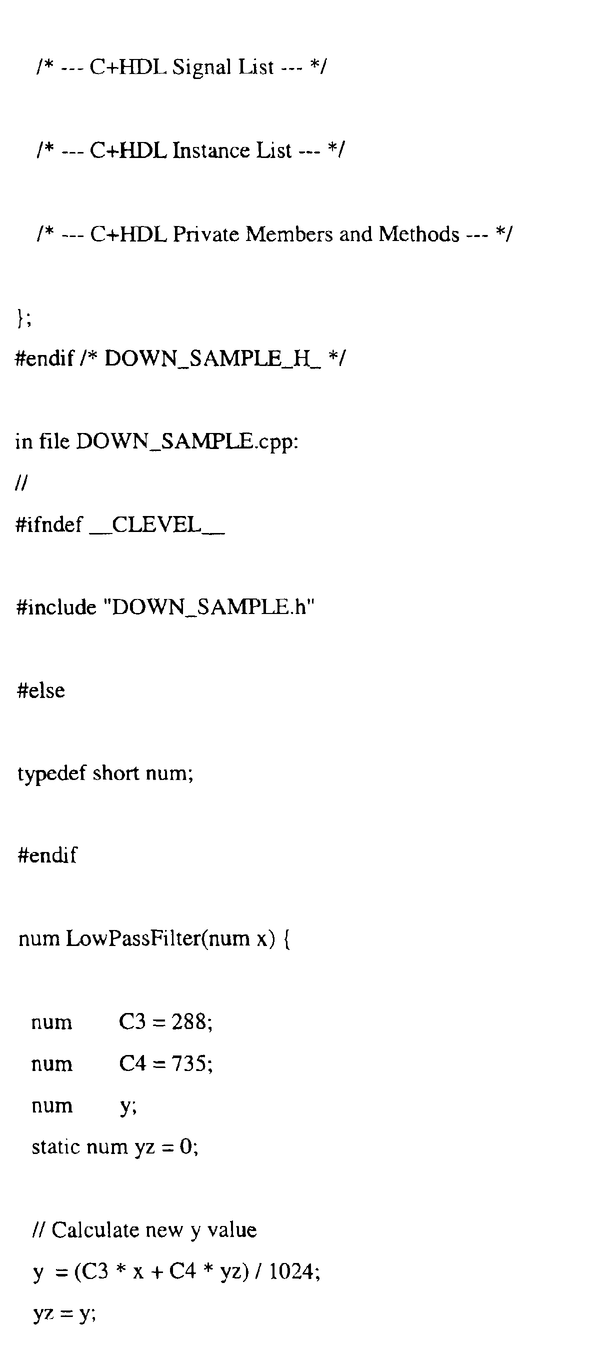

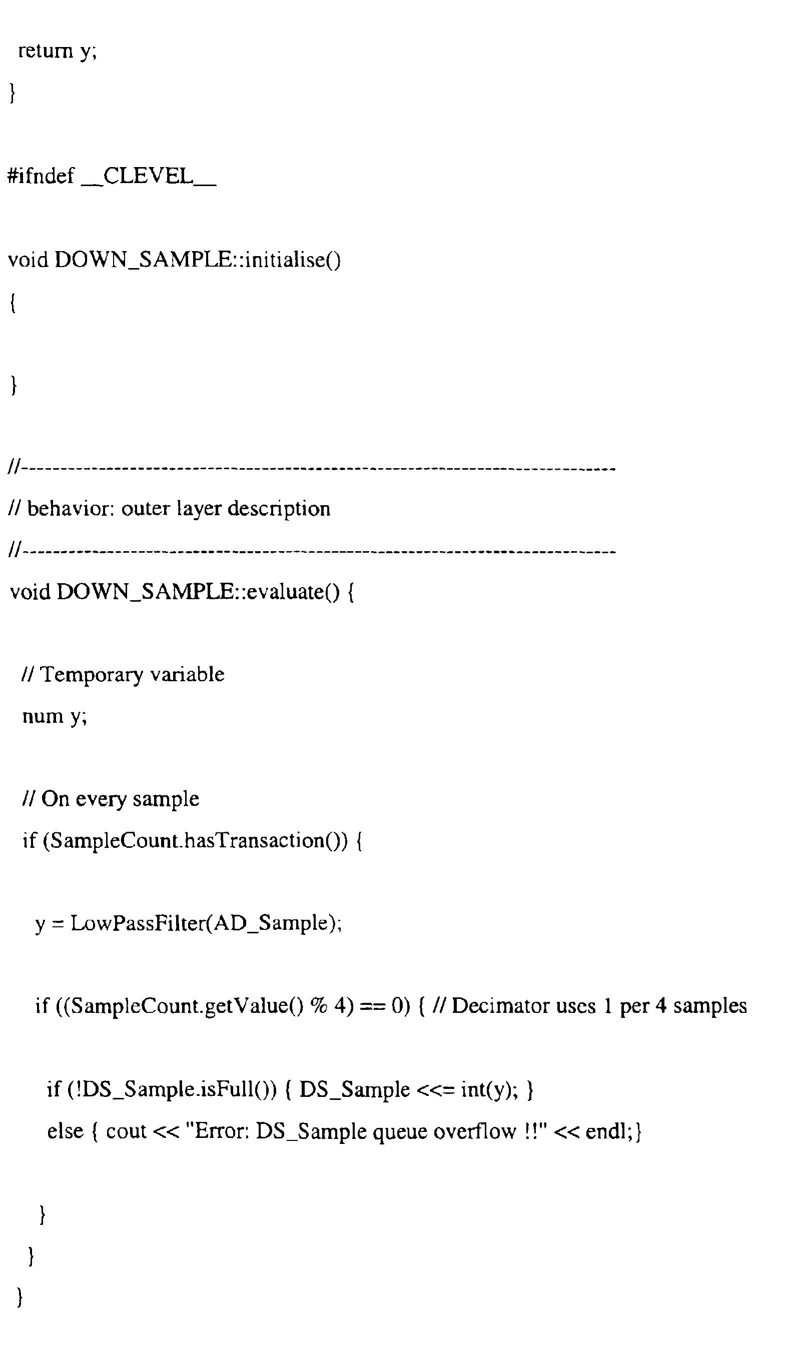

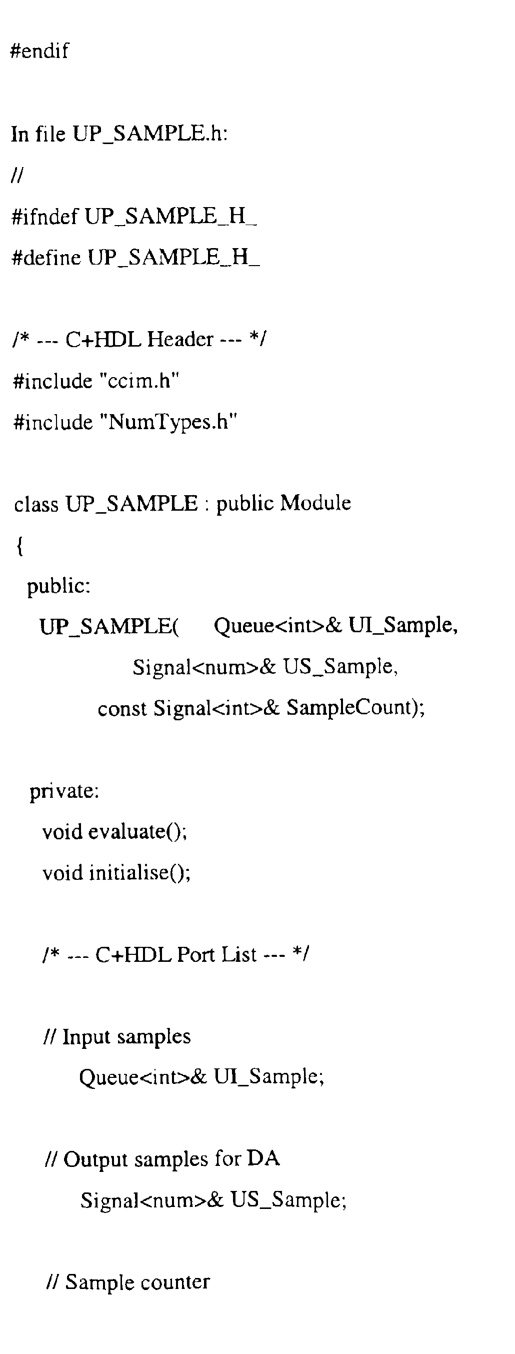

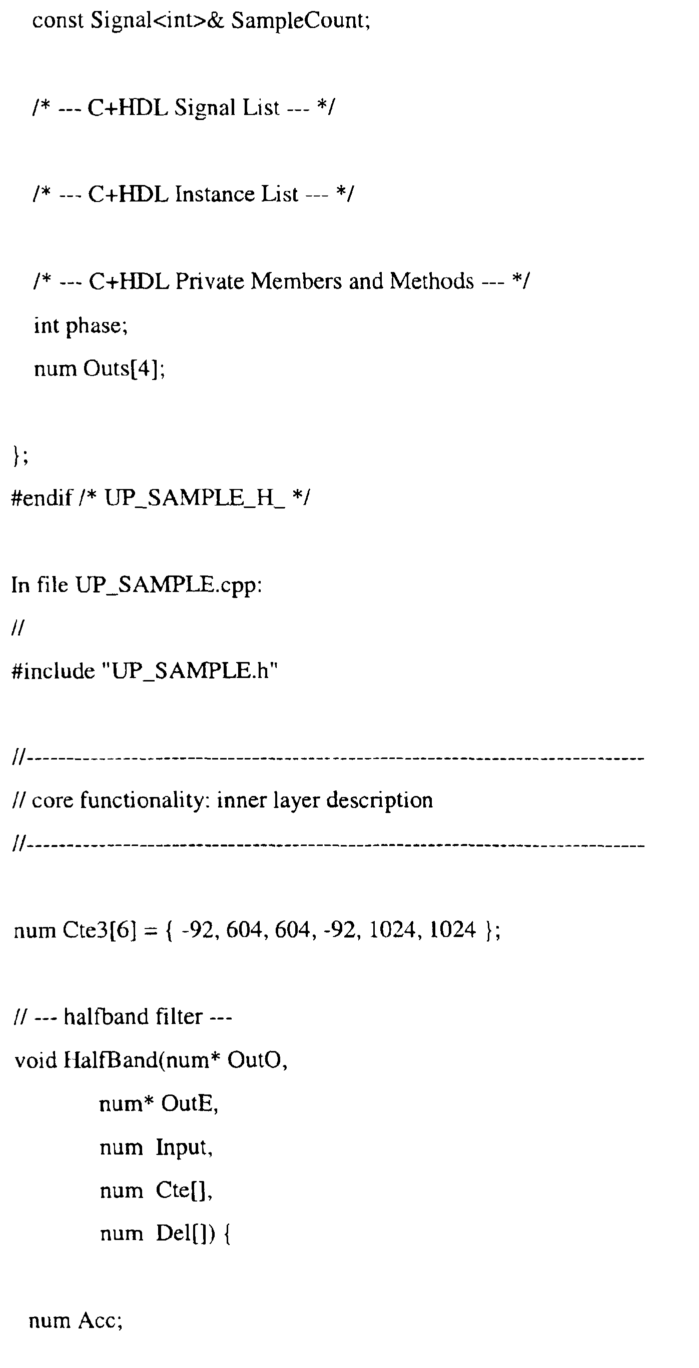

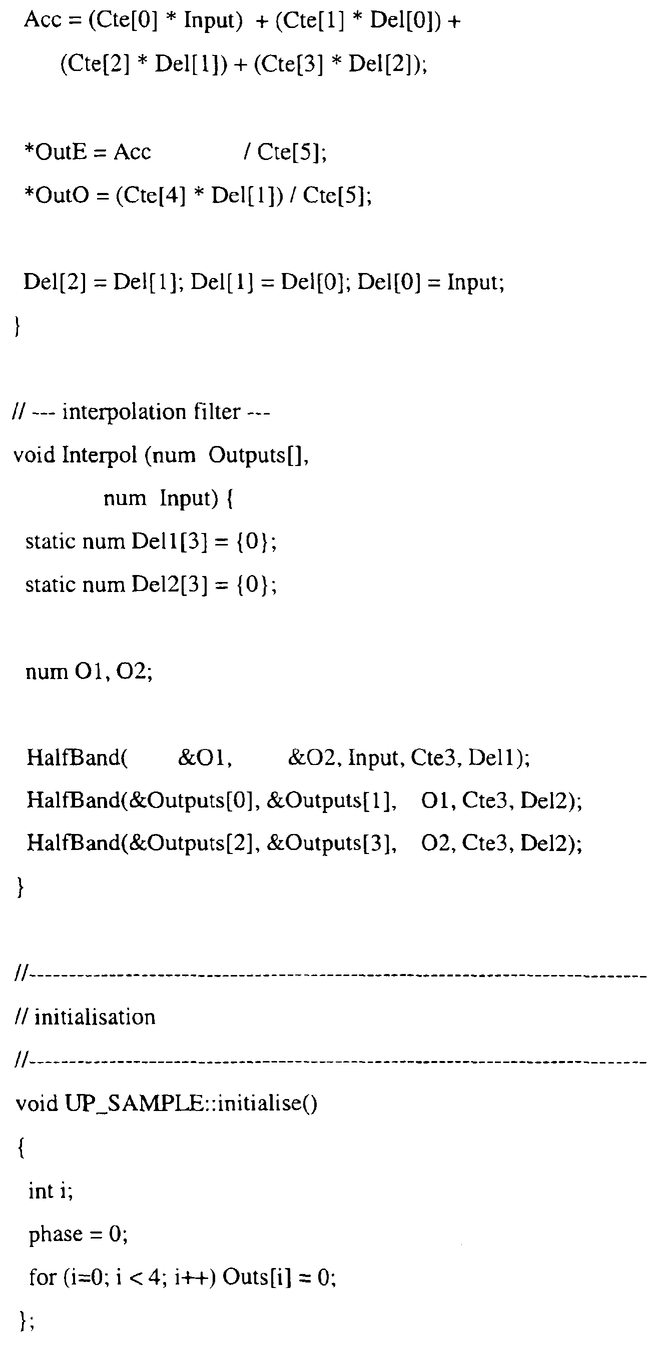

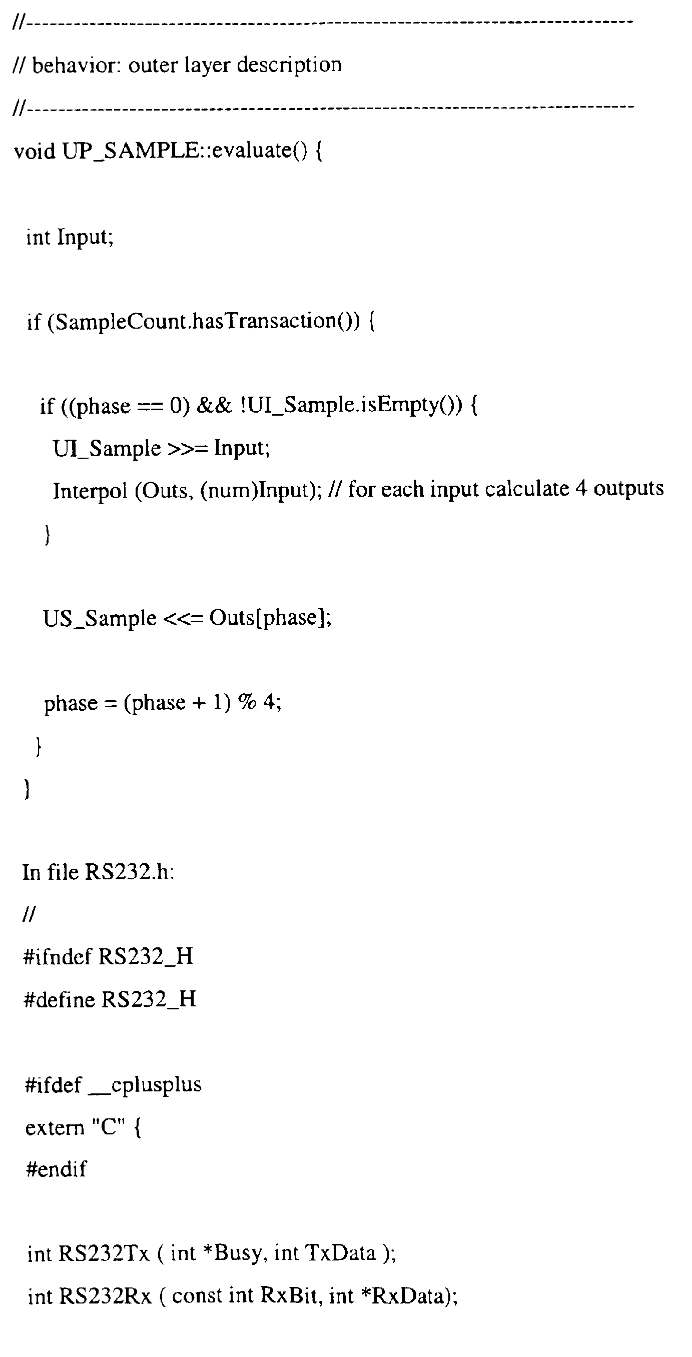

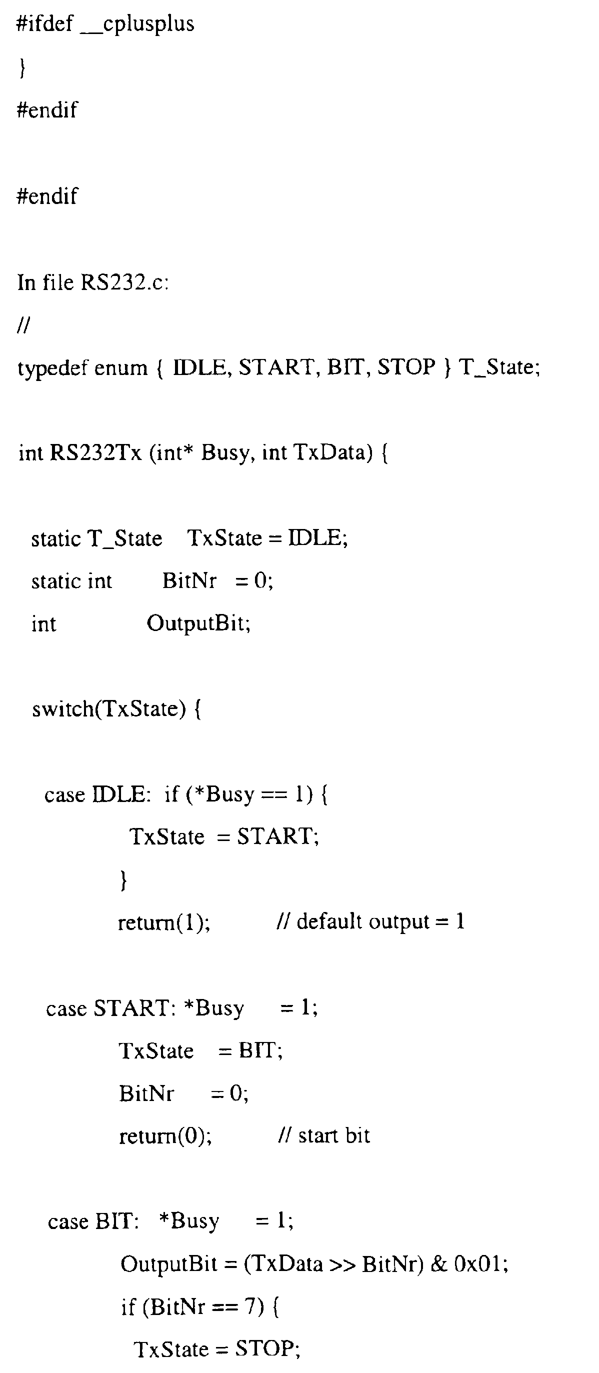

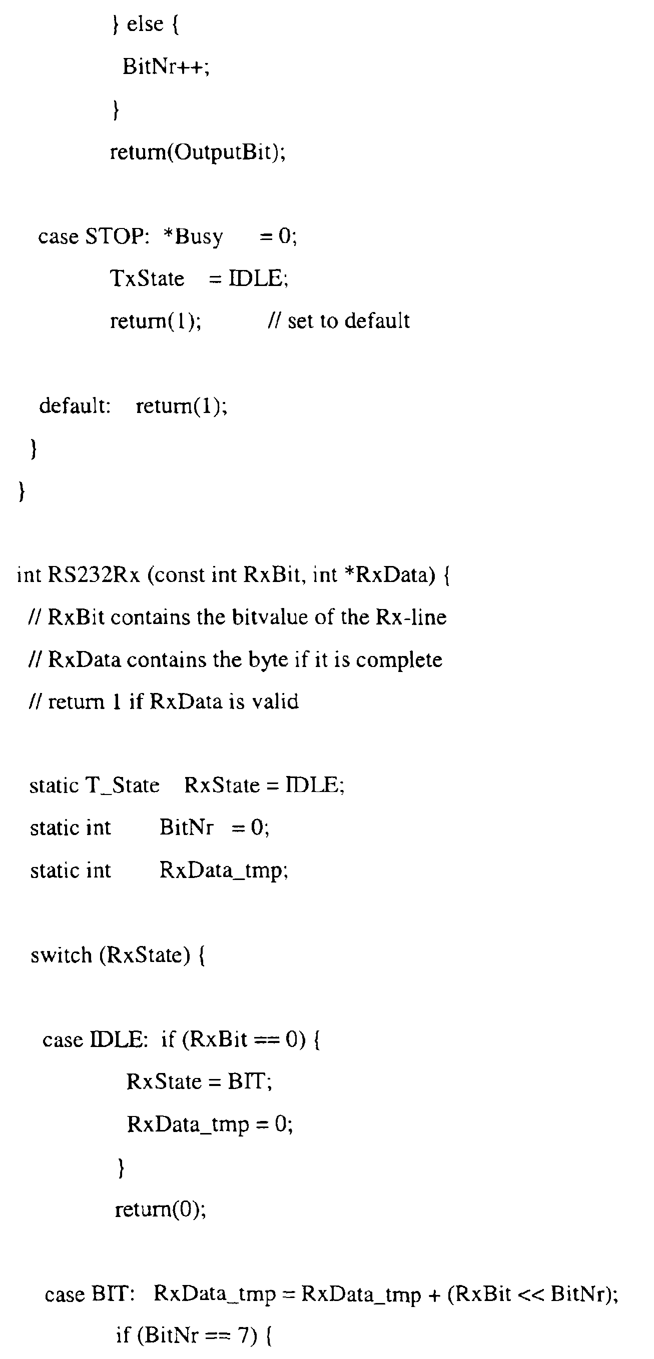

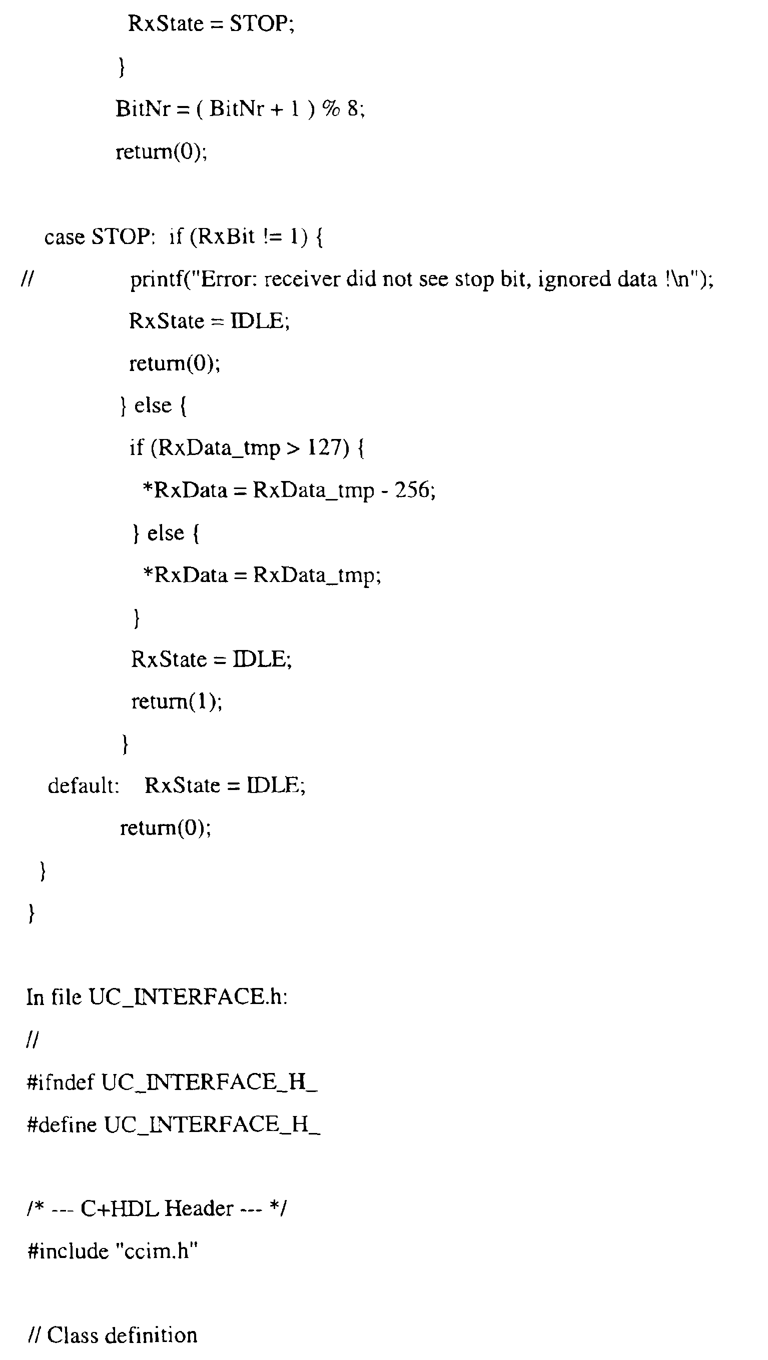

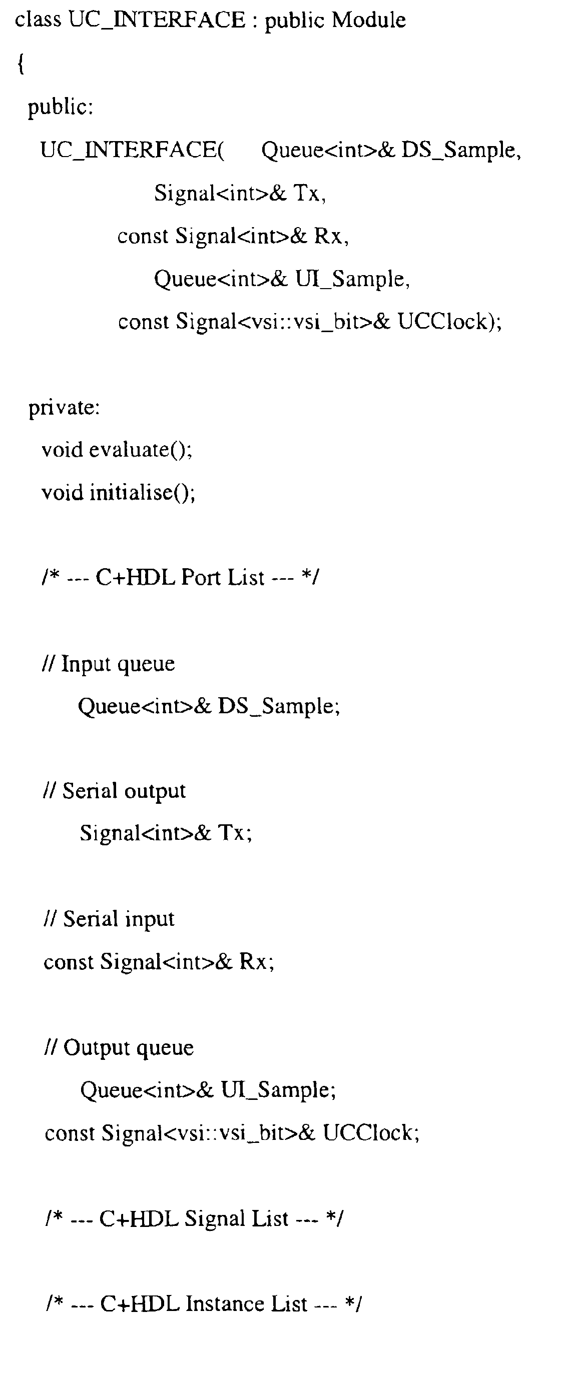

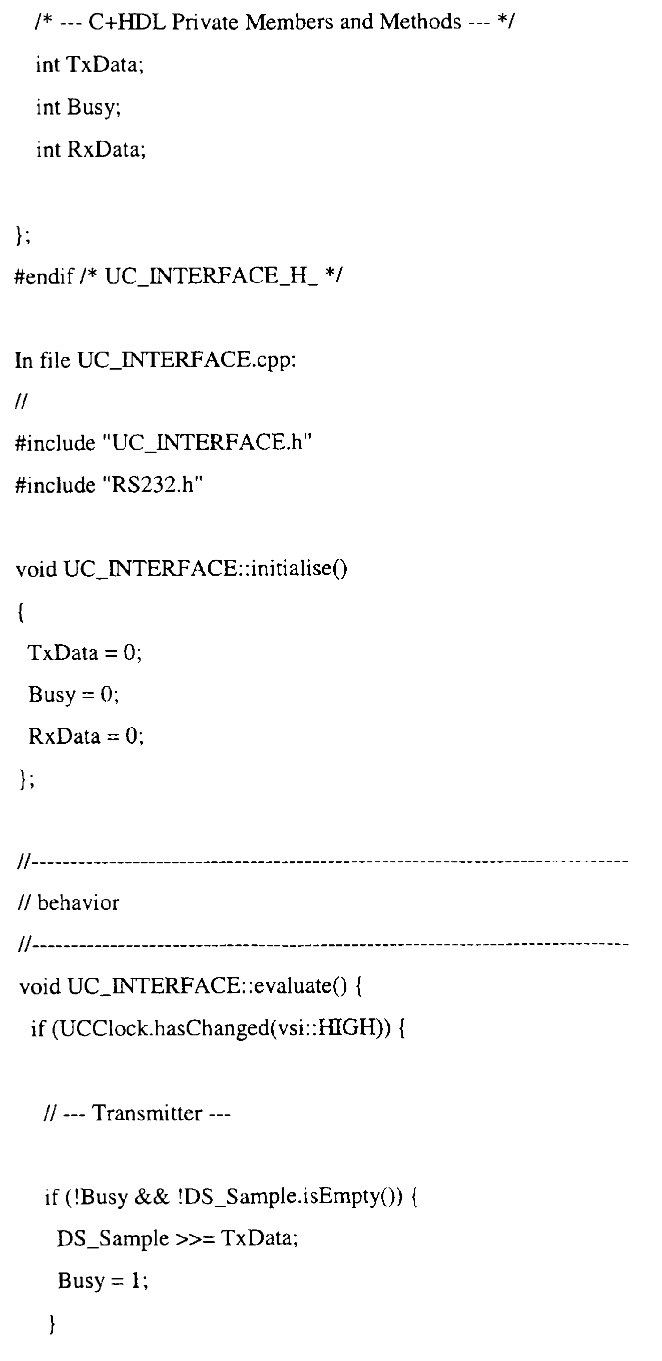

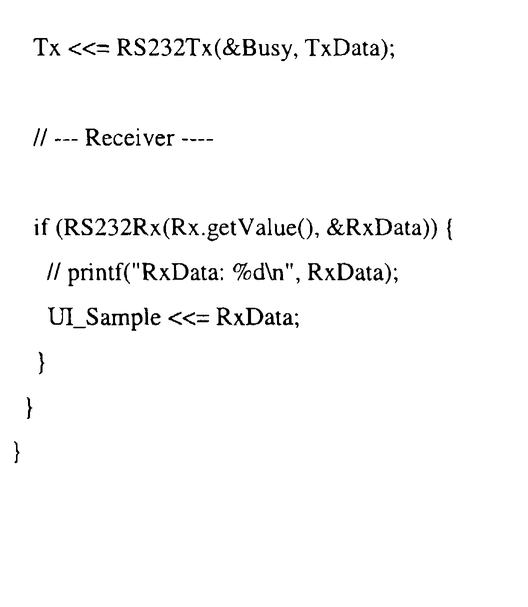

## Claims

1. A deterministic system level model executed on a computer simulation engine, the system model comprising a plurality of concurrent processes at least some of which communicate with each other, the system model being described in an object oriented simulation language, each process being a primitive process or a further system level model which converts an input value into an output value, the simulation engine executing in one cycle the behavior of the processes by calculating new temporary output values of the processes and/or temporary internal state values of the processes based on current input values and/or internal state values of the processes; the processes being executed until the temporary output process values and/or temporary internal state values are stable to within a predetermined tolerance; and only then updating the current process input values and current internal state values with the stable temporary output values and/or internal state values.

2. The model according to claim 1, wherein the processes communicate through signal objects and/or queue objects and/or container objects.

3. The model according to claim 2, wherein a queue comprises a FIFO.

4. The model according to claim 3, wherein a queue is an object with two FIFO's, a main FIFO and an entry FIFO, the simulation engine in one cycle reading values from a main FIFO of an input queue and writing to the entry FIFO of the output queue.

5. The model according to any of claims 2 to 4, wherein the stable values of the signals are stored for a number of previous cycles.

6. The model according to any of the previous claims, wherein the system model is a model of physical processes.

7. A co-simulation engine for co-simulation of a physical process comprising the model according to any of claims 1 to 6 in a co-simulation environment with a clock cycle accurate simulation of a processing engine.

8. A co-simulation engine for co-simulation of a physical process comprising the model according to any of claims 1 to 6 in a co-simulation environment with a simulation using a hardware decription language.

9. A deterministic system level modeling method for execution on a computer simulation engine, the system model comprising a plurality of concurrent processes, at least some of which communicate with each other, the system model being described in an object oriented simulation language, each process being a primitive process or a further system level model which converts an input value into an output value, the simulation engine executing in one cycle the behavior of the processes by calculating new temporary output values of the processes and/or temporary internal state values of the processes based on current input values and/or internal state values of the processes; the processes being executed until the temporary output process values and/or temporary internal state values are stable to within a predetermined tolerance; and only then updating the current process input values and current internal state values with the stable temporary output values and/or internal state values.

10. The method according to claim 9, wherein the processes communicate through signal objects and/or queue objects and/or container objects.

11. The model according to claim 9 or 10, wherein a queue comprises a FIFO.

12. The method according to claim 11, wherein a queue is an object with two FIFO's, a main FIFO and an entry FIFO, the simulation engine in one cycle reading values from a main FIFO of an input queue and writing to the entry FIFO of the output queue.

13. The method according to any of claims 9 to 12, wherein the stable values of the signals are stored for a number of previous cycles.

14. The method according to any of the claims 9 to 13, wherein the system model is a model of a physical process and the method includes the step of controlling the physical process based on the results of the method.

15. A method of co-simulation a physical process using the method in accordance with any of the claims 9 to 13 and a clock cycle accurate simulation of a processing engine.

16. A method of co-simulation a physical process using the method in accordance with any of the claims 9 to 13 and a hardware description language.

17. A method comprising the steps of:
inputting a representation of a physical system at a near terminal;
transferring the representation to a remote processing engine; and
carrying out a method according to any of the claims 9 to 16 on the processing engine.

18. A computer program product directly loadable into the internal memory of a digital computer, comprising software code portions for performing the steps of any of claims 9 to 16 when said product is run on a computer.

19. A computer program product stored on a computer usable medium, comprising: computer readable program means for causing a computer to control execution of the simulation model according to any of claims 1 to 6.

20. A computer program product stored on a computer usable medium, comprising: computer readable program means for causing a computer to control execution of the simulation method according to any of claims 9 to 16.
